# EUROPEAN PATENT APPLICATION

(11) **EP 4 763 406 A1**
(43) Date of publication of application: **24.06.2026**
(21) Application number: 24895484.4
(22) Date of filing: 27.05.2024
(51) Int. Cl.: B23K 31/02, H01M 10/058, H01M 10/00, H01M 50/00

(54) **BATTERY PROCESSING APPARATUS AND PROCESSING METHOD**

(30) Priority: 30.11.2023 CN 202311643749
(71) Applicant: Contemporary Amperex Technology Co., Limited, Ningde, Fujian 352100 (CN)
(72) Inventor: WU, Kai, Ningde, Fujian 352100 (CN); ZHANG, Yongli, Ningde, Fujian 352100 (CN); SUN, Weiwei, Ningde, Fujian 352100 (CN); TANG, Wenxiang, Ningde, Fujian 352100 (CN); PAN, Wensheng, Ningde, Fujian 352100 (CN); FAN, Xiang, Ningde, Fujian 352100 (CN)
(74) Representative: Kraus & Lederer PartGmbB
(86) International application number: PCT/CN2024/095554
(87) International publication number: WO 2025/112374

(57) **Abstract**

Disclosed in the present application are a battery processing device and a processing method. The battery processing device includes a material conveying assembly, a pairing assembly, and a welding assembly. The material conveying assembly is configured to convey a first electrode assembly and a second electrode assembly, where the first electrode assembly and the second electrode assembly each include an electrode main body and a tab part disposed on the electrode main body. The pairing assembly is configured to pair the first electrode assembly and the second electrode assembly such that the electrode main body of the first electrode assembly and the electrode main body of the second electrode assembly are stacked on each other. The welding assembly is configured to weld the tab part of the paired first electrode assembly and the tab part of the paired second electrode assembly. In this way, the production efficiency of the battery cell can be improved.

## Description

### TECHNICAL FIELD

The present application relates to the technical field of battery assembly, and in particular, to a battery processing device and a processing method.

### BACKGROUND

With the development of battery technologies, batteries are applied to more and more fields, and gradually replace traditional fossil energy in the field of automobile power. A battery may store chemical energy and controllably convert the chemical energy to electric energy. In a recyclable battery, after discharge, the active substance can be activated by charging, enabling continued use.

A battery cell is often provided with a housing and two electrode assemblies accommodated in the housing. During assembly of the battery, the two electrode assemblies need to be installed into the housing. However, the existing battery processing device has the problem that it is difficult to insert the two electrode assemblies into the housing, which makes the production efficiency relatively low.

### SUMMARY

In view of the above problem, the present application provides a battery processing device and a processing method, which can improve the production efficiency of the battery cell.

According to a first aspect, the present application provides a battery processing device. The battery processing device includes a material conveying assembly, a pairing assembly, and a welding assembly. The material conveying assembly is configured to convey a first electrode assembly and a second electrode assembly, where the first electrode assembly and the second electrode assembly each include an electrode main body and a tab part disposed on the electrode main body. The pairing assembly is configured to pair the first electrode assembly and the second electrode assembly such that the electrode main body of the first electrode assembly and the electrode main body of the second electrode assembly are stacked on each other. The welding assembly is configured to weld the tab part of the paired first electrode assembly and the tab part of the paired second electrode assembly.

In the above manner, by configuring the pairing assembly to pair the first electrode assembly and the second electrode assembly, it is convenient to perform the welding of the tab part and the assembly of the first electrode assembly and the second electrode assembly into the housing in the subsequent processes. By configuring the welding assembly to weld the tab part of the paired first electrode assembly and the tab part of the paired second electrode assembly, the alignment and stable connection of the first electrode assembly and the second electrode assembly can be realized, which facilitates the assembly of the first electrode assembly and the second electrode assembly into the housing in the subsequent processes, and improves the production efficiency of the battery cell.

In some embodiments, the material conveying assembly includes a first branch conveyor line and a second branch conveyor line, the first branch conveyor line being configured to convey a plurality of first electrode assemblies, and the second branch conveyor line being configured to convey a plurality of second electrode assemblies.

In the above manner, it is convenient to manage and operate the first electrode assembly and the second electrode assembly, separately, which is beneficial for the first electrode assembly and the second electrode assembly to meet the requirements of battery processing.

In some embodiments, the material conveying assembly further includes a main conveyor line and a diversion mechanism, the main conveyor line being configured to convey the plurality of first electrode assemblies and the plurality of second electrode assemblies, and the diversion mechanism being configured to divert the first electrode assemblies from the main conveyor line to the first branch conveyor line and divert the second electrode assemblies from the main conveyor line to the second branch conveyor line.

In the above manner, the feeding of the first electrode assembly and the second electrode assembly is facilitated, and the feeding efficiency is improved.

In some embodiments, the first branch conveyor line and the second branch conveyor line are connected to the main conveyor line and form a first connection point and a second connection point, the first connection point is located upstream of the second connection point, and the diversion mechanism includes a diversion detection member, a flow guide member, and a flow guide drive member, where the diversion detection member is disposed on the main conveyor line and is located upstream of the first connection point, the diversion detection member is configured to detect whether an object flowing toward the first connection point is the first electrode assembly or the second electrode assembly, the flow guide member is disposed at the first connection point, and the flow guide drive member drives, in response to the object reaching the first connection point being the first electrode assembly, the flow guide member to a first position, such that the first electrode assembly flows toward the first branch conveyor line under the action of the flow guide member. The flow guide drive member drives, in response to the object reaching the first connection point being the second electrode assembly, the flow guide member to a second position, such that the second electrode assembly continues to flow toward the second connection point along the main conveyor line.

In the above manner, the accuracy of the diversion of the first electrode assembly and the second electrode assembly can be improved, and the stability and flexibility of the diversion can be improved.

In some embodiments, the material conveying assembly includes a first branch return line and a second branch return line, the first branch conveyor line is configured to convey a first tray and the first electrode assembly carried on the first tray, the second branch conveyor line is configured to convey a second tray and the second electrode assembly carried on the second tray, the first branch return line is configured to return the first tray, and the second branch return line is configured to return the second tray.

In the above manner, it is convenient to convey the first electrode assembly and the second electrode assembly, and the automatic circulation flow of the first tray and the second tray is facilitated.

In some embodiments, the first branch conveyor line and the second branch conveyor line are disposed side by side in a horizontal direction, the first branch return line is located below the first branch conveyor line in a vertical direction, and the second branch return line is located below the second branch conveyor line in the vertical direction.

In the above manner, it is beneficial to reducing an occupied area of the material conveying assembly.

In some embodiments, the battery processing device includes a transfer mechanism, the transfer mechanism being configured to transfer the first tray on the first branch conveyor line to the first branch return line, and/or transfer the second tray on the second branch conveyor line to the second branch return line.

In the above manner, the first branch return line may form a loop with the first branch conveyor line, and the first branch return line may form a loop with the second branch conveyor line. This facilitates automatic circulation flow of the first tray and the second tray.

In some embodiments, the transfer mechanism includes a transfer platform, a transfer conveyor belt, a belt drive member, and a platform drive member, the transfer conveyor belt being disposed on the transfer platform, the belt drive member driving the transfer conveyor belt to move so as to move the first tray and/or the second tray into or out of the transfer platform, and the platform drive member driving the transfer platform in the vertical direction, such that the transfer platform selectively aligns with the first branch conveyor line or the first branch return line, and/or the transfer platform selectively aligns with the second branch conveyor line or the second branch return line.

In the above manner, by configuring the belt drive member to drive the transfer conveyor belt to move, it is beneficial to enabling the first tray and/or the second tray to be smoothly moved into or out of the transfer platform. Thus, the efficiency of the first tray and/or the second tray being moved into or out of the transfer platform is improved. By configuring the platform drive member to drive the transfer platform in the vertical direction, the first tray and the second tray can be conveyed in the vertical direction, which facilitates automatic circulation flow of the first tray and the second tray.

In some embodiments, the material conveying assembly further includes a main return line and a convergence mechanism, the convergence mechanism being configured to converge the first tray on the first branch return line and the second tray on the second branch return line to the main return line.

In the above manner, the first tray and the second tray are converged to the main return line and may be conveyed to a feeding position by the main return line, and then the electrode assembly is loaded, so as to realize the recycling of the first tray and the second tray.

In some embodiments, the battery processing device further includes a detection assembly, the detection assembly being configured to detect the first electrode assembly and the second electrode assembly; the pairing assembly is configured to pair based on detection states of the first electrode assembly and the second electrode assembly.

In the above manner, it is beneficial to improving the yield rate of the battery cells.

In some embodiments, the detection assembly includes a first detection conveyor line, a second detection conveyor line, a first detection mechanism, a second detection mechanism, and a detection feeding mechanism, the detection feeding mechanism picking up the first electrode assembly and the second electrode assembly from the material conveying assembly and placing the first electrode assembly and the second electrode assembly on the first detection conveyor line and the second detection conveyor line, respectively, the first detection conveyor line conveying the first electrode assembly through the first detection mechanism, and the second detection conveyor line conveying the second electrode assembly through the second detection mechanism.

In the above manner, automatic detection of the first electrode assembly and the second electrode assembly can be realized, which is beneficial to improving the yield rate of the battery cells.

In some embodiments, the material conveying assembly includes a first branch conveyor line and a second branch conveyor line, the first branch conveyor line being configured to convey a plurality of first electrode assemblies, and the second branch conveyor line being configured to convey a plurality of second electrode assemblies, the detection feeding mechanism includes a first detection feeding mechanism and a second detection feeding mechanism, the first detection feeding mechanism being configured to pick up the first electrode assembly from the first branch conveyor line and place the first electrode assembly on the first detection conveyor line, and the second detection feeding mechanism being configured to pick up the second electrode assembly from the second branch conveyor line and place the second electrode assembly on the second detection conveyor line, and the first detection feeding mechanism and the second detection feeding mechanism perform pickup and placement actions relatively independently.

In the above manner, it is convenient to separately detect the first electrode assembly and the second electrode assembly, thereby improving the accuracy of the movement paths of the first electrode assembly and the second electrode assembly and improving the detection efficiency.

In some embodiments, the pairing assembly includes a pairing feeding mechanism, a sorting mechanism, a stacking mechanism, and a first pairing conveyor line and a second pairing conveyor line disposed side by side, the pairing feeding mechanism being configured to pick up the first electrode assembly and the second electrode assembly in a paired manner and place the first electrode assembly and the second electrode assembly on the first pairing conveyor line and the second pairing conveyor line, respectively, the sorting mechanism being configured to pair the first electrode assembly and the second electrode assembly that are in a conforming condition, and the stacking mechanism being configured to stack the electrode main body of the paired first electrode assembly and the electrode main body of the paired second electrode assembly.

In the above manner, it is convenient to pair the first electrode assemblies and the second electrode assemblies in a one-to-one correspondence in the subsequent processes.

In some embodiments, the pairing includes: directly taking, when the first electrode assembly and the second electrode assembly picked up in a paired manner are both in the conforming condition, the first electrode assembly and the second electrode assembly picked up in a paired manner as the paired first electrode assembly and second electrode assembly.

In the above manner, it is beneficial to improving the production efficiency.

In some embodiments, the battery processing device is provided with a non-conforming products recovery zone, and the pairing includes sorting, when at least one of the first electrode assembly and the second electrode assembly picked up in a paired manner is in a non-conforming condition, the first electrode assembly and/or the second electrode assembly in the non-conforming condition to the non-conforming products recovery zone.

In the above manner, it is beneficial to reducing the interference from the first electrode assembly and/or the second electrode assembly in the non-conforming condition with the pairing, and improving the production efficiency.

In some embodiments, the battery processing device is provided with a first conforming products buffer zone corresponding to the first electrode assembly and a second conforming products buffer zone corresponding to the second electrode assembly; the pairing includes: sorting, when the first electrode assembly in the first electrode assembly and the second electrode assembly picked up in a paired manner is in the conforming condition, the second electrode assembly is in the non-conforming condition, and the second electrode assembly is not present in the second conforming products buffer zone, the first electrode assembly to the first conforming products buffer zone, and sorting the second electrode assembly in the non-conforming condition to the non-conforming products recovery zone; or sorting, when the first electrode assembly in the first electrode assembly and the second electrode assembly picked up in a paired manner is in the non-conforming condition, the second electrode assembly is in the conforming condition, and the first electrode assembly is not present in the first conforming products buffer zone, the first electrode assembly in the non-conforming condition to the non-conforming products recovery zone, and sorting the second electrode assembly to the second conforming products buffer zone.

In the above manner, the interference from the first electrode assembly in the non-conforming condition with the pairing can be reduced, and the production efficiency can be improved.

In some embodiments, the battery processing device is provided with a first conforming products buffer zone corresponding to the first electrode assembly and a second conforming products buffer zone corresponding to the second electrode assembly; the pairing includes: sorting, when the first electrode assembly in the first electrode assembly and the second electrode assembly picked up in a paired manner is in the conforming condition, the second electrode assembly is in the non-conforming condition, and the second electrode assembly is present in the second conforming products buffer zone, the second electrode assembly in the non-conforming condition to the non-conforming products recovery zone, and moving the second electrode assembly in the second conforming products buffer zone back to the second pairing conveyor line; or sorting, when the first electrode assembly in the first electrode assembly and the second electrode assembly picked up in a paired manner is in the non-conforming condition, the second electrode assembly is in the conforming condition, and the first electrode assembly is present in the first conforming products buffer zone, the first electrode assembly in the non-conforming condition to the non-conforming products recovery zone, and moving the first electrode assembly in the first conforming products buffer zone back to the first pairing conveyor line.

In the above manner, on the second pairing conveyor line, the second electrode assembly in the conforming condition can be allowed to replace the second electrode assembly in the non-conforming condition; on the first pairing conveyor line, the first electrode assembly in the conforming condition can be allowed to replace the first electrode assembly in the non-conforming condition, which is beneficial to improving the yield rate.

In some embodiments, the first pairing conveyor line and the second pairing conveyor line extend in a first horizontal direction and are disposed side by side in a second horizontal direction perpendicular to the first horizontal direction, and the sorting mechanism includes a first sorting pickup mechanism, a second sorting pickup mechanism, and a sorting drive mechanism, the sorting drive mechanism driving the first sorting pickup mechanism and the second sorting pickup mechanism in the second horizontal direction, and the first sorting pickup mechanism and the second sorting pickup mechanism being configured to pick up the first electrode assembly and the second electrode assembly from the first pairing conveyor line and the second pairing conveyor line, respectively.

In the above manner, the first sorting pickup mechanism and the second sorting pickup mechanism can respectively take the first electrode assembly and the second electrode assembly that are in the non-conforming condition away from the first pairing conveyor line and the second pairing conveyor line, which is beneficial to improving the yield rate.

In some embodiments, the non-conforming products recovery zone includes a first recovery zone on a side of the first pairing conveyor line distal to the second pairing conveyor line and a second recovery zone between the first pairing conveyor line and the second pairing conveyor line, the sorting drive mechanism is configured to drive the second sorting pickup mechanism to place the second electrode assembly in the non-conforming condition in the second recovery zone, and drive the first sorting pickup mechanism to place the first electrode assembly in the non-conforming condition in the first recovery zone, and the sorting drive mechanism is further configured to drive the first sorting pickup mechanism to pick up the second electrode assembly from the second recovery zone and place the second electrode assembly in the first recovery zone.

In the above manner, the first sorting pickup mechanism and the second sorting pickup mechanism can be hindered from interfering with each other, and the stability of the process of placing the first electrode assembly and/or second electrode assembly in the non-conforming condition in the first recovery zone is improved.

In some embodiments, the first recovery zone includes a recovery conveyor belt configured to convey the first electrode assembly and/or the second electrode assembly in the non-conforming condition.

In the above manner, the interference from the first electrode assembly and/or the second electrode assembly in the non-conforming condition with the pairing process can be reduced.

In some embodiments, the first sorting pickup mechanism and/or the second sorting pickup mechanism each includes a first sorting drive member, a sorting support, a second sorting drive member, and two groups of sorting clamps, where each group of sorting clamps includes a sorting clamping jaw and a third sorting drive member, the first sorting drive member is configured to drive the sorting support to move toward or away from the first pairing conveyor line or the second pairing conveyor line, the second sorting drive member and the two groups of sorting clamps are disposed on the sorting support, the second sorting drive member is configured to change a distance between the two groups of sorting clamps in a length direction or a width direction of the first electrode assembly or the second electrode assembly, and the third sorting drive member is configured to drive the sorting clamping jaw to clamp the first electrode assembly or the second electrode assembly in a thickness direction of the first electrode assembly or the second electrode assembly.

In the above manner, the first electrode assembly or the second electrode assembly can be stably clamped.

In some embodiments, the tab part of the first electrode assembly is proximal to a surface of the electrode main body of the first electrode assembly on a side facing the first pairing conveyor line, and the tab part of the second electrode assembly is proximal to a surface of the electrode main body of the second electrode assembly on a side facing the second pairing conveyor line, the pairing assembly further includes a flipping mechanism, the flipping mechanism being configured to flip a first one of the first electrode assembly and the second electrode assembly, and the stacking mechanism is configured to stack the electrode main body of a second one of the first electrode assembly and the second electrode assembly on the electrode main body of the first one of the first electrode assembly and the second electrode assembly; or the tab part of the first electrode assembly is proximal to a surface of the electrode main body of the first electrode assembly on a side distal to the first pairing conveyor line, the tab part of the second electrode assembly is proximal to a surface of the electrode main body of the second electrode assembly on a side distal to the second pairing conveyor line, the pairing assembly further includes a flipping mechanism, the flipping mechanism being configured to flip a first one of the first electrode assembly and the second electrode assembly, and the stacking mechanism is configured to stack the electrode main body of the flipped first one of the first electrode assembly and the second electrode assembly on the electrode main body of a second one of the first electrode assembly and the second electrode assembly.

In the above manner, after the first electrode assembly and the second electrode assembly are stacked, the tab part of the first electrode assembly can bemore proximal to the tab part of the second electrode assembly, reducing the distance between the tab part of the first electrode assembly and the tab part of the second electrode assembly. Thus, the welding between the tab part of the first electrode assembly and the tab part of the second electrode assembly is facilitated.

In some embodiments, the flipping mechanism includes a first flipping drive member, a flipping support, a second flipping drive member, a third flipping drive member, and flipping clamps, where each of the flipping clamps includes two flipping clamping jaws and a fourth flipping drive member, the first flipping drive member is configured to drive the flipping support to move toward or away from the first pairing conveyor line or the second pairing conveyor line, the second flipping drive member, the third flipping drive member and the flipping clamp are disposed on the flipping support, the second flipping drive member is configured to change a distance between the two flipping clamping jaws in a length direction or a width direction of the first electrode assembly or the second electrode assembly, the fourth flipping drive member is configured to drive the flipping clamping jaws to clamp the first electrode assembly or the second electrode assembly in a thickness direction of the first electrode assembly or the second electrode assembly, and the third flipping drive member is configured to drive the flipping clamps to flip synchronously relative to the flipping support.

In the above manner, the stability of the flipping process can be maintained.

In some embodiments, the flipping support includes two cantilevers disposed side by side and spaced apart from each other and a connecting arm connected between the two cantilevers, the flipping clamps are rotatably supported at free ends of the two cantilevers, respectively, and the third flipping drive member includes a rotary motor, a transmission shaft, and two synchronization belts, where the transmission shaft is rotatably supported on the connecting arm in a spacing direction between the two cantilevers, the rotary motor drives the transmission shaft to rotate, and two ends of the transmission shaft are respectively connected to the corresponding flipping clamps by the synchronization belts.

In the above manner, stable flipping of the first electrode assembly or the second electrode assembly can be achieved.

In some embodiments, the stacking mechanism includes a first stacking drive member, a second stacking drive member, a stacking support, a third stacking drive member, and stacking clamps, where each group of the stacking clamps includes two stacking clamping jaws and a fourth stacking drive member, the first stacking drive member drives the stacking support in a spacing direction between the first pairing conveyor line and the second pairing conveyor line, the second stacking drive member is configured to drive the stacking support to move toward or away from the first pairing conveyor line or the second pairing conveyor line, the third stacking drive member and the stacking clamp are disposed on the stacking support, the third stacking drive member is configured to change a distance between the two stacking clamping jaws in a length direction or a width direction of the first electrode assembly or the second electrode assembly, and the fourth stacking drive member is configured to drive the stacking clamping jaws to clamp the first electrode assembly or the second electrode assembly in a thickness direction of the first electrode assembly or the second electrode assembly.

In the above manner, the stability of the stacking process can be improved.

In some embodiments, the welding assembly includes a welding conveyor line, a welding positioning jig, and a welding mechanism, the welding positioning jig being configured to clamp and fix the paired first electrode assembly and second electrode assembly, the welding conveyor line conveying the welding positioning jig into the welding mechanism, and the welding mechanism welding the tab part of the first electrode assembly and the tab part of the second electrode assembly that are clamped by the welding positioning jig.

In the above manner, by configuring the welding conveyor line to convey the welding positioning jig into the welding mechanism, the welding efficiency can be improved.

In some embodiments, the tab part includes a first tab part and a second tab part, the welding mechanism includes a first welding mechanism and a second welding mechanism, the welding conveyor line conveys the welding positioning jig to sequentially pass through the first welding mechanism and the second welding mechanism, the first welding mechanism is configured to weld a first tab part of the first electrode assembly and a first tab part of the second electrode assembly, and the second welding mechanism is configured to weld a second tab part of the first electrode assembly and a second tab part of the second electrode assembly.

In the above manner, in one aspect, the welding efficiency can be improved, and in another aspect, different welding conditions can be provided for the first tab part and the second tab part to meet different welding requirements of the first tab part and the second tab part.

In some embodiments, the battery processing device includes a wrapping device for an electrode assembly. The electrode assembly includes an electrode main body, and the electrode main body is provided with a first direction, a second direction, and a third direction orthogonal to each other, and includes two main surfaces disposed opposite to each other in the first direction, two end surfaces disposed opposite to each other in the second direction, and two side surfaces disposed opposite to each other in the third direction. The wrapping device includes a first positioning assembly and a first wrapping assembly. The first positioning assembly is configured to position the electrode assembly such that the two main surfaces are at least partially exposed. The first wrapping assembly is configured to position a wrapping film, where the wrapping film includes two main wrapping zones spaced apart from each other and a connection zone connected between the two main wrapping zones. At least one of the first positioning assembly and the first wrapping assembly is configured to drive the electrode assembly and the wrapping film to move relative to each other, such that the connection zone contacts and wraps a first one of the two end surfaces, and the two main wrapping zones contact and wrap exposed portions of corresponding ones of the two main surfaces, respectively.

In the above manner, the relative position relationship between the electrode assembly and the wrapping film can be adjusted. When the wrapping film wraps the two main surfaces and the first one of the two end surfaces of the electrode main body, the continuous wrapping of the two main surfaces and the first one of the two end surfaces is achieved, which can improve the stability of the wrapping process and make the wrapping action simpler and smoother.

In some embodiments, the electrode assembly further includes a tab part disposed on the first one of the two end surfaces in a protruding manner, the connection zone is provided with an opening, and the tab part is configured to pass through the opening as the electrode assembly and the wrapping film move relative to each other.

In the above manner, the arrangement of the opening can form a clearance for the tab part, so as to reduce the interference from the tab part with the wrapping process, thereby improving the wrapping effect of the wrapping film on the first one of the two end surfaces.

In some embodiments, the wrapping film includes a side wrapping zone connected to the main wrapping zone, and the wrapping device further includes a second wrapping assembly, where the second wrapping assembly is configured to drive the side wrapping zone to contact and wrap the side surface.

In the above manner, by configuring the second wrapping assembly, the side wrapping zone wraps the side surface, thereby improving the wrapping effect of the wrapping film on the electrode main body.

In some embodiments, the wrapping film includes an end wrapping zone connected to the main wrapping zone, and the second wrapping assembly is configured to drive the end wrapping zone to contact and wrap a second one of the two end surfaces.

In the above manner, the wrapping effect of the wrapping film on the electrode main body can be improved.

In some embodiments, the wrapping film further includes a side wrapping zone and an end wrapping zone connected to the main wrapping zone, where the side wrapping zone wraps the side surface, and the end wrapping zone wraps a second one of the two end surfaces; the wrapping device further includes a first tape attachment assembly, the first tape attachment assembly is configured to drive the electrode assembly and a first tape to move relative to each other, the first tape includes a first portion and a second portion connected to each other, and the first tape attachment assembly is configured to attach, at a corner formed by the side surface and the second one of the two end surfaces, the first portion of the first tape to the side wrapping zone and the second portion of the first tape to the end wrapping zone.

In the above manner, the first tape can connect the side wrapping zone and the end wrapping zone together, such that the side wrapping zone and the end wrapping zone can remain fixed relative to the electrode main body, thereby improving the firmness of the wrapping film in wrapping the electrode main body.

In some embodiments, the wrapping device further includes a second tape attachment assembly, the second tape attachment assembly is configured to drive the electrode assembly and a second tape to move relative to each other, the second tape includes first portions and a second portion connected to each other, and the second tape attachment assembly is configured to attach, at a corner formed by the side surface and the main surface, the first portions of the second tape to the main wrapping zone and the second portion of the second tape to the side wrapping zone.

In the above manner, the side wrapping zone and the main wrapping zone can remain fixed relative to the electrode main body, thereby improving the firmness of the wrapping film in wrapping the electrode main body.

In some embodiments, the number of the first portions of the second tape is two, the two first portions are located at two ends of the second portion of the second tape, and the second tape attachment assembly is configured to respectively attach the two first portions of the second tape to corresponding ones of the two main wrapping zones.

In the above manner, the contact area between the second tape and the wrapping film can be increased, thereby improving the fixing effect on the side wrapping zone.

In a second aspect, the present application provides a battery processing method. The battery processing method includes: controlling a material conveying assembly to convey a first electrode assembly and a second electrode assembly, where the first electrode assembly and the second electrode assembly each include an electrode main body and a tab part disposed on the electrode main body; controlling a pairing assembly to pair the first electrode assembly and the second electrode assembly such that the electrode main body of the first electrode assembly and the electrode main body of the second electrode assembly are stacked on each other; and controlling a welding assembly to weld the tab part of the paired first electrode assembly and the tab part of the paired second electrode assembly.

In some embodiments, controlling the pairing assembly to pair the first electrode assembly and the second electrode assembly includes: controlling a pairing feeding mechanism to pick up the first electrode assembly and the second electrode assembly in a paired manner and place the first electrode assembly and the second electrode assembly on a first detection conveyor line and a second detection conveyor line, respectively; controlling a sorting mechanism to pair the first electrode assembly and the second electrode assembly that are in a conforming condition; and controlling a stacking mechanism to stack the electrode main body of the paired first electrode assembly and the electrode main body of the paired second electrode assembly.

In some embodiments, controlling the sorting mechanism to pair the first electrode assembly and the second electrode assembly that are in the conforming condition includes: taking, when the first electrode assembly and the second electrode assembly picked up in a paired manner are both in the conforming condition, the first electrode assembly and the second electrode assembly picked up in a paired manner as the paired first electrode assembly and second electrode assembly.

In some embodiments, the battery processing device is provided with a non-conforming products recovery zone; controlling the sorting mechanism to pair the first electrode assembly and the second electrode assembly that are in the conforming condition includes: sorting, when at least one of the first electrode assembly and the second electrode assembly picked up in a paired manner is in a non-conforming condition, the first electrode assembly and/or the second electrode assembly in the non-conforming condition to the non-conforming products recovery zone.

In some embodiments, the battery processing device is provided with a first conforming products buffer zone corresponding to the first electrode assembly and a second conforming products buffer zone corresponding to the second electrode assembly; controlling the sorting mechanism to pair the first electrode assembly and the second electrode assembly that are in the conforming condition includes: sorting, when the first electrode assembly in the first electrode assembly and the second electrode assembly picked up in a paired manner is in the conforming condition, the second electrode assembly is in the non-conforming condition, and the second electrode assembly is not present in the second conforming products buffer zone, the first electrode assembly to the first conforming products buffer zone, and sorting the second electrode assembly in the non-conforming condition to the non-conforming products recovery zone; or sorting, when the first electrode assembly in the first electrode assembly and the second electrode assembly picked up in a paired manner is in the non-conforming condition, the second electrode assembly is in the conforming condition, and the first electrode assembly is not present in the first conforming products buffer zone, the first electrode assembly in the non-conforming condition to the non-conforming products recovery zone, and sorting the second electrode assembly to the second conforming products buffer zone.

In some embodiments, the battery processing device is provided with a first conforming products buffer zone corresponding to the first electrode assembly and a second conforming products buffer zone corresponding to the second electrode assembly; controlling the sorting mechanism to pair the first electrode assembly and the second electrode assembly that are in the conforming condition includes: sorting, when the first electrode assembly in the first electrode assembly and the second electrode assembly picked up in a paired manner is in the conforming condition, the second electrode assembly is in the non-conforming condition, and the second electrode assembly is present in the second conforming products buffer zone, the second electrode assembly in the non-conforming condition to the non-conforming products recovery zone, and moving the second electrode assembly in the second conforming products buffer zone back to the second pairing conveyor line; or sorting, when the first electrode assembly in the first electrode assembly and the second electrode assembly picked up in a paired manner is in the non-conforming condition, the second electrode assembly is in the conforming condition, and the first electrode assembly is present in the first conforming products buffer zone, the first electrode assembly in the non-conforming condition to the non-conforming products recovery zone, and moving the first electrode assembly in the first conforming products buffer zone back to the first pairing conveyor line.

In some embodiments, controlling the welding assembly to weld the tab part of the paired first electrode assembly and the tab part of the paired second electrode assembly includes: controlling a jig adjustment mechanism to adjust a welding positioning jig to clamp and fix the paired first electrode assembly and second electrode assembly; controlling a welding conveyor line to convey the welding positioning jig into a welding mechanism; and controlling the welding mechanism to weld the tab part of the first electrode assembly and the tab part of the second electrode assembly that are clamped by the welding positioning jig.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred implementations and shall not be construed as limiting the scope of the present application. Furthermore, the same reference numerals in all the drawings denote identical components. In the drawings:
FIG. 1 is a schematic structural diagram of a vehicle to which an electrode assembly is applied according to one or more embodiments;
FIG. 2 is a schematic diagram of an exploded structure of a battery in which an electrode assembly is located according to one or more embodiments;
FIG. 3 is a schematic diagram of an exploded structure of a battery cell in which an electrode assembly is located according to one or more embodiments;
FIG. 4 is a schematic diagram of a partial structure of an electrode assembly according to one or more embodiments;
FIG. 5 is a schematic structural diagram of a battery processing device according to one or more embodiments;
FIG. 6 is a schematic structural diagram of a first electrode assembly and a second electrode assembly after welding according to one or more embodiments;
FIG. 7 is a schematic diagram of a partial structure of a material conveying assembly according to one or more embodiments;
FIG. 8 is a schematic structural diagram of a material conveying assembly aligning with a transfer mechanism according to one or more embodiments;
FIG. 9 is a schematic structural diagram of a transfer mechanism according to one or more embodiments;
FIG. 10 is a schematic structural diagram of a pairing assembly according to one or more embodiments;
FIG. 11 is a schematic diagram of a mounting structure of a stacking mechanism according to one or more embodiments;
FIG. 12 is a schematic structural diagram of a portion B of the pairing assembly shown in FIG. 10;
FIG. 13 is a schematic structural diagram of a portion C of a mounting structure of the stacking mechanism shown in FIG. 11;
FIG. 14 is a schematic structural diagram of a flipping mechanism according to one or more embodiments;
FIG. 15 is a schematic structural diagram of a first positioning assembly and a first wrapping assembly driving a wrapping film and an electrode assembly according to one or more embodiments;
FIG. 16 is a schematic structural diagram of a first positioning assembly and a first wrapping assembly driving a wrapping film and an electrode assembly according to one or more embodiments;
FIG. 17 is a schematic diagram of a process for wrapping an electrode assembly with a wrapping film according to one or more embodiments;
FIG. 18 is a schematic structural diagram of a first positioning assembly according to one or more embodiments;
FIG. 19 is a schematic diagram of a partial structure of a first wrapping assembly according to one or more embodiments;
FIG. 20 is a schematic structural diagram of a second positioning assembly positioning an electrode assembly according to one or more embodiments;
FIG. 21 is a schematic bottom view of a structure of a second positioning assembly according to one or more embodiments;
FIG. 22 is a schematic structural diagram of a second wrapping assembly driving a wrapping film and an electrode assembly according to one or more embodiments;
FIG. 23 is a schematic structural diagram of a second wrapping assembly according to one or more embodiments;
FIG. 24 is a schematic diagram of a partial structure of the second wrapping assembly driving a wrapping film and an electrode assembly shown in FIG. 12;
FIG. 25 is a schematic structural diagram of the wrapping film and the electrode assembly shown in FIG. 12;
FIG. 26 is a schematic structural diagram of a wrapping device according to one or more embodiments;
FIG. 27 is a schematic structural diagram of a wrapping film with a first tape and a second tape attached thereto and an electrode assembly according to one or more embodiments;
FIG. 28 is a schematic structural diagram of a first tape attachment assembly according to one or more embodiments;
FIG. 29 is a schematic diagram of a cooperative structure between a first unwinding mechanism, a first tape feeding mechanism, and a first tape roll according to one or more embodiments;
FIG. 30 is a schematic structural diagram of a first tape pickup mechanism according to one or more embodiments;
FIG. 31 is a schematic diagram of a partial structure of a first tape pulling mechanism according to one or more embodiments;
FIG. 32 is a schematic structural diagram of a first cutting mechanism according to one or more embodiments;
FIG. 33 is a schematic structural diagram of a first tape pickup member adsorbing a first tape according to one or more embodiments;
FIG. 34 is a schematic diagram of a pairing structure of a second tape attachment assembly and an electrode assembly according to one or more embodiments;
FIG. 35 is a schematic diagram of a cooperative structure between a second unwinding mechanism, a second cutting mechanism, a second tape roll, and a second tape feeding mechanism according to one or more embodiments;
FIG. 36 is a schematic structural diagram of a second tape pulling mechanism according to one or more embodiments;
FIG. 37 is a schematic structural diagram of a second tape pickup mechanism adsorbing a second tape according to one or more embodiments;
FIG. 38 is a schematic diagram of a partial structure of a second tape pickup mechanism adsorbing a second tape shown in FIG. 27;
FIG. 39 is a schematic structural diagram of a second cutting mechanism according to one or more embodiments;
FIG. 40 is a schematic structural diagram of a third positioning assembly positioning an electrode assembly according to one or more embodiments; and
FIG. 41 is a schematic structural diagram of an electrode assembly according to one or more embodiments.

Reference numerals in the detailed description are as follows:
1000a vehicle;
100a battery; 200a controller; 300a motor;
10a case; 11a first sub-case; 12a second sub-case; 101b accommodating space; 1 battery cell;
100 housing; 110 accommodating housing; 112 opening; 120 end cover; 200 electrode assembly;
201 tab part; 210 electrode main body; 211 main surface; 212a first one of two end surfaces; 212b second one of two end surfaces; 212 end surface; 213 side surface; 220 electrode main body part; 221 positive electrode plate 221; 222 separation film 222; 223 negative electrode plate 223; 230 fixing member; 250 first electrode assembly; 251 second electrode assembly; 261 first tab part; 262 second tab part;
300 wrapping device; 301 wrapping film feeding mechanism; 302 electrode assembly discharging mechanism; 303 jig conveyor line; 304 robotic arm track; 305 dust removal mechanism;
310 first positioning assembly; 311 electrode clamp; 312 electrode transmission mechanism; 313 electrode clamping cylinder; 3131 electrode clamping jaw; 314 electrode transmission motor; 3141 first electrode support; 3142 second electrode support;
330 first wrapping assembly; 331 first wrapping sub-assembly; 332 film clamp; 333 first film transmission mechanism; 334 second film transmission mechanism; 335 third film transmission mechanism; 336 film clamping cylinder; 337 first film transmission motor; 3371 first film support; 338 film clamping jaw; 339 fourth film support; 340 second film transmission motor; 341 third film transmission motor; 342 second film support; 343 third film support;
350 second positioning assembly; 351 fixing support; 353 limiting member; 354 limiting gap; 355 elastic member; 356 hook plate; 357 rotating member;
360 third positioning assembly; 361 main pressing cylinder; 362 main pressing member; 363 side pressing cylinder; 364 side pressing member; 365 flip motor; 366 rotary support; 367 displacement motor; 368 displacement support;
370 second wrapping assembly; 371 side surface pressing plate; 372 first pressing plate transmission mechanism; 373 second pressing plate transmission mechanism; 374 end surface pressing plate; 3741 end limiting block; 3711 side limiting block; 375 third pressing plate transmission mechanism; 376 first pressing plate cylinder; 3761 second pressing plate cylinder; 377 pressing plate transmission motor; 378 first pressing plate support; 379 second pressing plate support;
380 first tape attachment assembly; 381 first unwinding mechanism; 382 first tape pulling mechanism; 3821 first tape clamping cylinder; 3822 first tape pulling motor; 3823 first tape clamping member; 383 first cutting mechanism; 3831 first pressing block; 3832 first cutter; 3833 first cutting cylinder; 384 first tape roll; 385 switching mechanism; 3851 material roll support; 3852 switching motor; 386 first tape pickup mechanism; 3861 first tape pickup member; 3862 first tape pickup motor; 3863 second tape pickup motor; 3864 first tape pickup support; 3865 second tape pickup support; 3866 first tape pickup sub-part; 3867 second tape pickup sub-part; 3868 third tape pickup support; 3869 tape dispensing cylinder; 387 first tape feeding mechanism;
390 second tape attachment assembly; 391 second unwinding mechanism; 392 second tape pulling mechanism; 3921 second tape clamping cylinder; 3922 second tape pulling motor; 3923 second tape clamping member; 393 second cutting mechanism; 3931 second pressing block; 3932 second cutter; 3933 second cutting cylinder; 394 tape pulling support; 3941 tape pulling and transposition cylinder; 3942 tape pulling and transposition support; 395 second tape pickup mechanism; 3951 second tape pickup member; 3952 fourth tape pickup motor; 3953 fourth tape pickup support; 3954 third tape pickup sub-part; 3955 fourth tape pickup sub-part; 3956 tape pickup and transposition cylinder; 3957 tape pickup and transposition support; 396 second tape roll; 397 second tape feeding mechanism;
400 wrapping film; 410 main wrapping zone; 420 connection zone; 421 opening; 430 side wrapping zone; 440 end wrapping zone;
511 first portion of first tape; 512 second portion of first tape; 510 first tape; 521 first portion of second tape; 522 second portion of second tape; 520 second tape;
600 battery processing device; 610 material conveying assembly; 611 first branch conveyor line; 612 second branch conveyor line; 613 main conveyor line; 614 diversion mechanism; 615 first connection point; 616 second connection point; 617 diversion detection member; 618 flow guide member; 619 flow guide drive member; 620 first branch return line; 621 second branch return line; 622 main return line; 623 convergence mechanism;
630 pairing assembly; 631 pairing feeding mechanism; 632 sorting mechanism; 6321 first sorting pickup mechanism; 6322 second sorting pickup mechanism; 6323 sorting drive mechanism; 6324 first sorting drive member; 6325 sorting support; 6326 second sorting drive member; 6327 sorting clamp; 6328 sorting clamping jaw; 6329 third sorting drive member;
633 stacking mechanism; 6331 first stacking drive member; 6332 second stacking drive member; 6333 stacking support; 6334 third stacking drive member; 6335 stacking clamp; 6336 stacking clamping jaw; 6337 fourth stacking drive member;
634 first pairing conveyor line; 635 second pairing conveyor line;
636 flipping mechanism; 6361 first flipping drive member; 6362 flipping support; 6363 second flipping drive member; 6364 third flipping drive member; 6365 flipping clamp; 6366 flipping clamping jaw; 6367 fourth flipping drive member; 6368 cantilever; 6369 connecting arm; 6370 rotary motor; 6371 transmission shaft; 6372 synchronization belt;
660 transfer mechanism; 661 first tray; 662 second tray; 663 transfer platform; 664 transfer conveyor belt; 665 belt drive member; 666 platform drive member; 670 detection assembly; 671 first detection conveyor line; 672 second detection conveyor line; 673 first detection mechanism; 674 second detection mechanism; 675 detection feeding mechanism; 676 first detection feeding mechanism; 677 second detection feeding mechanism; 680 non-conforming products recovery zone; 681 first conforming products buffer zone; 682 second conforming products buffer zone; 683 first recovery zone; 684 second recovery zone; 685 recovery conveyor belt;
690 welding assembly; 691 welding conveyor line; 692 welding positioning jig; 693 welding mechanism; 6931 first welding mechanism; 6932 second welding mechanism;
D1 first direction; D2 second direction; D3 third direction; D7 horizontal direction; D8 vertical direction; D7a first horizontal direction; D7b second horizontal direction; D9 spacing direction between two cantilevers; D10 spacing direction between first pairing conveyor line and second pairing conveyor line.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "provided with", and any variations thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

With the development of battery technologies, batteries are applied to more and more fields, and gradually replace traditional fossil energy in the field of automobile power. A battery may store chemical energy and controllably convert the chemical energy to electric energy. In a recyclable battery, after discharge, the active substance can be activated by charging, enabling continued use.

A battery cell is often provided with a housing and two electrode assemblies accommodated in the housing. During assembly of the battery, the two electrode assemblies need to be installed into the housing. However, the existing battery processing device has the problem that it is difficult to insert the two electrode assemblies into the housing, which makes the production efficiency relatively low.

In order to improve the production efficiency of the battery cell, the material conveying assembly is provided, such that the first electrode assembly and the second electrode assembly can move toward the pairing assembly and the welding assembly after feeding. The pairing assembly is configured to pair the first electrode assembly and the second electrode assembly, such that the electrode main body of the first electrode assembly and the electrode main body of the second electrode assembly are stacked on each other. In this way, the alignment of the first electrode assembly and the second electrode assembly can be realized. Configuring the welding assembly to weld the tab part of the paired first electrode assembly and the tab part of the paired second electrode assembly can realize a stable connection between the first electrode assembly and the second electrode assembly.

Based on the above consideration, the present application provides a battery processing device and a processing method. The battery processing device includes a material conveying assembly, a pairing assembly, and a welding assembly. The material conveying assembly is configured to convey a first electrode assembly and a second electrode assembly, where the first electrode assembly and the second electrode assembly each include an electrode main body and a tab part disposed on the electrode main body. The pairing assembly is configured to pair the first electrode assembly and the second electrode assembly such that the electrode main body of the first electrode assembly and the electrode main body of the second electrode assembly are stacked on each other. The welding assembly is configured to weld the tab part of the paired first electrode assembly and the tab part of the paired second electrode assembly. As such, the first electrode assembly and the second electrode assembly can move toward the pairing assembly and the welding assembly after feeding. By configuring the pairing assembly to pair the first electrode assembly and the second electrode assembly, and welding the tab part of the paired first electrode assembly and the tab part of the paired second electrode assembly, the assembly of the first electrode assembly and the second electrode assembly into the housing in the subsequent processes is facilitated, and the production efficiency of the battery cell is improved.

The battery processing device and the processing method disclosed in the embodiments of the present application are configured to wrap an electrode assembly with a wrapping film. The electrode assembly and the wrapping film are disposed on a battery, and the battery can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000a as an example of the electric device according to an embodiment of the present application.

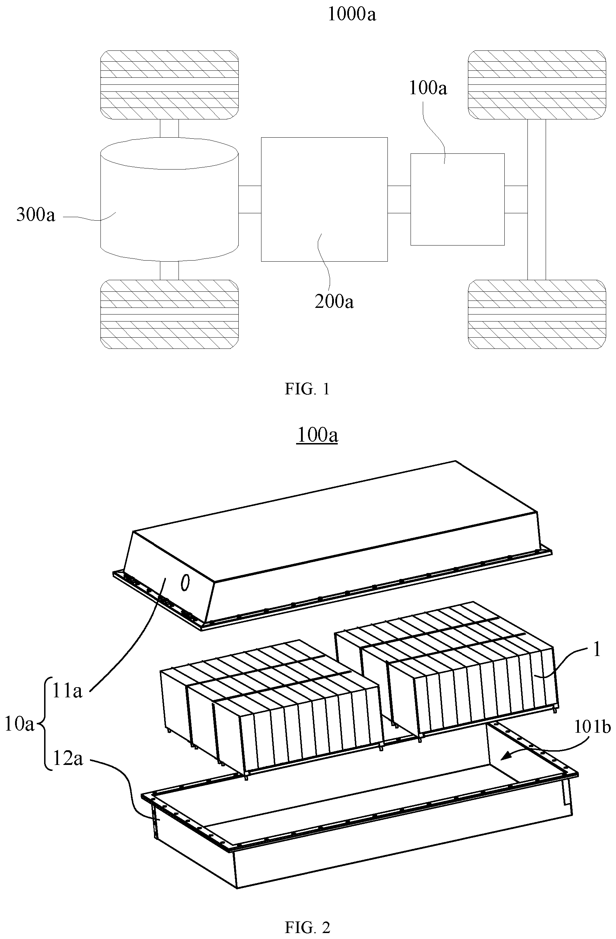

Referring to FIG. 1, a vehicle 1000a may be a fuel vehicle, a gas vehicle, or a new energy vehicle. The new energy vehicle may be a pure electric vehicle, a hybrid vehicle, an extended-range vehicle, or the like. A battery 100a is disposed inside the vehicle 1000a, and the battery 100a may be disposed at the bottom, head, or tail of the vehicle 1000a. The battery 100a may be configured to power the vehicle 1000a. For example, the battery 100a may serve as an operation power source of the vehicle 1000a. The vehicle 1000a may further include a controller 200a and a motor 300a. The controller 200a is configured to control the battery 100a to supply power to the motor 300a, e.g., for operation power needed by the vehicle 1000a for start-up, navigation, and driving.

In some embodiments of the present application, the battery 100a may not only serve as an operation power source for the vehicle 1000a, but also as a driving power source for the vehicle 1000a to, instead of or in part instead of fuel or natural gas, provide driving power for the vehicle 1000a.

In some embodiments, the battery 100a may be an energy storage device. The energy storage device includes an energy storage container, an energy storage electrical cabinet, and the like.

The battery 100a mentioned in the embodiments of the present application refers to a single physical module including one or a plurality of battery cells 1 to provide higher voltage and capacity.

In the embodiments of the present application, the battery cell 1 may be a secondary battery. The secondary battery refers to a battery cell 1 that can be reused by activating the active material through charging after the battery cell 1 is discharged. Each battery cell 1 may also be a primary battery.

The battery cell 1 includes, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. The battery cell 1 may be cylindrical, flat, rectangular parallelepiped-shaped, or in other shapes.

In some embodiments, the battery 100a may be a battery module, and when a plurality of battery cells 1 are provided, the plurality of battery cells 1 are disposed and fixed to form one battery module.

In some embodiments, referring to FIG. 2, the battery 100a may be a battery pack, the battery pack includes a case 10a and battery cells 1, and the battery cells 1 or the battery modules are accommodated in the case 10a.

In some embodiments, the case 10a may be a portion of the chassis structure of the vehicle 1000a. For example, a portion of the case 10a may be at least a portion of the floor of the vehicle 1000a, or a portion of the case 10a may be at least a portion of a transverse beam and a longitudinal beam of the vehicle 1000a.

Referring to FIG. 2, the battery 100a includes the case 10a and the battery cells 1, and the battery cells 1 are accommodated in the case 10a. The case 10a is configured to provide an accommodating space 101b for the battery cells 1, and the case 10a may be of a variety of structures. In some embodiments, the case 10a may include a first sub-case 11a and a second sub-case 12a. The first sub-case 11a and the second sub-case 12a are lidded with each other. The first sub-case 11a and the second sub-case 12a jointly define an accommodating space 101b for accommodating the battery cells 1. The second sub-case 12a may be of a hollow structure with one end open, and the first sub-case 11a may be of a plate structure. The open side of the second sub-case 12a is lidded with the first sub-case 11a, such that the first sub-case 11a and the second sub-case 12a jointly define the accommodating space 101b. The first sub-case 11a and the second sub-case 12a may also be of a hollow structure with one side open, and the open side of the second sub-case 12a is lidded with the open side of the first sub-case 11a. Certainly, the case 10a formed by the first sub-case 11a and the second sub-case 12a may be in various shapes, such as cylindrical or rectangular parallelepiped-shaped.

In the battery 100a, there may be a plurality of battery cells 1, and the plurality of battery cells 1 may be connected in series, in parallel, or in series-parallel. The series-parallel connection means that both series connection and parallel connection are present for the connection among the plurality of battery cells 1. The plurality of battery cells 1 may be directly connected in series, in parallel, or in series-parallel, and then the whole formed by the plurality of battery cells 1 is accommodated in the case 10a. Certainly, the situation may be that in the battery 100a, the plurality of battery cells 1 are first connected in series, in parallel, or in series-parallel to form battery modules, and then the plurality of battery modules are connected in series, in parallel, or in series-parallel to form a whole and accommodated in the case 10a. The battery 100a may further include other structures. For example, the battery 100a may further include a busbar component for achieving an electrical connection among the plurality of battery cells 1.

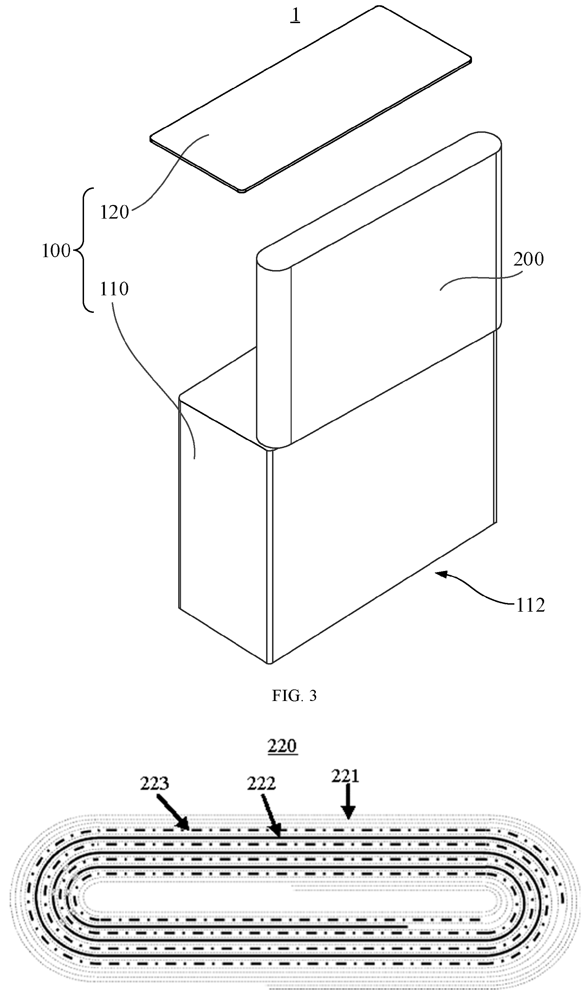

Referring to FIG. 3, the battery cell 1 refers to the smallest unit forming a battery. In this embodiment, a cylindrical battery cell 1 is taken as an example for description. As shown in FIG. 3, the battery cell 1 includes a housing 100, an electrode assembly 200, and other functional components.

In some embodiments, the housing 100 is configured to package components such as the electrode assembly 200 and the electrolyte. The housing 100 may be a steel housing, an aluminum housing, a plastic (such as polypropylene) housing, a composite metal housing (such as a copper-aluminum composite housing), an aluminum-plastic film, or the like.

The housing 100 may include an end cover 120 and an accommodating housing 110. The end cover 120 refers to a component that is lidded onto the opening of the accommodating housing 110 to isolate the internal environment of the battery cell 1 from the external environment. Without limitation, the shape of the end cover 120 may be adapted to the shape of the accommodating housing 110 to fit the accommodating housing 110. Optionally, the end cover 120 may be made of a material with a certain hardness and strength (for example, an aluminum alloy), such that the end cover 120 is not easily deformed when being squeezed or collided. This enables the battery cell 1 to have higher structural strength, and the safety performance can also be improved. Functional components such as the post terminal may be disposed on the end cover 120. The post terminal may be configured to be electrically connected to the electrode assembly 200 to output or input the electric energy of the battery cell 1. In some embodiments, the end cover 120 may also be provided with a pressure relief mechanism for releasing the internal pressure when the internal pressure or temperature of the battery cell 1 reaches a threshold. The end cover 120 may also be made of various materials, such as copper, iron, aluminum, stainless steel, aluminum alloy, and plastic. In some embodiments, an insulating component may also be disposed on the inner side of the end cover 120, and the insulating component may be configured to isolate an electrical connection component in the accommodating housing 110 from the end cover 120 to reduce the risk of a short circuit. Illustratively, the insulating component may be made of plastic, rubber, or the like.

The accommodating housing 110 is a component configured to form the internal environment of the battery cell 1 in combination with the end cover 120. The formed internal environment may be used to accommodate the electrode assembly 200, an electrolytic solution, and other components. The accommodating housing 110 and the end cover 120 may be independent components, and the connection between the accommodating housing 110 and the end cover 120 may form the internal environment of the battery cell 1. Without limitation, the end cover 120 and the accommodating housing 110 may be integrated. Specifically, the end cover 120 and the accommodating housing 110 may form a common connection surface before other components are placed in the housing, and when the interior of the accommodating housing 110 needs to be encapsulated, the end cover 120 is lidded onto the accommodating housing 110. The accommodating housing 110 may be in various shapes and dimensions, such as a rectangular parallelepiped, a cylinder, and a hexagonal prism. Specifically, the shape of the accommodating housing 110 may be determined according to the specific shape and dimension of the electrode assembly 200. The accommodating housing 110 may be made of various materials, for example, including but not limited to, copper, iron, aluminum, stainless steel, aluminum alloy, and the like.

The electrode assembly 200 is a component where the electrochemical reaction occurs in the battery cell 1. One or more electrode assemblies 200 may be accommodated in the accommodating housing 110.

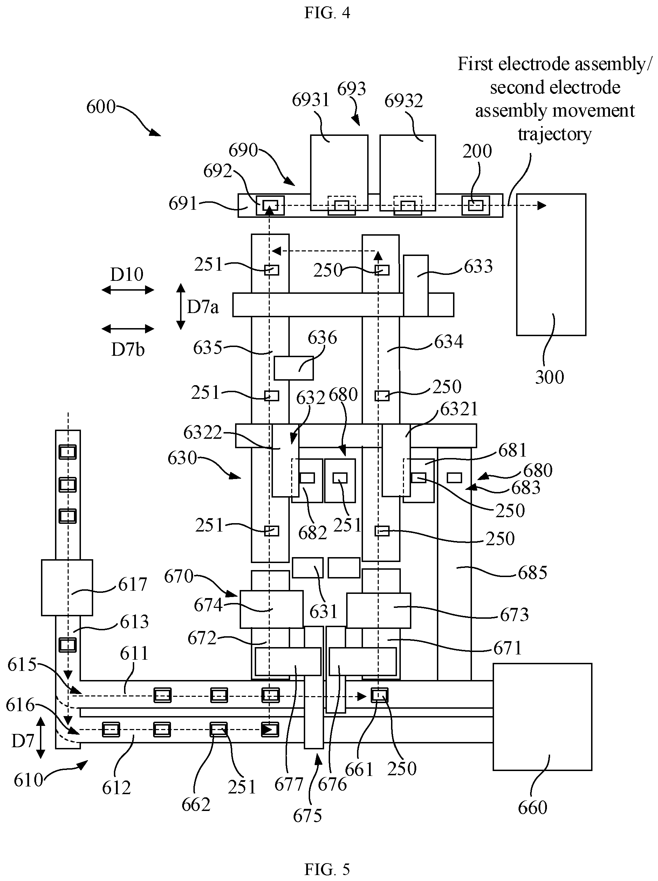

In some embodiments, the electrode assembly 200 includes a positive electrode, a negative electrode, and a separator. During the charging and discharging process of the battery cell 1, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions. As shown in FIG. 4, the separator may be a separation film 222.

In some embodiments, as shown in FIG. 4, the positive electrode may be a positive electrode plate 221, and the positive electrode plate 221 may include a positive electrode current collector and a positive electrode active material disposed on at least one surface of the positive electrode current collector.

As an example, the positive electrode current collector is provided with two surfaces opposite to each other in the thickness direction thereof, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material substrate and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn2O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some embodiments, as shown in FIG. 4, the negative electrode may be a negative electrode plate 223. The negative electrode plate 223 may include a negative electrode current collector.

As an example, a metal foil, a foam metal, a composite current collector, or a foam carbon may be used as the negative electrode current collector. For example, for the metal foil, aluminum or stainless steel treated with silver on the surface, stainless steel, copper, aluminum, carbon electrode, carbon, nickel, titanium, or the like may be used. The foam metal may be foam nickel, foam copper, foam aluminum, foam alloy, or the like. The composite current collector may include a polymer material substrate and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate 223 may include a negative electrode current collector and a negative electrode active material disposed on at least one surface of the negative electrode current collector.

As an example, the negative electrode current collector is provided with two surfaces opposite to each other in the thickness direction thereof, and the negative electrode active material is disposed on either or both of the two opposite surfaces of the negative electrode current collector.

As an example, the negative electrode active material may be a negative electrode active material known in the art for use in battery cells 1. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly 200 further includes a separator disposed between the positive electrode and the negative electrode.

In some embodiments, the separator is a separation film 222. The present application does not particularly limit the type of the separation film 222, and any porous-structure separation film 222 known to have good chemical stability and mechanical stability may be selected.

As an example, the main material of the separation film 222 may be selected from at least one of glass fiber, non-woven fabric, polyethylene, polypropylene, polyvinylidene difluoride, and ceramic. The separation film 222 may be a single-layer film or a multi-layer composite film, and there is no particular limitation on this. When the separation film 222 is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell 1 further includes an electrolyte that serves to conduct ions between the positive electrode and the negative electrode. The present application has no specific limitations on the type of the electrolyte, which can be selected according to needs. The electrolyte may be liquid-state, gel-state, or solid-state.

The electrolytic solution may be in the form of an electrolyte. The electrolytic solution may include an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of dimethoxyethane, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether, polysiloxane, polycarbonate, polyacrylonitrile, polyvinylidene fluoride, polymethyl methacrylate, single-ion polymer, polyionic liquid-lithium salt, cellulose, or the like. As an example, the polymer solid-state electrolyte may be polyethylene oxide.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly 200 is of a wound structure. The positive electrode plate 221 and the negative electrode plate 223 are wound to form a wound structure.

In some embodiments, the electrode assembly 200 is provided with a tab part 201 that can conduct current out from the electrode assembly 200. The tab part 201 includes a positive electrode tab and a negative electrode tab. The positive electrode tab and the negative electrode tab may be located together at one end of the electrode main body or respectively at two ends of the electrode main body.

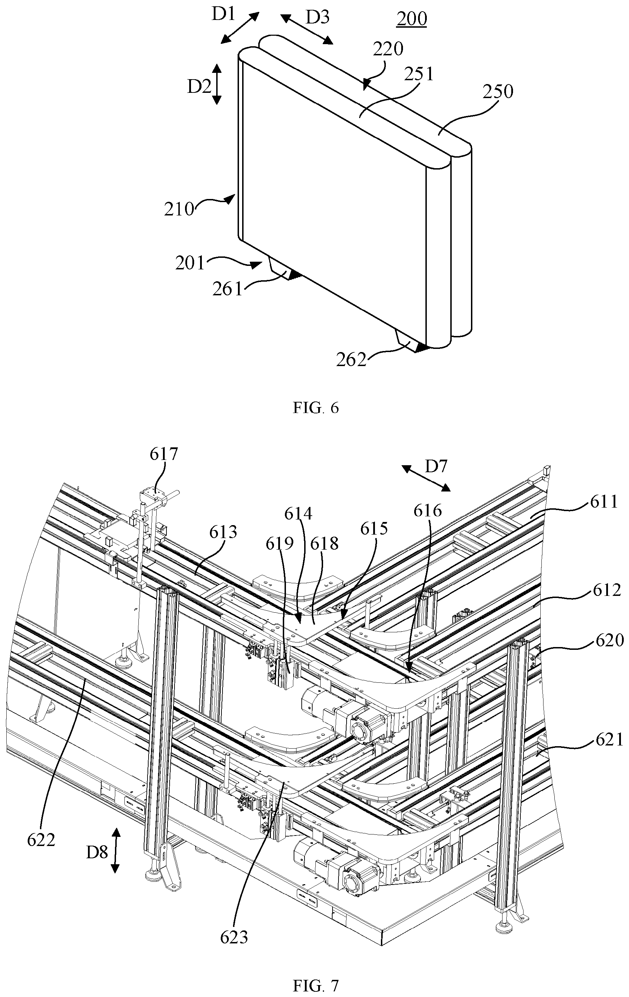

According to some embodiments of the present application, as shown in FIGs. 5 and 6, the battery processing device 600 described in the embodiments of the battery processing device of the present application includes a material conveying assembly 610, a pairing assembly 630, and a welding assembly 690. The material conveying assembly 610 is configured to convey a first electrode assembly 250 and a second electrode assembly 251, where the first electrode assembly 250 and the second electrode assembly 251 each include an electrode main body part 220 and a tab part 201 disposed on the electrode main body part 220. The pairing assembly 630 is configured to pair the first electrode assembly 250 and the second electrode assembly 251, such that the electrode main body part 220 of the first electrode assembly 250 and the electrode main body part 220 of the second electrode assembly 251 are stacked on each other. The welding assembly 690 is configured to weld the tab part 201 of the paired first electrode assembly 250 and the tab part 201 of the paired second electrode assembly 251.

After the electrode main body part 220 of the first electrode assembly 250 and the electrode main body part 220 of the second electrode assembly 251 are stacked on each other, the tab part 201 of the first electrode assembly 250 and the tab part 201 of the second electrode assembly 251 are in an opposite position to facilitate welding. The battery cell 1 may include an electrode assembly 200. The electrode assembly 200 can be formed by welding the tab parts 201 of the first electrode assembly 250 and the second electrode assembly 251. Further, the first electrode assembly 250 and the second electrode assembly 251 can be connected in series or in parallel through the tab parts 201.

By configuring the material conveying assembly 610, the first electrode assembly 250 and the second electrode assembly 251 are allowed to move toward the pairing assembly 630 and the welding assembly 690 after feeding. By configuring the pairing assembly 630 to pair the first electrode assembly 250 and the second electrode assembly 251, the alignment of the first electrode assembly 250 and the second electrode assembly 251 can be realized, which facilitates the welding of the tab part 201 and the assembly of the first electrode assembly 250 and the second electrode assembly 251 into the housing 100 in the subsequent processes. By configuring the welding assembly 690 to weld the tab part 201 of the paired first electrode assembly 250 and the tab part 201 of the paired second electrode assembly 251, the stable connection between the first electrode assembly 250 and the second electrode assembly 251 can be realized, which facilitates the assembly of the first electrode assembly 250 and the second electrode assembly 251 into the housing 100 in the subsequent processes, and improves the production efficiency of the battery cell 1.

The electrode assembly 200 may include two electrode main body parts 220 respectively from the first electrode assembly 250 and the second electrode assembly 251. The electrode main body 210 is formed by stacking the two electrode main body parts 220. As shown in FIG. 4, the electrode main body part 220 may include a positive electrode plate 221, a separation film 222, and a negative electrode plate 223 that are sequentially disposed.

Optionally, the first electrode assembly 250 and the second electrode assembly 251 may be the same or different.

According to some embodiments of the present application, optionally, as shown in FIGs. 5 and 7, the material conveying assembly 610 includes a first branch conveyor line 611 and a second branch conveyor line 612. The first branch conveyor line 611 is configured to convey a plurality of first electrode assemblies 250, and the second branch conveyor line 612 is configured to convey a plurality of second electrode assemblies 251.

By configuring the first branch conveyor line 611 and the second branch conveyor line 612 to respectively convey the first electrode assembly 250 and the second electrode assembly 251, it is convenient to manage and operate the first electrode assembly 250 and the second electrode assembly 251, separately, which is beneficial for the first electrode assembly 250 and the second electrode assembly 251 to meet the requirements of battery processing.

According to some embodiments of the present application, optionally, as shown in FIGs. 5 and 7, the material conveying assembly 610 further includes a main conveyor line 613 and a diversion mechanism 614. The main conveyor line 613 is configured to convey the plurality of first electrode assemblies 250 and the plurality of second electrode assemblies 251. The diversion mechanism 614 is configured to divert the first electrode assemblies 250 from the main conveyor line 613 to the first branch conveyor line 611 and divert the second electrode assemblies 251 from the main conveyor line 613 to the second branch conveyor line 612.

By configuring the main conveyor line 613 to convey the plurality of first electrode assemblies 250 and the plurality of second electrode assemblies 251 and then performing the diversion, it is convenient to feed the first electrode assemblies 250 and the second electrode assemblies 251, and the feeding efficiency is improved.

According to some embodiments of the present application, optionally, as shown in FIGs. 5 and 7, the first branch conveyor line 611 and the second branch conveyor line 612 are connected to the main conveyor line 613 and form a first connection point 615 and a second connection point 616, the first connection point 615 is located upstream of the second connection point 616, and the diversion mechanism 614 includes a diversion detection member 617, a flow guide member 618, and a flow guide drive member 619, where the diversion detection member 617 is disposed on the main conveyor line 613 and is located upstream of the first connection point 615, the diversion detection member 617 is configured to detect whether an object flowing toward the first connection point 615 is the first electrode assembly 250 or the second electrode assembly 251, the flow guide member 618 is disposed at the first connection point 615, and the flow guide drive member 619 drives, in response to the object reaching the first connection point 615 being the first electrode assembly 250, the flow guide member 618 to a first position, such that the first electrode assembly 250 flows toward the first branch conveyor line 611 under the action of the flow guide member 618. The flow guide drive member 619 drives, in response to the object reaching the first connection point 615 being the second electrode assembly 251, the flow guide member 618 to a second position, such that the second electrode assembly 251 continues to flow toward the second connection point 616 along the main conveyor line 613.

By providing the diversion detection member 617, the accuracy of the diversion of the first electrode assembly 250 and the second electrode assembly 251 can be improved. By configuring the flow guide drive member 619 to drive the flow guide member 618 to switch between the first position and the second position, the stability and the flexibility of the diversion can be improved.

Optionally, the diversion detection member 617 includes a code scanner.

Optionally, the flow guide member 618 may block the second electrode assembly 251 to play a diversion role. Specifically, the flow guide member 618 at the first position may block the path from the first connection point 615 to the second connection point 616, thereby limiting the flow of the electrode assembly from the first connection point 615 to the second connection point 616, and the flow guide member 618 at the first position may also guide the flow of the electrode assembly from the first connection point 615 to the first branch conveyor line 611, which facilitates the flow of the electrode assembly from the first connection point 615 to the first branch conveyor line 611. The flow guide member 618 at the second position may open the path from the first connection point 615 to the second connection point 616, thereby allowing the flow of the electrode assembly from the first connection point 615 to the second connection point 616, and the flow guide member 618 at the second position does not guide the flow of the electrode assembly from the first connection point 615 to the first branch conveyor line 611, thereby limiting the flow of the electrode assembly from the first connection point 615 to the first branch conveyor line 611.

Optionally, a portion of the outer contour of the flow guide member 618 is set in an arc shape and is tangent to the main conveyor line 613 and the first branch conveyor line 611 when the flow guide member 618 is at the first position, so as to guide the flow of the electrode assembly from the first connection point 615 to the first branch conveyor line 611.

Optionally, the flow guide drive member 619 includes a cylinder, and the flow guide drive member 619 pneumatically drives the flow guide member 618 to switch between the first position and the second position.

According to some embodiments of the present application, optionally, as shown in FIGs. 5 and 7, the material conveying assembly 610 includes a first branch return line 620 and a second branch return line 621, the first branch conveyor line 611 is configured to convey a first tray 661 and the first electrode assembly 250 carried on the first tray 661, the second branch conveyor line 612 is configured to convey a second tray 662 and the second electrode assembly 251 carried on the second tray 662, the first branch return line 620 is configured to return the first tray 661, and the second branch return line 621 is configured to return the second tray 662.

The first tray 661 and the second tray 662 are configured to respectively carry the first electrode assembly 250 and the second electrode assembly 251, so as to facilitate the transportation of the first electrode assembly 250 and the second electrode assembly 251.

The first branch return line 620 and the second branch return line 621 are provided, such that the first branch return line 620 and the first branch conveyor line 611 may form a loop, and the first branch return line 620 and the second branch conveyor line 612 may form a loop. This facilitates automatic circulation flow of the first tray 661 and the second tray 662.

According to some embodiments of the present application, optionally, as shown in FIGs. 5 and 7, the first branch conveyor line 611 and the second branch conveyor line 612 are disposed side by side in the horizontal direction D7, the first branch return line 620 is located below the first branch conveyor line 611 in the vertical direction D8, and the second branch return line 621 is located below the second branch conveyor line 612 in the vertical direction D8.

Such a configuration is beneficial to reducing the occupied area of the material conveying assembly 610.

According to some embodiments of the present application, optionally, as shown in FIGs. 5, 8 and 9, the battery processing device 600 includes a transfer mechanism 660. The transfer mechanism 660 is configured to transfer the first tray 661 on the first branch conveyor line 611 to the first branch return line 620, and/or transfer the second tray 662 on the second branch conveyor line 612 to the second branch return line 621.

The transfer mechanism 660 is provided, such that the first branch return line 620 and the first branch conveyor line 611 may form a loop, and the first branch return line 620 and the second branch conveyor line 612 may form a loop. This facilitates automatic circulation flow of the first tray 661 and the second tray 662.

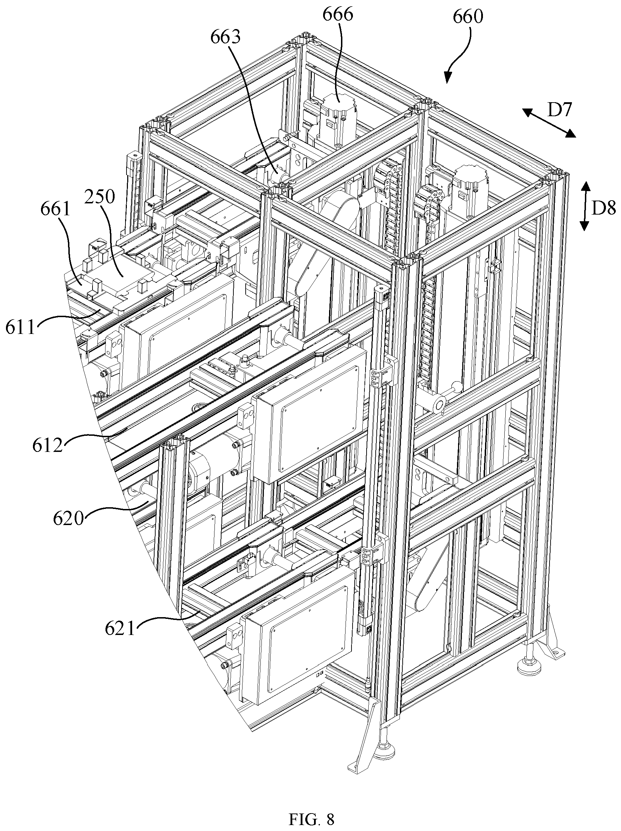

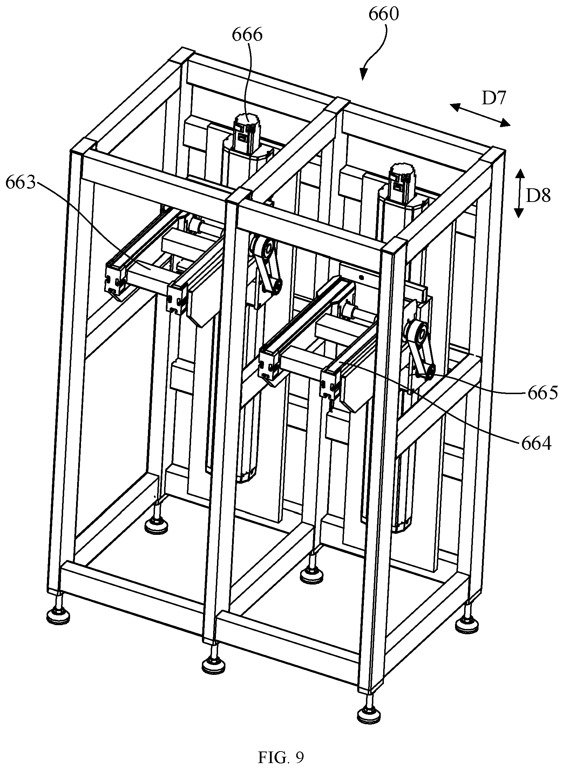

According to some embodiments of the present application, optionally, as shown in FIGs. 8 and 9, the transfer mechanism 660 includes a transfer platform 663, a transfer conveyor belt 664, a belt drive member 665, and a platform drive member 666. The transfer conveyor belt 664 is disposed on the transfer platform 663. The belt drive member 665 drives the transfer conveyor belt 664 to move so as to move the first tray 661 and/or the second tray 662 into or out of the transfer platform 663. The platform drive member 666 drives the transfer platform 663 in the vertical direction D8, such that the transfer platform 663 selectively aligns with the first branch conveyor line 611 or the first branch return line 620, and/or the transfer platform 663 selectively aligns with the second branch conveyor line 612 or the second branch return line 621.

The movement direction in which the first tray 661 and/or the second tray 662 is moved into or out of the transfer platform 663 may be perpendicular to the movement direction in which the transfer platform 663 selectively aligns with the first branch conveyor line 611 or the first branch return line 620. By configuring the belt drive member 665 to drive the transfer conveyor belt 664 to move, it is beneficial to enabling the first tray 661 and/or the second tray 662 to be smoothly moved into or out of the transfer platform 663. Thus, the efficiency of the first tray 661 and/or the second tray 662 being moved into or out of the transfer platform 663 is improved.

By configuring the platform drive member 666 to drive the transfer platform 663 in the vertical direction D8, the transfer platform 663 may convey the first tray 661 and the second tray 662 in the vertical direction D8 by performing a lifting motion, which facilitates automatic circulation flow of the first tray 661 and the second tray 662.

Optionally, the platform drive member 666 is a motor.

Optionally, the belt drive member 665 is a motor, and the belt drive member 665 may drive the transfer conveyor belt 664 to rotate by means of belt transmission and shaft transmission.

According to some embodiments of the present application, optionally, as shown in FIGs. 5 and 7, the material conveying assembly 610 further includes a main return line 622 and a convergence mechanism 623, the convergence mechanism 623 being configured to converge the first tray 661 on the first branch return line 620 and the second tray 662 on the second branch return line 621 to the main return line 622.

The first tray 661 and the second tray 662 are converged to the main return line 622 and may be conveyed to a feeding position by the main return line 622, and then the electrode assembly is loaded, so as to realize the recycling of the first tray 661 and the second tray 662.

Optionally, the structure of the convergence mechanism 623 may be the same as or different from that of the diversion mechanism 614.

According to some embodiments of the present application, optionally, as shown in FIGs. 5 and 6, the battery processing device 600 further includes a detection assembly 670. The detection assembly 670 is configured to detect the first electrode assembly 250 and the second electrode assembly 251. The pairing assembly 630 is configured to pair based on the detection states of the first electrode assembly 250 and the second electrode assembly 251.

Specifically, the detection assembly 670 may be configured to detect whether there are defects on the surfaces of the first electrode assembly 250 and the second electrode assembly 251, whether the position of the tab part 201 are misaligned, and whether a plurality of tabs forming the tab part 201 are aligned, thereby determining whether the first electrode assembly 250 and the second electrode assembly 251 are conforming. The pairing assembly 630 may pair the first electrode assembly 250 and the second electrode assembly 251 that are conforming, and the first electrode assembly 250 and the second electrode assembly 251 with defects on surfaces, misalignment of the tab part 201 or misalignment of the plurality of tabs forming the tab part 201 are determined to be non-conforming and thus do not participate in the pairing.

Such a configuration is beneficial to improving the yield rate of the battery cells.

According to some embodiments of the present application, optionally, as shown in FIG. 5, the detection assembly 670 includes a first detection conveyor line 671, a second detection conveyor line 672, a first detection mechanism 673, a second detection mechanism 674, and a detection feeding mechanism 675. The detection feeding mechanism 675 picks up the first electrode assembly 250 and the second electrode assembly 251 from the material conveying assembly 610, and respectively places the first electrode assembly and the second electrode assembly on the first detection conveyor line 671 and the second detection conveyor line 672. The first detection conveyor line 671 conveys the first electrode assembly 250 through the first detection mechanism 673, and the second detection conveyor line 672 conveys the second electrode assembly 251 through the second detection mechanism 674.

Such a configuration can realize automatic detection of the first electrode assembly 250 and the second electrode assembly 251, which is beneficial to improving the yield rate of the battery cells.

Optionally, the first detection mechanism 673 and the second detection mechanism 674 each include a charge-coupled device (CCD) image sensor.

According to some embodiments of the present application, optionally, as shown in FIG. 5, the material conveying assembly 610 includes a first branch conveyor line 611 and a second branch conveyor line 612. The first branch conveyor line 611 is configured to convey a plurality of first electrode assemblies 250, and the second branch conveyor line 612 is configured to convey a plurality of second electrode assemblies 251. The detection feeding mechanism 675 includes a first detection feeding mechanism 676 and a second detection feeding mechanism 677. The first detection feeding mechanism 676 is configured to pick up the first electrode assembly 250 from the first branch conveyor line 611 and place the first electrode assembly on the first detection conveyor line 671, and the second detection feeding mechanism 677 is configured to pick up the second electrode assembly 251 from the second branch conveyor line 612 and place the second electrode assembly on the second detection conveyor line 672. The first detection feeding mechanism 676 and the second detection feeding mechanism 677 perform pickup and placement actions relatively independently.

The first detection feeding mechanism 676 and the second detection feeding mechanism 677 may be the same or different. The first detection feeding mechanism 676 and the second detection feeding mechanism 677 are configured to facilitate the detection of the first electrode assembly 250 and the second electrode assembly 251 respectively, improve the accuracy of the movement paths of the first electrode assembly 250 and the second electrode assembly 251, and improve the detection efficiency.

Optionally, the battery processing device 600 includes a control system, and the control system is coupled to the material conveying assembly 610, the pairing assembly 630, and the welding assembly 690. The control system may be configured to coordinate and control the cooperation of the material conveying assembly 610, the pairing assembly 630, and the welding assembly 690.

Optionally, the first detection feeding mechanism 676 and the second detection feeding mechanism 677 each include a movable robotic arm and a track supporting the movement of the robotic arm.

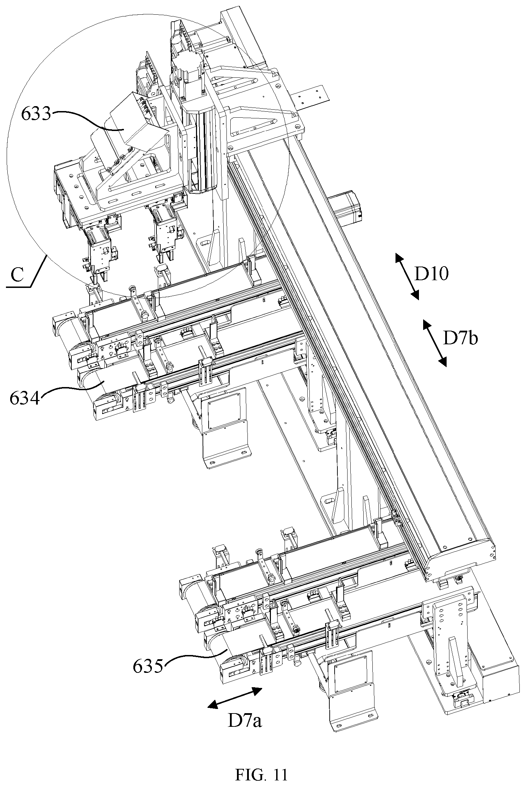

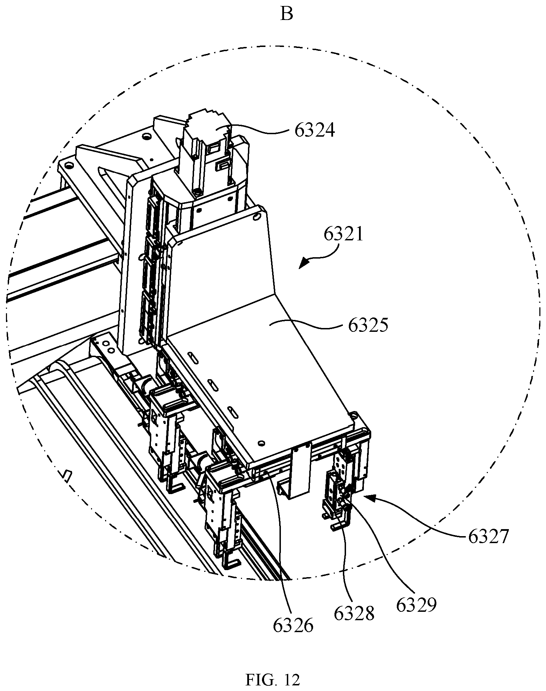

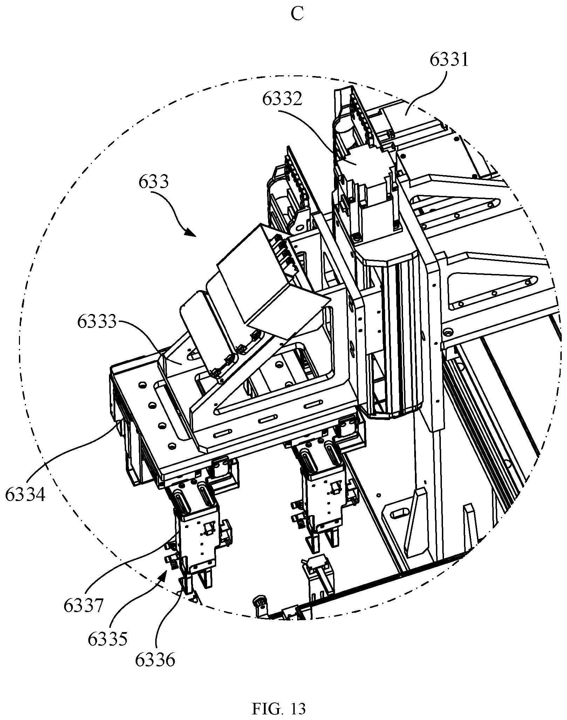

According to some embodiments of the present application, optionally, as shown in FIGs. 5 and 10 to 13, the pairing assembly 630 includes a pairing feeding mechanism 631, a sorting mechanism 632, a stacking mechanism 633, and a first pairing conveyor line 634 and a second pairing conveyor line 635 disposed side by side. The pairing feeding mechanism 631 is configured to pick up the first electrode assembly 250 and the second electrode assembly 251 in a paired manner and place the first electrode assembly and the second electrode assembly on the first pairing conveyor line 634 and the second pairing conveyor line 635 respectively. The sorting mechanism 632 is configured to pair the first electrode assembly 250 and the second electrode assembly 251 that are in a conforming condition. The stacking mechanism 633 is configured to stack the electrode main body part 220 of the paired first electrode assembly 250 and the electrode main body part 220 of the paired second electrode assembly 251.

The pairing feeding mechanism 631 is configured to pick up the first electrode assemblies 250 and the second electrode assemblies 251 in a paired manner, such that the first electrode assemblies 250 and the second electrode assemblies 251 are paired in a one-to-one correspondence in the subsequent processes. The sorting mechanism 632 is configured to pair the first electrode assembly 250 and the second electrode assembly 251 that are in a conforming condition, which is beneficial to the smooth execution of the subsequent processes. The stacking mechanism 633 is configured to stack the electrode main body part 220 of the paired first electrode assembly 250 and the electrode main body part 220 of the paired second electrode assembly 251, which facilitates the welding of the tab parts 201 of the first electrode assembly 250 and the second electrode assembly 251 in the subsequent processes.

In some other embodiments, the pairing assembly 630 includes a sorting mechanism 632, a stacking mechanism 633, and a first pairing conveyor line 634 and a second pairing conveyor line 635 disposed side by side. The first pairing conveyor line 634 is connected to the first detection conveyor line 671, and the second pairing conveyor line 635 is connected to the second detection conveyor line 672, such that the first electrode assembly 250 and the second electrode assembly 251 can be fed onto the first pairing conveyor line 634 and the second pairing conveyor line 635, respectively, without the need for providing a pairing feeding mechanism 631.

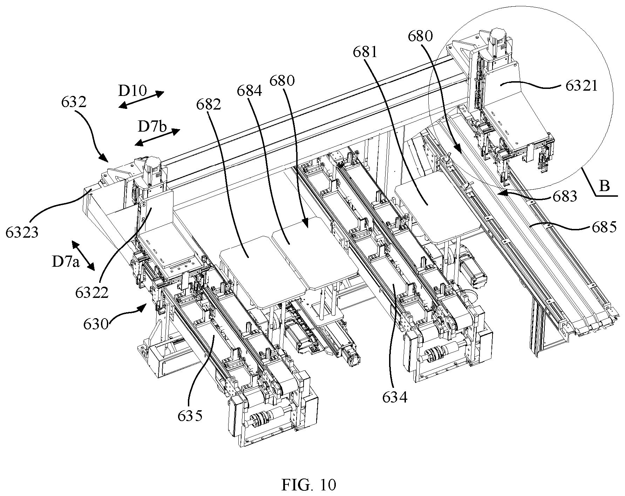

According to some embodiments of the present application, optionally, as shown in FIGs. 5 and 10, the pairing includes: directly taking, when the first electrode assembly 250 and the second electrode assembly 251 picked up in a paired manner are both in the conforming condition, the first electrode assembly 250 and the second electrode assembly 251 picked up in a paired manner as the paired first electrode assembly 250 and second electrode assembly 251.

Such a configuration is beneficial to improving the production efficiency.

According to some embodiments of the present application, optionally, as shown in FIGs. 5 and 10, the battery processing device 600 is provided with a non-conforming products recovery zone 680, and the pairing includes sorting, when at least one of the first electrode assembly 250 and the second electrode assembly 251 picked up in a paired manner is in a non-conforming condition, the first electrode assembly 250 and/or the second electrode assembly 251 in the non-conforming condition to the non-conforming products recovery zone 680.

Such a configuration is beneficial to reducing the interference from the first electrode assembly 250 and/or the second electrode assembly 251 in the non-conforming condition with the pairing, and improving the production efficiency.

According to some embodiments of the present application, optionally, as shown in FIGs. 5 and 10, the battery processing device 600 is provided with a first conforming products buffer zone 681 corresponding to the first electrode assembly 250 and a second conforming products buffer zone 682 corresponding to the second electrode assembly 251. The pairing includes: sorting, when the first electrode assembly 250 in the first electrode assembly 250 and the second electrode assembly 251 picked up in a paired manner is in the conforming condition, the second electrode assembly 251 is in the non-conforming condition, and the second electrode assembly 251 is not present in the second conforming products buffer zone 682, the first electrode assembly 250 to the first conforming products buffer zone 681, and sorting the second electrode assembly 251 in the non-conforming condition to the non-conforming products recovery zone 680.

When the first electrode assembly 250 is in the conforming condition and the second electrode assembly 251 is in the non-conforming condition, since there is temporarily no conforming second electrode assembly 251 paired with the first electrode assembly 250, by sorting the first electrode assembly 250 to the first conforming products buffer zone 681 and sorting the second electrode assembly 251 to the non-conforming products recovery zone 680, the interference from the second electrode assembly 251 in the non-conforming condition with the pairing can be reduced, and the production efficiency can be improved. When a new conforming second electrode assembly 251 needs to be paired, it can be paired with the first electrode assembly 250 placed in the first conforming products buffer zone 681 to enter the next process.

Or when the first electrode assembly 250 in the first electrode assembly 250 and the second electrode assembly 251 picked up in a paired manner is in the non-conforming condition, the second electrode assembly 251 is in the conforming condition, and the first electrode assembly 250 is not present in the first conforming products buffer zone 681, the first electrode assembly 250 in the non-conforming condition is sorted to the non-conforming products recovery zone 680, and the second electrode assembly 251 is sorted to the second conforming products buffer zone 682.

When the first electrode assembly 250 is in the non-conforming condition and the second electrode assembly 251 is in the conforming condition, since there is temporarily no conforming first electrode assembly 250 paired with the second electrode assembly 251, by sorting the second electrode assembly 251 to the second conforming products buffer zone 682 and sorting the first electrode assembly 250 to the non-conforming products recovery zone 680, the interference from the first electrode assembly 250 in the non-conforming condition with the pairing can be reduced, and the production efficiency can be improved. When a new conforming first electrode assembly 250 needs to be paired, it can be paired with the first electrode assembly 250 placed in the second conforming products buffer zone 682 to enter the next process.

Optionally, as shown in FIGs. 5 and 10, the non-conforming products recovery zone 680 is provided with a recovery conveyor belt 685. The recovery conveyor belt 685 may convey the first electrode assembly 250 and the second electrode assembly 251 that are in the non-conforming condition to the edge of the battery processing device 600, so as to perform discharging or rework of the first electrode assembly 250 and the second electrode assembly 251 that are in the non-conforming condition.

According to some embodiments of the present application, optionally, as shown in FIGs. 5 and 10, the battery processing device 600 is provided with a first conforming products buffer zone 681 corresponding to the first electrode assembly 250 and a second conforming products buffer zone 682 corresponding to the second electrode assembly 251.

The pairing includes: sorting, when the first electrode assembly 250 in the first electrode assembly 250 and the second electrode assembly 251 picked up in a paired manner is in the conforming condition, the second electrode assembly 251 is in the non-conforming condition, and the second electrode assembly 251 is present in the second conforming products buffer zone 682, the second electrode assembly 251 in the non-conforming condition to the non-conforming products recovery zone 680, and moving the second electrode assembly 251 in the second conforming products buffer zone 682 back to the second pairing conveyor line 635;

or sorting, when the first electrode assembly 250 in the first electrode assembly 250 and the second electrode assembly 251 picked up in a paired manner is in the non-conforming condition, the second electrode assembly 251 is in the conforming condition, and the first electrode assembly 250 is present in the first conforming products buffer zone 681, the first electrode assembly 250 in the non-conforming condition to the non-conforming products recovery zone 680, and moving the first electrode assembly 250 in the first conforming products buffer zone 681 back to the first pairing conveyor line 634.

Such a configuration can replace, on the second pairing conveyor line 635, the second electrode assembly 251 in the conforming condition with the second electrode assembly 251 in the non-conforming condition, and replace, on the first pairing conveyor line 634, the first electrode assembly 250 in the conforming condition with the first electrode assembly 250 in the non-conforming condition, which is beneficial to improving the yield rate.

According to some embodiments of the present application, optionally, as shown in FIGs. 5 and 10, the first pairing conveyor line 634 and the second pairing conveyor line 635 extend in a first horizontal direction D7a and are disposed side by side in a second horizontal direction D7b perpendicular to the first horizontal direction D7a. The sorting mechanism 632 includes a first sorting pickup mechanism 6321, a second sorting pickup mechanism 6322, and a sorting drive mechanism 6323. The sorting drive mechanism 6323 drives the first sorting pickup mechanism 6321 and the second sorting pickup mechanism 6322 in the second horizontal direction D7b. The first sorting pickup mechanism 6321 and the second sorting pickup mechanism 6322 are configured to pick up the first electrode assembly 250 and the second electrode assembly 251 from the first pairing conveyor line 634 and the second pairing conveyor line 635, respectively.

Such a configuration can enable the first sorting pickup mechanism 6321 and the second sorting pickup mechanism 6322 to respectively take the first electrode assembly 250 and the second electrode assembly 251 that are in the non-conforming condition away from the first pairing conveyor line 634 and the second pairing conveyor line 635, which is beneficial to improving the yield rate.

According to some embodiments of the present application, optionally, as shown in FIGs. 5 and 10, the non-conforming products recovery zone 680 includes a first recovery zone 683 on a side of the first pairing conveyor line 634 distal to the second pairing conveyor line 635 and a second recovery zone 684 between the first pairing conveyor line 634 and the second pairing conveyor line 635. The sorting drive mechanism 6323 is configured to drive the second sorting pickup mechanism 6322 to place the second electrode assembly 251 in the non-conforming condition in the second recovery zone 684, and drive the first sorting pickup mechanism 6321 to place the first electrode assembly 250 in the non-conforming condition in the first recovery zone 683, and the sorting drive mechanism 6323 is further configured to drive the first sorting pickup mechanism 6321 to pick up the second electrode assembly 251 from the second recovery zone 684 and place the second electrode assembly in the first recovery zone 683.

Since the first recovery zone 683 is located on the side of the first pairing conveyor line 634 distal to the second pairing conveyor line 635, when the second electrode assembly 251 in the non-conforming condition needs to be placed from the second pairing conveyor line 635 to the first recovery zone 683, the sorting drive mechanism 6323 is configured to drive the second sorting pickup mechanism 6322 to temporarily place the second electrode assembly 251 in the non-conforming condition in the second recovery zone 684, and drive the first sorting pickup mechanism 6321 to pick up the second electrode assembly 251 from the second recovery zone 684 and place the second electrode assembly in the first recovery zone 683. This can hinder the interference between the first sorting pickup mechanism 6321 and the second sorting pickup mechanism 6322, and improve the stability of the process of placing the first electrode assembly 250 and/or the second electrode assembly 251 in the non-conforming condition in the first recovery zone 683.

Optionally, the first recovery zone 683 is provided with a recovery conveyor belt 685, and the second recovery zone 684 is not provided with a recovery conveyor belt 685. In this way, the arrangement number of the recovery conveyor belts 685 can be reduced, and the structure of the battery processing device 600 can be simplified.

According to some embodiments of the present application, optionally, as shown in FIGs. 5 and 10, the first recovery zone 683 includes a recovery conveyor belt 685 configured to convey the first electrode assembly 250 and/or the second electrode assembly 251 in the non-conforming condition.

Such a configuration can reduce the interference from the first electrode assembly 250 and/or the second electrode assembly 251 in the non-conforming condition with the pairing process.

According to some embodiments of the present application, optionally, as shown in FIGs. 6, 10, and 12, the first sorting pickup mechanism 6321 and/or the second sorting pickup mechanism 6322 each includes a first sorting drive member 6324, a sorting support 6325, a second sorting drive member 6326, and two groups of sorting clamps 6327. Each group of sorting clamps 6327 includes a sorting clamping jaw 6328 and a third sorting drive member 6329. The first sorting drive member 6324 is configured to drive the sorting support 6325 to move toward or away from the first pairing conveyor line 634 or the second pairing conveyor line 635. The second sorting drive member 6326 and the two groups of sorting clamps 6327 are disposed on the sorting support 6325. The second sorting drive member 6326 is configured to change the distance between the two groups of sorting clamps 6327 in the length direction or the width direction of the first electrode assembly 250 or the second electrode assembly 251. The third sorting drive member 6329 is configured to drive the sorting clamping jaw 6328 to clamp the first electrode assembly 250 or the second electrode assembly 251 in the thickness direction of the first electrode assembly 250 or the second electrode assembly 251.

When the first electrode assembly 250 needs to be picked up from the first pairing conveyor line 634, or when the second electrode assembly 251 needs to be picked up from the second pairing conveyor line 635, the first sorting drive member 6324 can drive the sorting support 6325 to move toward the first pairing conveyor line 634 or the second pairing conveyor line 635. The second sorting drive member 6326 can reduce the distance between the two groups of sorting clamps 6327 in the length direction or the width direction of the first electrode assembly 250 or the second electrode assembly 251. The third sorting drive member 6329 can drive the sorting clamping jaw 6328 to clamp the first electrode assembly 250 or the second electrode assembly 251 in the thickness direction of the first electrode assembly 250 or the second electrode assembly 251, so as to stably clamp the first electrode assembly 250 or the second electrode assembly 251.

When the first electrode assembly 250 needs to be placed on the first pairing conveyor line 634, or when the second electrode assembly 251 needs to be placed on the second pairing conveyor line 635, the first sorting drive member 6324 can drive the sorting support 6325 to move toward the first pairing conveyor line 634 or the second pairing conveyor line 635. The third sorting drive member 6329 can drive the sorting clamping jaw 6328 to loosen the first electrode assembly 250 or the second electrode assembly 251 in the thickness direction of the first electrode assembly 250 or the second electrode assembly 251. The second sorting drive member 6326 can increase the distance between the two groups of sorting clamps 6327 in the length direction or the width direction of the first electrode assembly 250 or the second electrode assembly 251 to form a clearance for the first electrode assembly 250 or the second electrode assembly 251, thereby placing the first electrode assembly 250 on the first pairing conveyor line 634. Alternatively, the second electrode assembly 251 needs to be placed on the second pairing conveyor line 635.

Optionally, the first sorting drive member 6324 includes a motor. Specifically, the first sorting drive member 6324 further includes a screw rod and a slider. The motor can drive the screw rod to rotate, and the slider is sleeved over the screw rod and is engaged with the screw rod through threads. The slider and the sorting support 6325 are fixedly disposed relative to each other. When the motor drives the screw rod to rotate, the slider can be driven to move in the direction of the rotation axis of the screw rod, so as to drive the sorting support 6325 to move toward or away from the first pairing conveyor line 634 or the second pairing conveyor line 635.

Optionally, the second sorting drive member 6326 includes a cylinder, and the second sorting drive member 6326 can pneumatically change the distance between the two groups of sorting clamps 6327.

Optionally, the third sorting drive member 6329 includes a cylinder, and the third sorting drive member 6329 can pneumatically control the sorting clamping jaw 6328 to clamp or release the first electrode assembly 250 or the second electrode assembly 251.

Optionally, when the first electrode assembly 250 is conveyed on the first pairing conveyor line 634, the thickness direction of the first electrode assembly 250 is perpendicular to the first horizontal direction D7a and the second horizontal direction D7b as described above. Further, the length direction or the width direction of the first electrode assembly 250 is parallel to the first horizontal direction D7a or the second horizontal direction D7b as described above. When the second electrode assembly 251 is conveyed on the second pairing conveyor line 635, the thickness direction of the second electrode assembly 251 is perpendicular to the first horizontal direction D7a and the second horizontal direction D7b as described above. Further, the length direction or the width direction of the second electrode assembly 251 is parallel to the first horizontal direction D7a or the second horizontal direction D7b as described above.

Optionally, as shown in FIG. 6, the electrode assembly obtained by welding the first electrode assembly 250 and the second electrode assembly 251 includes an electrode main body 210, and the electrode main body 210 has a first direction D1, a second direction D2, and a third direction D3 that are orthogonal to each other, and includes two main surfaces disposed opposite to each other in the first direction D1, two end surfaces disposed opposite to each other in the second direction D2, and two side surfaces disposed opposite to each other in the third direction D3. The thickness direction of the first electrode assembly 250 or the second electrode assembly 251 is parallel to the first direction D1. The length direction of the first electrode assembly 250 or the second electrode assembly 251 is parallel to the second direction D2. The width direction of the first electrode assembly 250 or the second electrode assembly 251 is parallel to the third direction D3.

According to some embodiments of the present application, optionally, as shown in FIGs. 5 and 6, the tab part 201 of the first electrode assembly 250 is proximal to the surface of the electrode main body part 220 of the first electrode assembly 250 on the side facing the first pairing conveyor line 634, and the tab part 201 of the second electrode assembly 251 is proximal to the surface of the electrode main body part 220 of the second electrode assembly 251 on the side facing the second pairing conveyor line 635. The pairing assembly 630 further includes a flipping mechanism 636. The flipping mechanism 636 is configured to flip the first one of the first electrode assembly 250 and the second electrode assembly 251, and the stacking mechanism 633 is configured to stack the electrode main body part 220 of the second one of the first electrode assembly 250 and the second electrode assembly 251 on the electrode main body part 220 of the first one of the first electrode assembly 250 and the second electrode assembly 251.

Or the tab part 201 of the first electrode assembly 250 is proximal to the surface of the electrode main body part 220 of the first electrode assembly 250 on the side distal to the first pairing conveyor line 634, and the tab part 201 of the second electrode assembly 251 is proximal to the surface of the electrode main body part 220 of the second electrode assembly 251 on the side distal to the second pairing conveyor line 635. The pairing assembly 630 further includes a flipping mechanism 636. The flipping mechanism 636 is configured to flip the first one of the first electrode assembly 250 and the second electrode assembly 251, and the stacking mechanism 633 is configured to stack the electrode main body part 220 of the flipped first one of the first electrode assembly 250 and the second electrode assembly 251 on the electrode main body part 220 of the second one of the first electrode assembly 250 and the second electrode assembly 251.

Such a configuration enables, after the first electrode assembly 250 and the second electrode assembly 251 are stacked, the tab part 201 of the first electrode assembly 250 to be more proximal to the tab part 201 of the second electrode assembly 251, reducing the distance between the tab part 201 of the first electrode assembly 250 and the tab part 201 of the second electrode assembly 251. Thus, the welding between the tab part 201 of the first electrode assembly 250 and the tab part 201 of the second electrode assembly 251 is facilitated.

According to some embodiments of the present application, optionally, as shown in FIGs. 5, 6 and 14, the flipping mechanism 636 includes a first flipping drive member 6361, a flipping support 6362, a second flipping drive member 6363, a third flipping drive member 6364, and flipping clamps 6365, where each of the flipping clamps 6365 includes two flipping clamping jaws 6366 and a fourth flipping drive member 6367, the first flipping drive member 6361 is configured to drive the flipping support 6362 to move toward or away from the first pairing conveyor line 634 or the second pairing conveyor line 635, the second flipping drive member 6363, the third flipping drive member 6364, and the flipping clamp 6365 are disposed on the flipping support 6362, the second flipping drive member 6363 is configured to change the distance between the two flipping clamping jaws 6366 in the length direction or the width direction of the first electrode assembly 250 or the second electrode assembly 251, the fourth flipping drive member 6367 is configured to drive the flipping clamping jaws 6366 to clamp the first electrode assembly 250 or the second electrode assembly 251 in the thickness direction of the first electrode assembly 250 or the second electrode assembly 251, and the third flipping drive member 6364 is configured to drive the flipping clamps 6365 to flip synchronously relative to the flipping support 6362.

Specifically, the flipping mechanism 636 can flip the first electrode assembly 250 or the second electrode assembly 251 on the first pairing conveyor line 634 or the second pairing conveyor line 635. When one of the first electrode assembly 250 and the second electrode assembly 251 needs to be flipped, the first flipping drive member 6361 can drive the flipping support 6362 to move toward the first pairing conveyor line 634 or the second pairing conveyor line 635. The second flipping drive member 6363 is configured to reduce the distance between the two flipping clamping jaws 6366 in the length direction or the width direction of the first electrode assembly 250 or the second electrode assembly 251. The fourth flipping drive member 6367 can drive the flipping clamping jaw 6366 to clamp the first electrode assembly 250 or the second electrode assembly 251 in the thickness direction of the first electrode assembly 250 or the second electrode assembly 251 to maintain the stability of the flipping process. Then the third flipping drive member 6364 can drive the flipping clamps 6365 to synchronously flip relative to the flipping support 6362.

Optionally, the first sorting drive member 6324 includes a motor. Specifically, the first sorting drive member 6324 further includes a screw rod and a slider. The motor can drive the screw rod to rotate, and the slider is sleeved over the screw rod and is engaged with the screw rod through threads. The slider and the flipping support 6362 are fixedly disposed relative to each other. When the motor drives the screw rod to rotate, the slider can be driven to move in the direction of the rotation axis of the screw rod, so as to drive the flipping support 6362 to move toward or away from the first pairing conveyor line 634 or the second pairing conveyor line 635.

Optionally, the second flipping drive member 6363 includes a cylinder, and the second flipping drive member 6363 can pneumatically change the distance between the two flipping clamping jaws 6366.

Optionally, the fourth flipping drive member 6367 includes a cylinder, and the fourth flipping drive member 6367 can pneumatically control the flipping clamping jaw 6366 to clamp or release the first electrode assembly 250 or the second electrode assembly 251.

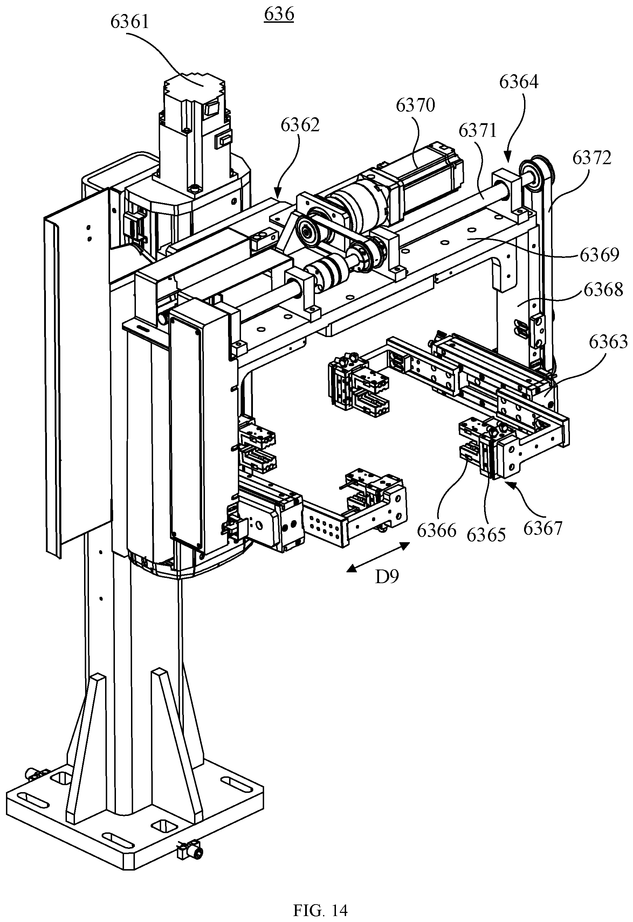

According to some embodiments of the present application, optionally, as shown in FIG. 14, the flipping support 6362 includes two cantilevers 6368 disposed side by side and spaced apart from each other and a connecting arm 6369 connected between the two cantilevers 6368, the flipping clamps 6365 are rotatably supported at free ends of the two cantilevers 6368, respectively, and the third flipping drive member 6364 includes a rotary motor 6370, a transmission shaft 6371, and two synchronization belts 6372, where the transmission shaft 6371 is rotatably supported on the connecting arm 6369 in the spacing direction D9 between the two cantilevers 6368, the rotary motor 6370 drives the transmission shaft 6371 to rotate, and two ends of the transmission shaft 6371 are respectively connected to the corresponding flipping clamps 6365 by the synchronization belts 6372.

When the first electrode assembly 250 or the second electrode assembly 251 is flipped, the transmission shaft 6371 drives the synchronization belt 6372 to rotate, and the synchronization belt 6372 drives the flipping clamp 6365 to rotate synchronously relative to the flipping support 6362. Further, the third flipping drive member 6364 further includes a reduction mechanism and a synchronization wheel. The motor can drive the reduction mechanism to move, and the reduction mechanism further drives the transmission shaft 6371 to rotate. Two ends of the transmission shaft 6371 are in transmission connection with the synchronization wheel and the synchronization belt 6372, respectively. The transmission shaft 6371 drives the synchronization wheel to rotate, and the synchronization wheel drives the synchronization belt 6372 to rotate.

Such a configuration can realize stable flipping of the first electrode assembly 250 or the second electrode assembly 251.

According to some embodiments of the present application, optionally, as shown in FIGs. 5, 11, and 13, the stacking mechanism 633 includes a first stacking drive member 6331, a second stacking drive member 6332, a stacking support 6333, a third stacking drive member 6334, and stacking clamps 6335. Each group of stacking clamps 6335 includes two stacking clamping jaws 6336 and a fourth stacking drive member 6337. The first stacking drive member 6331 drives the stacking support 6333 in a spacing direction D10 between the first pairing conveyor line 634 and the second pairing conveyor line 635. The second stacking drive member 6332 is configured to drive the stacking support 6333 to move toward or away from the first pairing conveyor line 634 or the second pairing conveyor line 635. The third stacking drive member 6334 and the stacking clamp 6335 are disposed on the stacking support 6333. The third stacking drive member 6334 is configured to change the distance between the two stacking clamping jaws 6336 in the length direction or the width direction of the first electrode assembly 250 or the second electrode assembly 251. The fourth stacking drive member 6337 is configured to drive the stacking clamping jaws 6336 to clamp the first electrode assembly 250 or the second electrode assembly 251 in the thickness direction of the first electrode assembly 250 or the second electrode assembly 251.

The stacking mechanism 633 can pick up the first electrode assembly 250 from the first pairing conveyor line 634 and then place the first electrode assembly on the second electrode assembly 251 on the second pairing conveyor line 635, or pick up the second electrode assembly 251 from the second pairing conveyor line 635 and then place the second electrode assembly on the first electrode assembly 250 on the first pairing conveyor line 634, such that the first electrode assembly 250 and the second electrode assembly 251 are in a stacked state. The stacking mechanism 633 is configured to stack the electrode main body part 220 of the first electrode assembly 250 and the electrode main body part 220 of the second electrode assembly 251, which facilitates the welding of the tab parts 201 of the first electrode assembly 250 and the second electrode assembly 251 in the subsequent processes.

When the first electrode assembly 250 needs to be picked up from the first pairing conveyor line 634 or the second electrode assembly 251 needs to be picked up from the second pairing conveyor line 635, the first stacking drive member 6331 drives the stacking support 6333 in the spacing direction D10 between the first pairing conveyor line 634 and the second pairing conveyor line 635, such that the second stacking drive member 6332 is located above the first pairing conveyor line 634 or above the second pairing conveyor line 635. The second stacking drive member 6332 can drive the stacking support 6333 to move toward the first pairing conveyor line 634 or the second pairing conveyor line 635. The third stacking drive member 6334 can reduce the distance between the two stacking clamping jaws 6336 in the length direction or the width direction of the first electrode assembly 250 or the second electrode assembly 251 to match the dimension in the length direction or the width direction of the first electrode assembly 250 or the second electrode assembly 251. The fourth stacking drive member 6337 can drive the stacking clamp 6335 to clamp the first electrode assembly 250 or the second electrode assembly 251 in the thickness direction of the first electrode assembly 250 or the second electrode assembly 251, so as to stably clamp the first electrode assembly 250 or the second electrode assembly 251.

When the first electrode assembly 250 needs to be placed on the first pairing conveyor line 634 or the second electrode assembly 251 needs to be placed on the second pairing conveyor line 635, the first stacking drive member 6331 drives the stacking support 6333 in the spacing direction D10 between the first pairing conveyor line 634 and the second pairing conveyor line 635, such that the second stacking drive member 6332 is located above the first pairing conveyor line 634 or above the second pairing conveyor line 635. The second stacking drive member 6332 can drive the stacking support 6333 to move toward the first pairing conveyor line 634 or the second pairing conveyor line 635. The third stacking drive member 6334 can increase the distance between the two stacking clamping jaws 6336 in the length direction or the width direction of the first electrode assembly 250 or the second electrode assembly 251 to form a clearance for the first electrode assembly 250 or the second electrode assembly 251. The fourth stacking drive member 6337 can drive the stacking clamp 6335 to clamp the first electrode assembly 250 or the second electrode assembly 251 in the thickness direction of the first electrode assembly 250 or the second electrode assembly 251.

Such a configuration can improve the stability of the stacking process.

Optionally, the first stacking drive member 6331 includes a motor. Specifically, the first stacking drive member 6331 further includes a screw rod and a slider. The motor can drive the screw rod to rotate, and the slider is sleeved over the screw rod and is engaged with the screw rod through threads. The slider and the stacking support 6333 are fixedly disposed relative to each other. When the motor drives the screw rod to rotate, the slider can be driven to move in the direction of the rotation axis of the screw rod, such that the stacking support 6333 can be driven in the spacing direction D10 between the first pairing conveyor line 634 and the second pairing conveyor line 635.

Optionally, the second stacking drive member 6332 includes a motor. Specifically, the second stacking drive member 6332 further includes a screw rod and a slider. The motor can drive the screw rod to rotate, and the slider is sleeved over the screw rod and is engaged with the screw rod through threads. The slider and the stacking support 6333 are fixedly disposed relative to each other. When the motor drives the screw rod to rotate, the slider can be driven to move in the direction of the rotation axis of the screw rod, so as to drive the stacking support 6333 to move toward or away from the first pairing conveyor line 634 or the second pairing conveyor line 635.

Optionally, the third stacking drive member 6334 includes a cylinder, and the third stacking drive member 6334 can pneumatically change the distance between the two stacking clamping jaws 6336.

Optionally, the fourth stacking drive member 6337 includes a cylinder, and the fourth stacking drive member 6337 can pneumatically control the stacking clamping jaws 6336 to clamp or release the first electrode assembly 250 or the second electrode assembly 251.

According to some embodiments of the present application, optionally, as shown in FIG. 5, the welding assembly 690 includes a welding conveyor line 691, a welding positioning jig 692, and a welding mechanism 693. The welding positioning jig 692 is configured to clamp and fix the paired first electrode assembly 250 and second electrode assembly 251. The welding conveyor line 691 conveys the welding positioning jig 692 into the welding mechanism 693. The welding mechanism 693 welds the tab part 201 of the first electrode assembly 250 and the tab part 201 of the second electrode assembly 251 that are clamped by the welding positioning jig 692.

For example, the welding mechanism 693 can weld the tab part 201 of the first electrode assembly 250 and the tab part 201 of the second electrode assembly 251 by ultrasonic welding.

The welding conveyor line 691 is configured to convey the welding positioning jig 692 into the welding mechanism 693, such that welding efficiency can be improved.

According to some embodiments of the present application, optionally, as shown in FIGs. 5 and 6, the tab part 201 includes a first tab part 261 and a second tab part 262. The welding mechanism 693 includes a first welding mechanism 6931 and a second welding mechanism 6932. The welding conveyor line 691 conveys the welding positioning jig 692 through the first welding mechanism 6931 and the second welding mechanism 6932 sequentially. The first welding mechanism 6931 is configured to weld the first tab part 261 of the first electrode assembly 250 and the first tab part 261 of the second electrode assembly 251. The second welding mechanism 6932 is configured to weld the second tab part 262 of the first electrode assembly 250 and the second tab part 262 of the second electrode assembly 251.

The first tab part 261 and the second tab part 262 may have different structures and properties. For example, the material of the first tab part 261 and the material of the second tab part 262 include copper, and another material of the first tab part and the second tab part includes aluminum. The first tab part and the second tab part have different dimensions and soldering temperatures.

By providing the first welding mechanism 6931 and the second welding mechanism 6932, in one aspect, the welding efficiency can be improved, and in another aspect, different welding conditions can be provided for the first tab part 261 and the second tab part 262 to meet different welding requirements of the first tab part 261 and the second tab part 262.

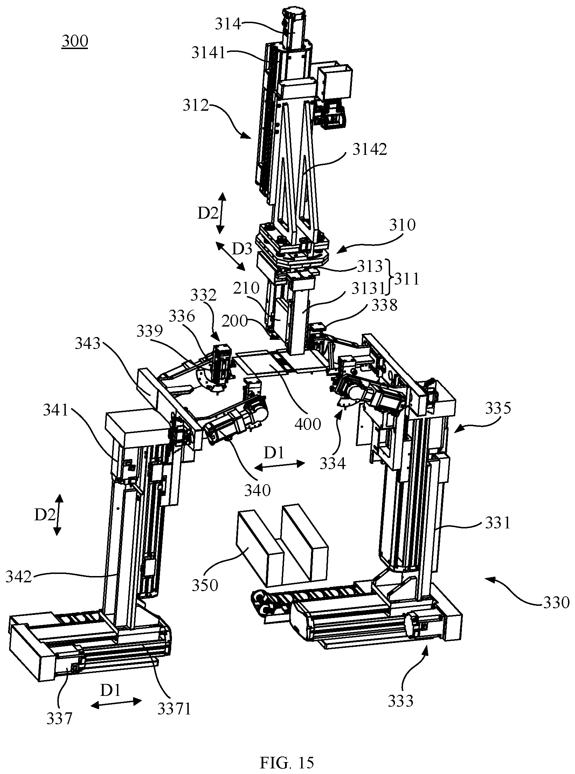

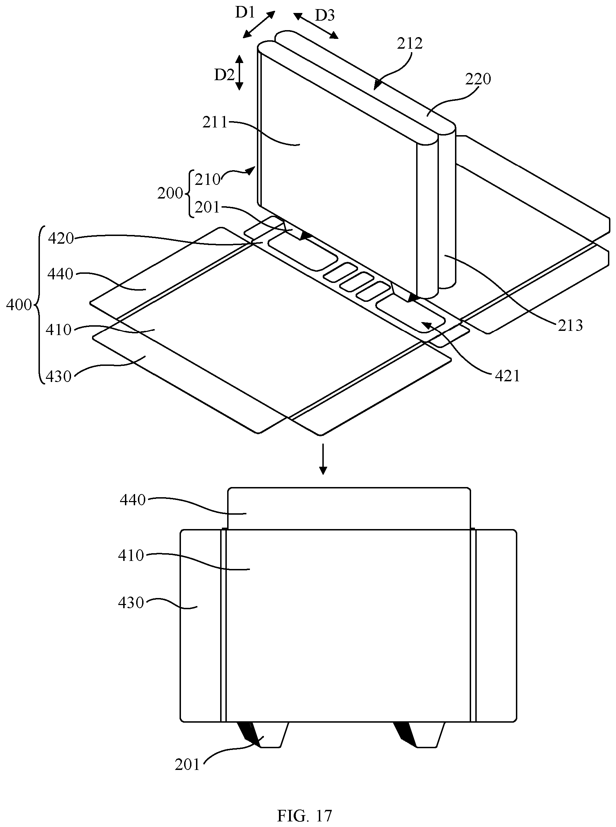

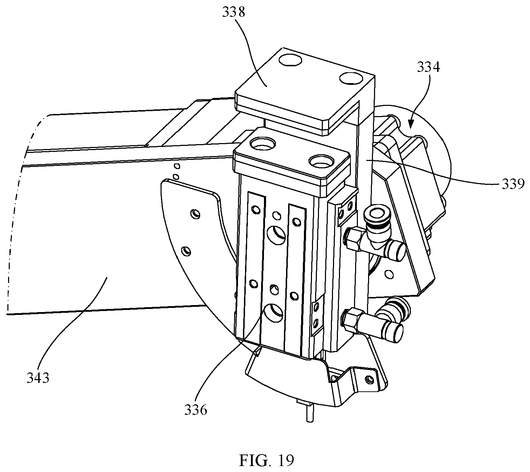

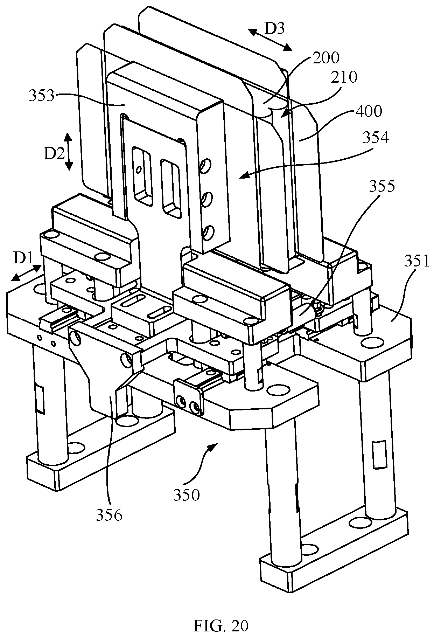

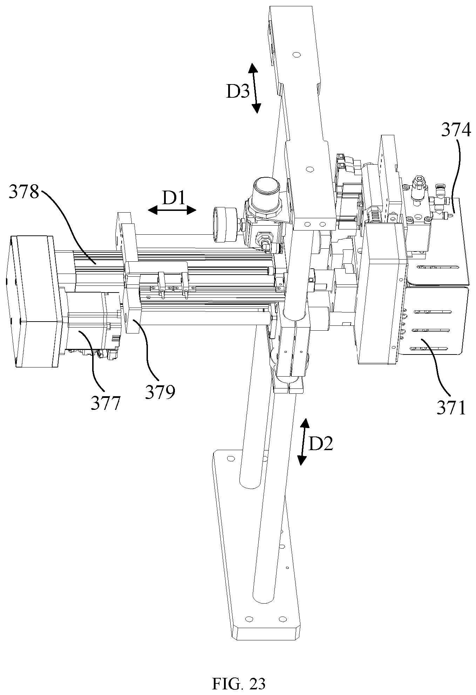

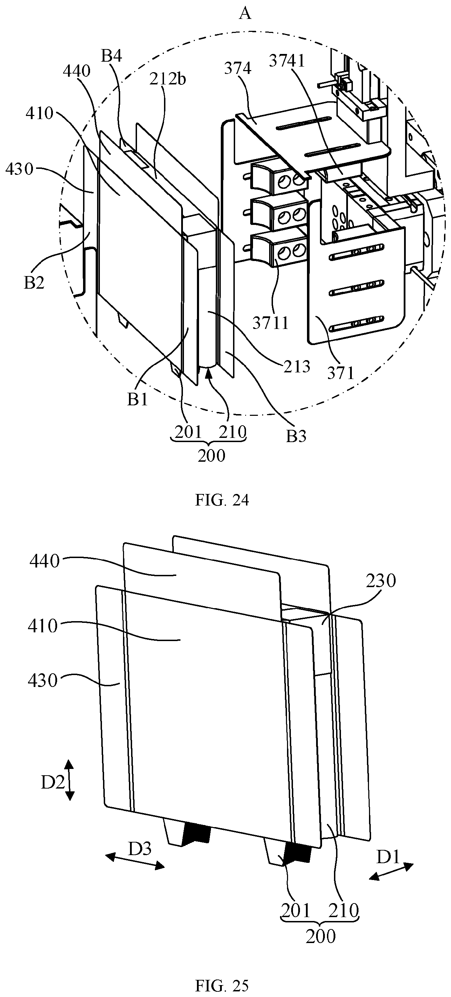

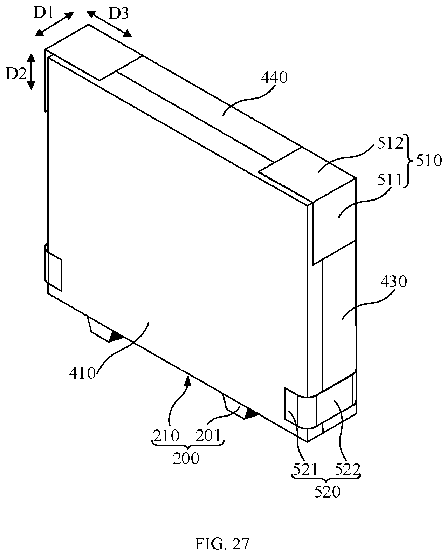

According to some embodiments of the present application, optionally, as shown in FIGs. 5 to 14, the battery processing device 600 includes a material conveying assembly 610, a pairing assembly 630, and a welding assembly 690. The material conveying assembly 610 is configured to convey a first electrode assembly 250 and a second electrode assembly 251, where the first electrode assembly 250 and the second electrode assembly 251 each include an electrode main body part 220 and a tab part 201 disposed on the electrode main body part 220. The pairing assembly 630 is configured to pair the first electrode assembly 250 and the second electrode assembly 251, such that the electrode main body part 220 of the first electrode assembly 250 and the electrode main body part 220 of the second electrode assembly 251 are stacked on each other. The welding assembly 690 is configured to weld the tab part 201 of the paired first electrode assembly 250 and the tab part 201 of the paired second electrode assembly 251. The material conveying assembly 610 includes a first branch conveyor line 611 and a second branch conveyor line 612. The first branch conveyor line 611 is configured to convey a plurality of first electrode assemblies 250, and the second branch conveyor line 612 is configured to convey a plurality of second electrode assemblies 251. The material conveying assembly 610 further includes a main conveyor line 613 and a diversion mechanism 614. The main conveyor line 613 is configured to convey the plurality of first electrode assemblies 250 and the plurality of second electrode assemblies 251. The diversion mechanism 614 is configured to divert the first electrode assemblies 250 from the main conveyor line 613 to the first branch conveyor line 611 and divert the second electrode assemblies 251 from the main conveyor line 613 to the second branch conveyor line 612. The first branch conveyor line 611 and the second branch conveyor line 612 are connected to the main conveyor line 613 and form a first connection point 615 and a second connection point 616, the first connection point 615 is located upstream of the second connection point 616, and the diversion mechanism 614 includes a diversion detection member 617, a flow guide member 618, and a flow guide drive member 619, where the diversion detection member 617 is disposed on the main conveyor line 613 and is located upstream of the first connection point 615, the diversion detection member 617 is configured to detect whether an object flowing toward the first connection point 615 is the first electrode assembly 250 or the second electrode assembly 251, the flow guide member 618 is disposed at the first connection point 615, and the flow guide drive member 619 drives, in response to the object reaching the first connection point 615 being the first electrode assembly 250, the flow guide member 618 to a first position, such that the first electrode assembly 250 flows toward the first branch conveyor line 611 under the action of the flow guide member 618. The flow guide drive member 619 drives, in response to the object reaching the first connection point 615 being the second electrode assembly 251, the flow guide member 618 to a second position, such that the second electrode assembly 251 continues to flow toward the second connection point 616 along the main conveyor line 613. The material conveying assembly 610 includes a first branch return line 620 and a second branch return line 621, the first branch conveyor line 611 is configured to convey a first tray 661 and the first electrode assembly 250 carried on the first tray 661, the second branch conveyor line 612 is configured to convey a second tray 662 and the second electrode assembly 251 carried on the second tray 662, the first branch return line 620 is configured to return the first tray 661, and the second branch return line 621 is configured to return the second tray 662. The first branch conveyor line 611 and the second branch conveyor line 612 are disposed side by side in the horizontal direction D7, the first branch return line 620 is located below the first branch conveyor line 611 in the vertical direction D8, and the second branch return line 621 is located below the second branch conveyor line 612 in the vertical direction D8. The battery processing device 600 includes a transfer mechanism 660. The transfer mechanism 660 is configured to transfer the first tray 661 on the first branch conveyor line 611 to the first branch return line 620, and/or transfer the second tray 662 on the second branch conveyor line 612 to the second branch return line 621. The transfer mechanism 660 includes a transfer platform 663, a transfer conveyor belt 664, a belt drive member 665, and a platform drive member 666. The transfer conveyor belt 664 is disposed on the transfer platform 663. The belt drive member 665 drives the transfer conveyor belt 664 to move so as to move the first tray 661 and/or the second tray 662 into or out of the transfer platform 663. The platform drive member 666 drives the transfer platform 663 in the vertical direction D8, such that the transfer platform 663 selectively aligns with the first branch conveyor line 611 or the first branch return line 620, and/or the transfer platform 663 selectively aligns with the second branch conveyor line 612 or the second branch return line 621. The material conveying assembly 610 further includes a main return line 622 and a convergence mechanism 623, the convergence mechanism 623 being configured to converge the first tray 661 on the first branch return line 620 and the second tray 662 on the second branch return line 621 to the main return line 622. The battery processing device 600 further includes a detection assembly 670. The detection assembly 670 is configured to detect the first electrode assembly 250 and the second electrode assembly 251. The pairing assembly 630 is configured to pair based on the detection states of the first electrode assembly 250 and the second electrode assembly 251. The detection assembly 670 includes a first detection conveyor line 671, a second detection conveyor line 672, a first detection mechanism 673, a second detection mechanism 674, and a detection feeding mechanism 675. The detection feeding mechanism 675 picks up the first electrode assembly 250 and the second electrode assembly 251 from the material conveying assembly 610, and respectively places the first electrode assembly and the second electrode assembly on the first detection conveyor line 671 and the second detection conveyor line 672. The first detection conveyor line 671 conveys the first electrode assembly 250 through the first detection mechanism 673, and the second detection conveyor line 672 conveys the second electrode assembly 251 through the second detection mechanism 674. The material conveying assembly 610 includes a first branch conveyor line 611 and a second branch conveyor line 612. The first branch conveyor line 611 is configured to convey a plurality of first electrode assemblies 250, and the second branch conveyor line 612 is configured to convey a plurality of second electrode assemblies 251. The detection feeding mechanism 675 includes a first detection feeding mechanism 676 and a second detection feeding mechanism 677. The first detection feeding mechanism 676 is configured to pick up the first electrode assembly 250 from the first branch conveyor line 611 and place the first electrode assembly on the first detection conveyor line 671, and the second detection feeding mechanism 677 is configured to pick up the second electrode assembly 251 from the second branch conveyor line 612 and place the second electrode assembly on the second detection conveyor line 672. The first detection feeding mechanism 676 and the second detection feeding mechanism 677 perform pickup and placement actions relatively independently. The pairing assembly 630 includes a pairing feeding mechanism 631, a sorting mechanism 632, a stacking mechanism 633, and a first pairing conveyor line 634 and a second pairing conveyor line 635 disposed side by side. The pairing feeding mechanism 631 is configured to pick up the first electrode assembly 250 and the second electrode assembly 251 in a paired manner and place the first electrode assembly and the second electrode assembly on the first pairing conveyor line 634 and the second pairing conveyor line 635 respectively. The sorting mechanism 632 is configured to pair the first electrode assembly 250 and the second electrode assembly 251 that are in a conforming condition. The stacking mechanism 633 is configured to stack the electrode main body part 220 of the paired first electrode assembly 250 and the electrode main body part 220 of the paired second electrode assembly 251. The pairing includes: directly taking, when the first electrode assembly 250 and the second electrode assembly 251 picked up in a paired manner are both in the conforming condition, the first electrode assembly 250 and the second electrode assembly 251 picked up in a paired manner as the paired first electrode assembly 250 and second electrode assembly 251. The battery processing device 600 is provided with a non-conforming products recovery zone 680, and the pairing includes sorting, when at least one of the first electrode assembly 250 and the second electrode assembly 251 picked up in a paired manner is in a non-conforming condition, the first electrode assembly 250 and/or the second electrode assembly 251 in the non-conforming condition to the non-conforming products recovery zone 680. The battery processing device 600 is provided with a first conforming products buffer zone 681 corresponding to the first electrode assembly 250 and a second conforming products buffer zone 682 corresponding to the second electrode assembly 251. The pairing includes: sorting, when the first electrode assembly 250 in the first electrode assembly 250 and the second electrode assembly 251 picked up in a paired manner is in the conforming condition, the second electrode assembly 251 is in the non-conforming condition, and the second electrode assembly 251 is not present in the second conforming products buffer zone 682, the first electrode assembly 250 to the first conforming products buffer zone 681, and sorting the second electrode assembly 251 to the non-conforming products recovery zone 680. Or when the first electrode assembly 250 in the first electrode assembly 250 and the second electrode assembly 251 picked up in a paired manner is in the non-conforming condition, the second electrode assembly 251 is in the conforming condition, and the first electrode assembly 250 is not present in the first conforming products buffer zone 681, the first electrode assembly 250 in the non-conforming condition is sorted to the non-conforming products recovery zone 680, and the second electrode assembly 251 is sorted to the second conforming products buffer zone 682. The battery processing device 600 is provided with a first conforming products buffer zone 681 corresponding to the first electrode assembly 250 and a second conforming products buffer zone 682 corresponding to the second electrode assembly 251. The pairing includes: sorting, when the first electrode assembly 250 in the first electrode assembly 250 and the second electrode assembly 251 picked up in a paired manner is in the conforming condition, the second electrode assembly 251 is in the non-conforming condition, and the second electrode assembly 251 is present in the second conforming products buffer zone 682, the second electrode assembly 251 in the non-conforming condition to the non-conforming products recovery zone 680, and moving the second electrode assembly 251 in the second conforming products buffer zone 682 back to the second pairing conveyor line 635; or sorting, when the first electrode assembly 250 in the first electrode assembly 250 and the second electrode assembly 251 picked up in a paired manner is in the non-conforming condition, the second electrode assembly 251 is in the conforming condition, and the first electrode assembly 250 is present in the first conforming products buffer zone 681, the first electrode assembly 250 in the non-conforming condition to the non-conforming products recovery zone 680, and moving the first electrode assembly 250 in the first conforming products buffer zone 681 back to the first pairing conveyor line 634. The first pairing conveyor line 634 and the second pairing conveyor line 635 extend in a first horizontal direction D7a and are disposed side by side in a second horizontal direction D7b perpendicular to the first horizontal direction D7a. The sorting mechanism 632 includes a first sorting pickup mechanism 6321, a second sorting pickup mechanism 6322, and a sorting drive mechanism 6323. The sorting drive mechanism 6323 drives the first sorting pickup mechanism 6321 and the second sorting pickup mechanism 6322 in the second horizontal direction D7b. The first sorting pickup mechanism 6321 and the second sorting pickup mechanism 6322 are configured to pick up the first electrode assembly 250 and the second electrode assembly 251 from the first pairing conveyor line 634 and the second pairing conveyor line 635, respectively. The non-conforming products recovery zone 680 includes a first recovery zone 683 on a side of the first pairing conveyor line 634 distal to the second pairing conveyor line 635 and a second recovery zone 684 between the first pairing conveyor line 634 and the second pairing conveyor line 635. The sorting drive mechanism 6323 is configured to drive the second sorting pickup mechanism 6322 to place the second electrode assembly 251 in the non-conforming condition in the second recovery zone 684, and drive the first sorting pickup mechanism 6321 to place the first electrode assembly 250 in the non-conforming condition in the first recovery zone 683, and the sorting drive mechanism 6323 is further configured to drive the first sorting pickup mechanism 6321 to pick up the second electrode assembly 251 from the second recovery zone 684 and place the second electrode assembly in the first recovery zone 683. The first recovery zone 683 includes a recovery conveyor belt 685 configured to convey the first electrode assembly 250 and/or the second electrode assembly 251 in the non-conforming condition. The first sorting pickup mechanism 6321 and/or the second sorting pickup mechanism 6322 each includes a first sorting drive member 6324, a sorting support 6325, a second sorting drive member 6326, and two groups of sorting clamps 6327. Each group of sorting clamps 6327 includes a sorting clamping jaw 6328 and a third sorting drive member 6329. The first sorting drive member 6324 is configured to drive the sorting support 6325 to move toward or away from the first pairing conveyor line 634 or the second pairing conveyor line 635. The second sorting drive member 6326 and the two groups of sorting clamps 6327 are disposed on the sorting support 6325. The second sorting drive member 6326 is configured to change the distance between the two groups of sorting clamps 6327 in the length direction or the width direction of the first electrode assembly 250 or the second electrode assembly 251. The third sorting drive member 6329 is configured to drive the sorting clamping jaw 6328 to clamp the first electrode assembly 250 or the second electrode assembly 251 in the thickness direction of the first electrode assembly 250 or the second electrode assembly 251. The tab part 201 of the first electrode assembly 250 is proximal to the surface of the electrode main body part 220 of the first electrode assembly 250 on the side facing the first pairing conveyor line 634, and the tab part 201 of the second electrode assembly 251 is proximal to the surface of the electrode main body part 220 of the second electrode assembly 251 on the side facing the second pairing conveyor line 635. The pairing assembly 630 further includes a flipping mechanism 636. The flipping mechanism 636 is configured to flip the first one of the first electrode assembly 250 and the second electrode assembly 251, and the stacking mechanism 633 is configured to stack the electrode main body part 220 of the second one of the first electrode assembly 250 and the second electrode assembly 251 on the electrode main body part 220 of the first one of the first electrode assembly 250 and the second electrode assembly 251. Or the tab part 201 of the first electrode assembly 250 is proximal to the surface of the electrode main body part 220 of the first electrode assembly 250 on the side distal to the first pairing conveyor line 634, and the tab part 201 of the second electrode assembly 251 is proximal to the surface of the electrode main body part 220 of the second electrode assembly 251 on the side distal to the second pairing conveyor line 635. The pairing assembly 630 further includes a flipping mechanism 636. The flipping mechanism 636 is configured to flip the first one of the first electrode assembly 250 and the second electrode assembly 251, and the stacking mechanism 633 is configured to stack the electrode main body part 220 of the flipped first one of the first electrode assembly 250 and the second electrode assembly 251 on the electrode main body part 220 of the second one of the first electrode assembly 250 and the second electrode assembly 251. The flipping mechanism 636 includes a first flipping drive member 6361, a flipping support 6362, a second flipping drive member 6363, a third flipping drive member 6364, and flipping clamps 6365, where each of the flipping clamps 6365 includes two flipping clamping jaws 6366 and a fourth flipping drive member 6367, the first flipping drive member 6361 is configured to drive the flipping support 6362 to move toward or away from the first pairing conveyor line 634 or the second pairing conveyor line 635, the second flipping drive member 6363, the third flipping drive member 6364, and the flipping clamp 6365 are disposed on the flipping support 6362, the second flipping drive member 6363 is configured to change the distance between the two flipping clamping jaws 6366 in the length direction or the width direction of the first electrode assembly 250 or the second electrode assembly 251, the fourth flipping drive member 6367 is configured to drive the flipping clamping jaws 6366 to clamp the first electrode assembly 250 or the second electrode assembly 251 in the thickness direction of the first electrode assembly 250 or the second electrode assembly 251, and the third flipping drive member 6364 is configured to drive the flipping clamps 6365 to flip synchronously relative to the flipping support 6362. The flipping support 6362 includes two cantilevers 6368 disposed side by side and spaced apart from each other and a connecting arm 6369 connected between the two cantilevers 6368, the flipping clamps 6365 are rotatably supported at free ends of the two cantilevers 6368, respectively, and the third flipping drive member 6364 includes a rotary motor 6370, a transmission shaft 6371, and two synchronization belts 6372, where the transmission shaft 6371 is rotatably supported on the connecting arm 6369 in the spacing direction D9 between the two cantilevers 6368, the rotary motor 6370 drives the transmission shaft 6371 to rotate, and two ends of the transmission shaft 6371 are respectively connected to the corresponding flipping clamps 6365 by the synchronization belts 6372. The stacking mechanism 633 includes a first stacking drive member 6331, a second stacking drive member 6332, a stacking support 6333, a third stacking drive member 6334, and stacking clamps 6335. Each of the stacking clamps 6335 includes two stacking clamping jaws 6336 and a fourth stacking drive member 6337. The first stacking drive member 6331 drives the stacking support 6333 in a spacing direction D10 between the first pairing conveyor line 634 and the second pairing conveyor line 635. The second stacking drive member 6332 is configured to drive the stacking support 6333 to move toward or away from the first pairing conveyor line 634 or the second pairing conveyor line 635. The third stacking drive member 6334 and the stacking clamp 6335 are disposed on the stacking support 6333. The third stacking drive member 6334 is configured to change the distance between the two stacking clamping jaws 6336 in the length direction or the width direction of the first electrode assembly 250 or the second electrode assembly 251. The fourth stacking drive member 6337 is configured to drive the stacking clamping jaws 6336 to clamp the first electrode assembly 250 or the second electrode assembly 251 in the thickness direction of the first electrode assembly 250 or the second electrode assembly 251. The welding assembly 690 includes a welding conveyor line 691, a welding positioning jig 692, and a welding mechanism 693. The welding positioning jig 692 is configured to clamp and fix the paired first electrode assembly 250 and second electrode assembly 251. The welding conveyor line 691 conveys the welding positioning jig 692 into the welding mechanism 693. The welding mechanism 693 welds the tab part 201 of the first electrode assembly 250 and the tab part 201 of the second electrode assembly 251 that are clamped by the welding positioning jig 692. The tab part 201 includes a first tab part 261 and a second tab part 262. The welding mechanism 693 includes a first welding mechanism 6931 and a second welding mechanism 6932. The welding conveyor line 691 conveys the welding positioning jig 692 through the first welding mechanism 6931 and the second welding mechanism 6932 sequentially. The first welding mechanism 6931 is configured to weld the first tab part 261 of the first electrode assembly 250 and the first tab part 261 of the second electrode assembly 251. The second welding mechanism 6932 is configured to weld the second tab part 262 of the first electrode assembly 250 and the second tab part 262 of the second electrode assembly 251. As shown in FIGs. 15 to 27, the battery processing device 600 further includes a wrapping device 300 for the electrode assembly 200. The electrode assembly 200 includes an electrode main body 210. The electrode main body 210 has a first direction D1, a second direction D2, and a third direction D3 that are orthogonal to each other, and includes two main surfaces 211 disposed opposite to each other in the first direction D1, two end surfaces 212 disposed opposite to each other in the second direction D2, and two side surfaces 213 disposed opposite to each other in the third direction D3. The wrapping device 300 includes a first positioning assembly 310 and a first wrapping assembly 330. The first positioning assembly 310 is configured to position the electrode assembly 200, such that the two main surfaces 211 are at least partially exposed. The first wrapping assembly 330 is configured to position the wrapping film 400, where the wrapping film 400 includes two main wrapping zones 410 spaced apart from each other and a connection zone 420 connected between the two main wrapping zones 410. At least one of the first positioning assembly 310 and the first wrapping assembly 330 is configured to drive the electrode assembly 200 and the wrapping film 400 to move relative to each other, such that the connection zone 420 contacts and wraps the first one 212a of the two end surfaces 212, and the two main wrapping zones 410 contact and wrap the exposed portions of corresponding ones of the two main surfaces 211, respectively. The electrode assembly 200 further includes a tab part 201 disposed on the first one 212a of the two end surfaces 212 in a protruding manner, the connection zone 420 is provided with an opening 421, and the tab part 201 is configured to pass through the opening 421 as the electrode assembly 200 and the wrapping film 400 move relative to each other. The wrapping film 400 includes a side wrapping zone 430 connected to the main wrapping zone 410. The wrapping device 300 further includes a second wrapping assembly 370, and the second wrapping assembly 370 is configured to drive the side wrapping zone 430 to contact and wrap the side surface 213. The wrapping film 400 includes an end wrapping zone 440 connected to the main wrapping zone 410. The second wrapping assembly 370 is configured to drive the end wrapping zone 440 to contact and wrap the second one 212b of the two end surfaces 212. The wrapping film 400 further includes a side wrapping zone 430 and an end wrapping zone 440 that are connected to the main wrapping zone 410. The side wrapping zone 430 wraps the side surface 213, and the end wrapping zone 440 wraps the second one 212b of the two end surfaces 212. The wrapping device 300 further includes a first tape attachment assembly 380. The first tape attachment assembly 380 is configured to drive the electrode assembly 200 and a first tape 510 to move relative to each other. The first tape 510 includes a first portion and a second portion connected to each other. The first tape attachment assembly 380 is configured to attach, at a corner formed by the side surface 213 and the second one 212b of the two end surfaces 212, the first portion 511 of the first tape 510 to the side wrapping zone 430 and the second portion 512 of the first tape 510 to the end wrapping zone 440. The wrapping device 300 further includes a second tape attachment assembly 390. The second tape attachment assembly 390 is configured to drive the electrode assembly 200 and a second tape 520 to move relative to each other. The second tape 520 includes a first portion and a second portion connected to each other. The second tape attachment assembly 390 is configured to attach, at a corner formed by the side surface 213 and the main surface 211, the first portion 521 of the second tape 520 to the main wrapping zone 410 and the second portion 522 of the second tape 520 to the side wrapping zone 430. The number of the first portions 521 of the second tape 520 is two, the two first portions are located at two ends of the second portion 522 of the second tape 520, and the second tape attachment assembly 390 is configured to respectively attach the two first portions of the second tape 520 to corresponding ones of the two main wrapping zones 410.

According to some embodiments of the present application, optionally, as shown in FIG. 5, the battery processing device 600 further includes a wrapping device 300 for the electrode assembly 200. After the welding of the tab parts 201 of the first electrode assembly 250 and the second electrode assembly 251, the electrode assembly 200 can be obtained. Subsequently, the electrode assembly 200 can be wrapped with a wrapping film 400 to fix and insulate the electrode assembly 200.

As shown in FIGs. 15 to 17, the electrode assembly 200 includes an electrode main body 210. The electrode main body 210 has a first direction D1, a second direction D2, and a third direction D3 that are orthogonal to each other, and includes two main surfaces 211 disposed opposite to each other in the first direction D1, two end surfaces 212 disposed opposite to each other in the second direction D2, and two side surfaces 213 disposed opposite to each other in the third direction D3. The wrapping device 300 includes a first positioning assembly 310 and a first wrapping assembly 330. The first positioning assembly 310 is configured to position the electrode assembly 200, such that the two main surfaces 211 are at least partially exposed. The first wrapping assembly 330 is configured to position the wrapping film 400, where the wrapping film 400 includes two main wrapping zones 410 spaced apart from each other and a connection zone 420 connected between the two main wrapping zones 410. At least one of the first positioning assembly 310 and the first wrapping assembly 330 is configured to drive the electrode assembly 200 and the wrapping film 400 to move relative to each other, such that the connection zone 420 contacts and wraps the first one 212a of the two end surfaces 212, and the two main wrapping zones 410 contact and wrap the exposed portions of corresponding ones of the two main surfaces 211, respectively.

The first one 212a of the two end surfaces 212 may be connected between the two main surfaces 211 of the electrode main body 210, such that the connection zone 420 wraps the first one 212a of the two end surfaces 212 while the two main wrapping zones 410 can wrap the two main surfaces 211, respectively. In some embodiments, the two main wrapping zones 410 are separately movable relative to the connection zone 420, such that when the connection zone 420 wraps the first one 212a of the two end surfaces 212, the two main wrapping zones 410 can wrap the two main surfaces 211 by moving relative to the connection zone 420. The first wrapping assembly 330 may be configured to be capable of driving the two main wrapping zones 410 to separately move relative to the connection zone 420.

When the first positioning assembly 310 positions the electrode assembly 200, the acting position of the first positioning assembly 310 on the electrode assembly 200 may be the two main surfaces 211, the two side surfaces 213, or the second one 212b of the two end surfaces 212. When the acting position of the first positioning assembly 310 on the electrode assembly 200 is the two main surfaces 211, the two main surfaces 211 remain partially exposed, separately. When the acting position of the first positioning assembly 310 on the electrode assembly 200 is the two side surfaces 213 or the second one 212b of the two end surfaces 212, the two main surfaces 211 can remain entirely exposed, separately.

By providing the first positioning assembly 310 and the first wrapping assembly 330, the relative position relationship between the two main surfaces 211 and the two wrapping zones can be adjusted, and the relative position relationship between the first one 212a of the two end surfaces 212 and the connection zone 420 can be adjusted. When the wrapping film 400 wraps the two main surfaces 211 of the electrode main body 210 and the first one 212a of the two end surfaces 212, the stability of the wrapping process can be improved, resulting in a simpler and smoother wrapping process.

According to some embodiments of the present application, optionally, as shown in FIGs. 15 to 17, the contact time of the connection zone 420 with the first one 212a of the two end surfaces 212 is earlier than the contact time of the two main wrapping zones 410 with the corresponding ones of the two main surfaces 211, respectively.

The action of the connection zone 420 wrapping the first one 212a of the two end surfaces 212 differs significantly from the action of the two main wrapping zones 410 respectively wrapping the two main surfaces 211, making it difficult to perform simultaneously. If the contact time of the connection zone 420 with the first one 212a of the two end surfaces 212 is later than the contact time of the two main wrapping zones 410 with the corresponding ones of the two main surfaces 211, respectively, the movement of the connection zone 420 is limited by the two main wrapping zones 410, making it inconvenient to perform the action of the connection zone 420 wrapping the first one 212a of the two end surfaces 212. By setting the contact time of the connection zone 420 with the first one 212a of the two end surfaces 212 to be earlier than the contact time of the two main wrapping zones 410 with the corresponding ones of the two main surfaces 211, respectively, the action of the two main wrapping zones 410 respectively wrapping the two main surfaces 211 can be performed after the action of the connection zone 420 wrapping the first one 212a of the two end surfaces 212, thereby reducing the action difficulty of the wrapping process, and simplifying the structure of the wrapping device 300.

According to some embodiments of the present application, optionally, as shown in FIGs. 15 to 17, the wrapping process of the two main wrapping zones 410 on the corresponding ones of the two main surfaces 211 is at least partially synchronized.

The actions of the two main wrapping zones 410 respectively wrapping the two main surfaces 211 have relatively small differences, and can be performed at least partially synchronously. Such a configuration helps to simplify the wrapping process and improve the wrapping efficiency. Further, the wrapping process of the two main wrapping zones 410 on the corresponding ones of the two main surfaces 211 is performed synchronously.

According to some embodiments of the present application, optionally, as shown in FIGs. 15 to 17, before the first one 212a of the two end surfaces 212 contacts the connection zone 420, the first wrapping assembly 330 is configured such that the connection zone 420 and the two main wrapping zones 410 are coplanar with each other.

By setting the connection zone 420 and the two main wrapping zones 410 to be coplanar with each other, the stacked storage of the wrapping film 400 is facilitated, the occupied space of the wrapping film 400 is reduced, and the material feeding of the wrapping film 400 is facilitated. For example, the first wrapping assembly 330 stretches the wrapping film 400 by pulling the wrapping film 400, such that the connection zone 420 and the two main wrapping zones 410 are coplanar with each other.

According to some embodiments of the present application, optionally, as shown in FIGs. 15 to 17, the first wrapping assembly 330 is configured such that the connection zone 420 is in a suspended state, and the first one 212a of the two end surfaces 212 is configured to contact the connection zone 420 in a suspended state.

By setting the connection zone 420 in a suspended state, the interference during the process of the connection zone 420 wrapping the first one 212a of the two end surfaces 212 can be reduced. This is beneficial for improving the attachment between the connection zone 420 and the first one 212a of the two end surfaces 212, thereby improving the wrapping effect of the connection zone 420 on the first one 212a of the two end surfaces 212.

According to some embodiments of the present application, optionally, as shown in FIGs. 15 to 17, the electrode assembly 200 further includes a tab part 201 disposed in a protruding manner on the first one 212a of the two end surfaces 212. The connection zone 420 is provided with an opening 421. The tab part 201 is configured to pass through the opening 421 as the electrode assembly 200 and the wrapping film 400 move relative to each other.

The presence of the tab part 201 increases the difficulty for the wrapping film 400 to wrap the first one 212a of the two end surfaces 212. By providing the opening 421 on the connection zone 420, the opening 421 can form a clearance for the tab part 201, reducing the interference from the tab part 201 with the wrapping process, thereby improving the wrapping effect of the wrapping film 400 on the first one 212a of the two end surfaces 212.

When the electrode assembly 200 is loaded into the housing 100, firstly, the tab part 201 and the opening of the housing 100 are disposed opposite to each other and spaced apart from each other in the second direction D2, and then the electrode assembly 200 is moved toward the housing 100 in the second direction D2, such that the tab part 201 and the first one 212a of the two end surfaces 212 sequentially enter the housing 100. The connection zone 420 and the main wrapping zone 410 can constrain the electrode assembly 200, forming a circular arc-shaped surface at the joint between the main surface 211 and the first one 212a of the two end surfaces 212 of the electrode assembly 200. As a result, the first one 212a of the two end surfaces 212 enters the housing 100 more smoothly, facilitating the loading of the electrode assembly 200 into the housing 100, thereby improving the assembly efficiency and the assembly effect.

Further, no tab part 201 is disposed on the two main surfaces 211, the two side surfaces 213, and the second one 212b of the two end surfaces 212 of the electrode main body 210. The wrapping device 300 controls the wrapping film 400 to wrap the first one 212a of the two end surfaces 212 earlier than the wrapping device 300 controls the wrapping film 400 to wrap the second one 212b of the two end surfaces 212 of the electrode main body 210, as well as the two main surfaces 211 and the two side surfaces 213 of the electrode main body 210. During the process of the wrapping film 400 wrapping the electrode main body 210, the edges of the wrapping film 400 need to be fixed, such that the wrapping film 400 can be fixed to the electrode main body 210. The wrapping device 300 controls the wrapping film 400 to first wrap the first one 212a of the two end surfaces 212, such that the edge of the wrapping film 400 falls beyond the first one 212a of the two end surfaces 212. In this way, the tab part 201 does not interfere with the fixing operation performed on the edge of the wrapping film 400, thereby improving the wrapping effect of the wrapping film 400 on the electrode main body 210. In addition, the edge of the wrapping film 400 falls beyond the first one 212a of the two end surfaces 212, reducing the risk of the edge of the wrapping film 400 being detached from the electrode main body 210 due to compression when the first one 212a of the two end surfaces 212 enters the housing 100, thereby facilitating the loading of the electrode assembly 200 into the housing 100.

According to some embodiments of the present application, optionally, as shown in FIGs. 15 to 17, at least one of the first positioning assembly 310 and the first wrapping assembly 330 is configured to drive the electrode assembly 200 and the wrapping film 400 to approach each other in the second direction D2, and after the first one 212a of the two end surfaces 212 contacts the connection zone 420, to drive the electrode assembly 200 to continue to move in the second direction D2 relative to the end parts of the two main wrapping zones 410 distal to the connection zone 420. The first wrapping assembly 330 is further configured to drive the end parts of the two main wrapping zones 410 to move close to each other in the first direction D1, such that the two main wrapping zones 410 contact and wrap the exposed portions of the corresponding ones of the two main surfaces 211.

Specifically, the first positioning assembly 310 can drive the electrode assembly 200 to move toward the wrapping film 400 in the second direction D2, or the first wrapping assembly 330 can drive the wrapping film 400 to move toward the electrode assembly 200 in the second direction D2, or the first positioning assembly 310 drives the electrode assembly 200 to move toward the wrapping film 400 in the second direction D2 while the first wrapping assembly 330 drives the wrapping film 400 to move toward the electrode assembly 200 in the second direction D2, such that the electrode assembly 200 and the wrapping film 400 approach each other in the second direction D2 until the first one 212a of the two end surfaces 212 contacts and is wrapped by the connection zone 420.

The two main surfaces 211 may be connected between the two end surfaces 212 in the second direction D2. After the first one 212a of the two end surfaces 212 contacts the connection zone 420, by driving the electrode assembly 200 to continue to move in the second direction D2 relative to the end parts of the two main wrapping zones 410 distal to the connection zone 420, the projections of the two main wrapping zones 410 on the corresponding main surfaces 211 in the first direction D1 can gradually cover the exposed portions of the main surfaces 211. In this case, the first wrapping assembly 330 drives the end parts of the two main wrapping zones 410 to move close to each other in the first direction D1, such that the two main wrapping zones 410 contact and wrap the exposed portions of the corresponding ones of the two main surfaces 211.

Such a configuration enables a smooth transition of the wrapping film 400 between wrapping the first one 212a of the two end surfaces 212 and wrapping the two main surfaces 211, simplifying the operation of the wrapping process and helping to improve the wrapping efficiency.

According to some embodiments of the present application, optionally, as shown in FIGs. 15, 16, and 18, the first positioning assembly 310 includes an electrode clamp 311. The electrode clamp 311 is configured to clamp and fix the electrode main body 210 from the outer sides of the two side surfaces 213 in the third direction D3, or configured to clamp and fix the electrode main body 210 from the outer sides of the two main surfaces 211 in the first direction D1.

When the electrode clamp 311 clamps and fixes the electrode main body 210, the electrode clamp 311 and the electrode main body 210 can remain relatively fixed. By configuring the electrode clamp 311 to clamp and fix the electrode main body 210, the first positioning assembly 310 can position the electrode assembly 200. By configuring the electrode clamp 311 to clamp and fix the electrode main body 210 from the outer sides of the two side surfaces 213 in the third direction D3, the electrode clamp 311 can maintain clearance from the two main surfaces 211 of the electrode main body 210, which is beneficial to increasing the area of the exposed portions of the two main surfaces 211 and improving the wrapping effect on the two main surfaces 211. The area of the two main surfaces 211 is greater than the area of the two side surfaces 213. By configuring the electrode clamp 311 to clamp and fix the electrode main body 210 from the outer sides of the two main surfaces 211 in the first direction D1, the stability of clamping and fixing the electrode main body 210 by the electrode clamp 311 is improved.

Further, the electrode main body 210 includes two electrode main body parts 220 described below. By configuring the electrode clamp 311 to clamp and fix the electrode main body 210 from the outer sides of the two main surfaces 211 in the first direction D1, it is beneficial for the two electrode main body parts 220 to remain relatively fixed, and the stability of clamping and fixing the electrode main body 210 by the electrode clamp 311 is improved.

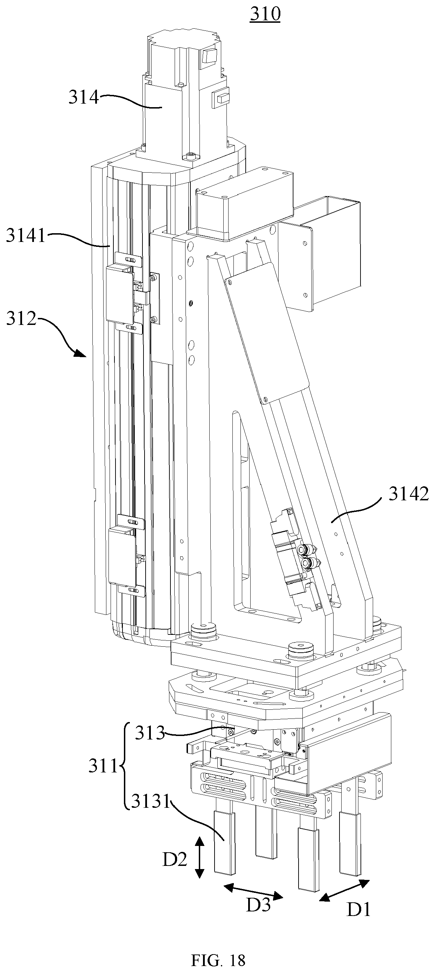

Optionally, as shown in FIGs. 15 and 18, the electrode clamp 311 is in transmission connection with an electrode clamping cylinder 313, and the electrode clamping cylinder 313 may control the electrode clamp 311 to clamp or release the electrode main body 210.

According to some embodiments of the present application, optionally, as shown in FIGs. 15 to 17, the first positioning assembly 310 includes an electrode transmission mechanism 312. The electrode transmission mechanism 312 is configured to drive the electrode assembly 200 to move in the second direction D2 toward the side where the wrapping film 400 is located, and after the first one 212a of the two end surfaces 212 contacts the connection zone 420, to drive the first one 212a of the two end surfaces 212 and the connection zone 420 to continue to move synchronously in the second direction D2.

The electrode transmission assembly can provide power for the movement of the electrode assembly 200 in the second direction D2. Such a configuration enables a smooth transition of the wrapping film 400 between wrapping the first one 212a of the two end surfaces 212 and wrapping the two main surfaces 211, simplifying the operation of the wrapping process and helping to improve the wrapping efficiency.

Further, the electrode transmission mechanism 312 may be in transmission connection with the electrode clamp 311. The electrode transmission mechanism 312 can drive the electrode assembly 200 to move in the second direction D2 by driving the electrode clamp 311 to move in the second direction D2.

Optionally, the electrode transmission mechanism 312 includes an electrode transmission motor 314, a screw rod, and a slider. The electrode transmission motor 314 can drive the screw rod to rotate, and the slider is sleeved over the screw rod and is engaged with the screw rod through threads. The slider and the electrode assembly 200 are oppositely and fixedly disposed, and the rotation axis of the screw rod is set parallel to the second direction D2. When the electrode transmission motor 314 drives the screw rod to rotate, the slider may be driven to move in the direction of the rotation axis of the screw rod, so as to drive the electrode assembly 200 to move in the second direction D2.

According to some embodiments of the present application, optionally, as shown in FIGs. 15 and 18, the electrode transmission mechanism 312 includes an electrode transmission motor 314, a first electrode support 3141, and a second electrode support 3142. The electrode transmission motor 314 is disposed on the first electrode support 3141, and the electrode transmission motor 314 is configured to drive the second electrode support 3142 to move relative to the first electrode support 3141 in the second direction D2. The electrode clamp 311 is disposed on the second electrode support 3142 and includes an electrode clamping jaw 3131 and an electrode clamping cylinder 313. The electrode clamping cylinder 313 is configured to drive the electrode clamping jaw 3131 to clamp and fix the electrode main body 210.

Such a configuration facilitates the stable movement of the electrode assembly 200, and can improve the accuracy of positioning the electrode assembly 200.

According to some embodiments of the present application, optionally, as shown in FIGs. 15 to 17, the first wrapping assembly 330 includes two first wrapping sub-assemblies 331 spaced apart from each other. Each first wrapping sub-assembly 331 includes a film clamp 332 and a first film transmission mechanism 333. Two film clamps 332 clamp and fix two ends of the wrapping film 400 distal to the connection zone 420, respectively. The first film transmission mechanism 333 drives the two film clamps 332 to move close to each other in the first direction D1, such that the region of the main wrapping zone 410 that is not clamped by the film clamp 332 can be bent toward the corresponding main surface 211 relative to the connection zone 420.

In some embodiments, two ends of the wrapping film 400 distal to the connection zone 420 may be located in the two main wrapping zones 410. In this case, the main wrapping zone 410 wraps and is clamped by the film clamp 332. In some other embodiments, two ends of the wrapping film 400 distal to the connection zone 420 may be located outside the two main wrapping zones 410. In this case, the main wrapping zone 410 is not clamped by the film clamp 332. For example, the wrapping film 400 includes an end wrapping zone 440 described below. Two ends of the wrapping film 400 distal to the connection zone 420 may be located in the end wrapping zone 440.

When the first film transmission mechanism 333 drives the two film clamps 332 to move close to each other in the first direction D1, the two film clamps 332 may drive the two ends of the wrapping film 400 distal to the connection zone 420 to move close to each other, thereby driving the two main wrapping zones 410 to move toward the corresponding main surfaces 211. When the main wrapping zone 410 moves toward the corresponding main surface 211, the region of the main wrapping zone 410 that is not clamped by the film clamp 332 can be bent relative to the connection zone 420.

In the first direction D1, the acting forces respectively exerted by the two film clamps 332 on the connection zone 420 through the two main wrapping zones 410 can cancel each other out. As a result, after the connection zone 420 contacts the electrode main body 210, the connection zone and the electrode main body 210 can remain relatively fixed. Meanwhile, in the second direction D2, the connection zone 420 is supported by the electrode main body 210, such that the connection zone 420 can be used as a fulcrum for the bending of the region of the main wrapping zone 410 that is not clamped by the film clamp 332.

By configuring the two film clamps 332 to respectively clamp and fix the two ends of the wrapping film 400 distal to the connection zone 420, the control of the movement of the main wrapping zone 410 is facilitated. In addition, this helps the region of the main wrapping zone 410 that is not clamped by the film clamp 332 to remain in an extended state, and facilitates the action of wrapping the main surface 211 by the main wrapping zone 410, thereby improving the wrapping effect of the main wrapping zone 410 on the main surface 211.

Optionally, as shown in FIGs. 15, 16, and 19, the film clamp 332 is in transmission connection with a film clamping cylinder 336, and the film clamping cylinder 336 may control the film clamp 332 to clamp or release the wrapping film 400.

Optionally, as shown in FIGs. 15, 16, and 19, the first film transmission mechanism 333 includes a first film transmission motor 337, and two first film transmission motors 337 are configured to drive the two film clamps 332 to move close to each other in the first direction D1, respectively. Specifically, the first film transmission mechanism 333 further includes a screw rod and a slider. The first film transmission motor 337 can drive the screw rod to rotate, and the slider is sleeved over the screw rod and is engaged with the screw rod through threads. The slider and the film clamp 332 are oppositely and fixedly disposed, and the rotation axis of the screw rod is set parallel to the first direction D1. When the first film transmission motor 337 drives the screw rod to rotate, the slider may be driven to move in the direction of the rotation axis of the screw rod, so as to drive the film clamp 332 to move in the first direction D1.

Optionally, as shown in FIGs. 15, 16, and 19, each film clamp 332 is provided with two film clamping jaws 338, each film clamping jaw 338 is configured to clamp one corner of the wrapping film 400, and four film clamping jaws 338 clamp four corners of the wrapping film 400, respectively.

According to some embodiments of the present application, optionally, as shown in FIGs. 15, 16, and 19, the first film transmission mechanism 333 includes a first film transmission motor 337, a first film support 3371, and a second film support 342. The first film transmission motor 337 is disposed on the first film support 3371, and the first film transmission motor 337 is configured to drive the second film support 342 to move relative to the first film support 3371 in the first direction D1. The film clamp 332 is disposed on the second film support 342 and includes a film clamping jaw 338 and a film clamping cylinder 336. The film clamping cylinder 336 is configured to drive the film clamping jaw 338 to clamp and fix the wrapping film 400.

Such a configuration facilitates the stable movement of the wrapping film 400, and can improve the accuracy of positioning the wrapping film 400.

According to some embodiments of the present application, optionally, as shown in FIGs. 15, 16, and 19, each first wrapping sub-assembly 331 further includes a second film transmission mechanism 334. Two second film transmission mechanisms 334 drive the corresponding film clamps 332 to rotate, respectively, such that the movement trend of the region of the wrapping film 400 that is clamped by the film clamp 332 relative to the connection zone 420 remains consistent with the bending trend of the unclamped region of the main wrapping zone 410 relative to the connection zone 420.

After the unclamped region of the main wrapping zone 410 is bent relative to the connection zone 420, the wrapping can be formed on the main surface 211. After the unclamped region of the main wrapping zone 410 wraps the main surface 211, the film clamp 332 may release the clamping of the wrapping film 400. The region of the wrapping film 400 that is clamped by the film clamp 332 also needs to be wrapped onto the electrode main body 210. By setting the movement trend of the region of the wrapping film 400 that is clamped by the film clamp 332 relative to the connection zone 420 to be consistent with the bending trend of the unclamped region of the main wrapping zone 410 relative to the connection zone 420, the region of the wrapping film 400 that is clamped by the film clamp 332 is closer to the electrode main body 210, thereby facilitating the wrapping of the region of the wrapping film 400 that is clamped by the film clamp 332 on the electrode main body 210.

In addition, after the film clamp 332 releases the clamping of the wrapping film 400, by setting the movement trend of the region of the wrapping film 400 that is clamped by the film clamp 332 relative to the connection zone 420 to be consistent with the bending trend of the unclamped region of the main wrapping zone 410 relative to the connection zone 420, the adverse effect of the region of the wrapping film 400 that is clamped by the film clamp 332 on the unclamped region of the main wrapping zone 410 wrapping the main surface 211 can be reduced, thereby reducing the risk that the unclamped region of the main wrapping zone 410 falls off from the main surface 211.

Optionally, as shown in FIGs. 15, 16, and 19, the second film transmission mechanism 334 includes a fourth film support 339 and a second film transmission motor 340. A film clamp 332 is disposed on the fourth film support 339, and the second film transmission motor 340 is configured to drive the fourth film support 339 to rotate. Further, the film clamping cylinder 336 is fixed to the fourth film support 339.

According to some embodiments of the present application, optionally, as shown in FIGs. 15, 16, and 19, the first film transmission mechanism 333 includes a first film transmission motor 337, a first film support 3371, and a second film support 342. The first film transmission motor 337 is disposed on the first film support 3371, and the first film transmission motor 337 is configured to drive the second film support 342 to move relative to the first film support 3371 in the first direction D1. The second film transmission mechanism 334 includes a second film transmission motor 340. The second film transmission motor 340 is disposed on the second film support 342 and drives the film clamp 332 to rotate. The film clamp 332 includes a film clamping jaw 338 and a film clamping cylinder 336. The film clamping cylinder 336 is configured to drive the film clamping jaw 338 to clamp and fix the wrapping film 400.

Such a configuration can improve the movement flexibility of the wrapping film 400, thereby improving the wrapping effect.

According to some embodiments of the present application, optionally, as shown in FIGs. 15, 16, and 19, each first wrapping sub-assembly 331 further includes a third film transmission mechanism 335. Two third film transmission mechanisms 335 drive the corresponding film clamps 332 to move in the second direction D2 toward the side where the electrode main body 210 is located, respectively.

When the film clamp 332 moves in the second direction D2 toward the side where the electrode main body 210 is located, the electrode assembly 200 can remain fixed or move in the second direction D2 toward the wrapping film 400. In such a configuration, by driving the film clamp 332 to move in the second direction D2 toward the side where the electrode main body 210 is located, the first one 212a of the two end surfaces 212 can contact the connection zone 420, and can drive the main wrapping zone 410 to move in the second direction D2 toward the side where the electrode main body 210 is located. In addition, the projections of the two main wrapping zones 410 on the corresponding main surfaces 211 in the first direction D1 can gradually cover the exposed portions of the main surfaces 211, thereby facilitating wrapping the main surfaces 211 by the main wrapping zones 410.

Optionally, as shown in FIGs. 15, 16, and 19, the first positioning assembly 310 includes an electrode transmission mechanism 312. The electrode transmission mechanism 312 is configured to drive the electrode assembly 200 to move in the second direction D2 toward the side where the wrapping film 400 is located, and after the first one 212a of the two end surfaces 212 contacts the connection zone 420, to drive the first one 212a of the two end surfaces 212 and the connection zone 420 to continue to synchronously move in the second direction D2. The third film transmission mechanism 335 drives the corresponding film clamp 332 to move in the second direction D2 toward the side distal to the electrode main body 210 after the first one 212a of the two end surfaces 212 contacts the connection zone 420.

The direction in which the film clamp 332 moves in the second direction D2 may be the same as the direction in which the electrode assembly 200 moves in the second direction D2, such that the wrapping film 400 and the electrode assembly 200 can move to a new station synchronously. In the process that the wrapping film 400 and the electrode assembly 200 move synchronously to a new station, the displacement travel of the film clamp 332 moving in the second direction D2 toward the side distal to the electrode main body 210 is less than the displacement travel of the electrode assembly 200 moving in the second direction D2 toward the side where the wrapping film 400 is located, such that a relative displacement between the wrapping film 400 and the electrode assembly 200 is created. Thus, the first one 212a of the two end surfaces 212 can contact the connection zone 420, and can drive the main wrapping zone 410 to move in the second direction D2 toward the side where the electrode main body 210 is located. In addition, the projections of the two main wrapping zones 410 on the corresponding main surfaces 211 in the first direction D1 can gradually cover the exposed portions of the main surfaces 211, thereby facilitating wrapping the main surfaces 211 by the main wrapping zones 410.

Optionally, as shown in FIGs. 15, 16, and 19, the third film transmission mechanism 335 is provided with a third film transmission motor 341, and the third film transmission motor 341 is configured to drive the film clamp 332 to move in the second direction D2. Specifically, the third film transmission mechanism 335 further includes a screw rod and a slider. The third film transmission motor 341 can drive the screw rod to rotate, and the slider is sleeved over the screw rod and is engaged with the screw rod through threads. The slider and the film clamp 332 are oppositely and fixedly disposed, and the rotation axis of the screw rod is set parallel to the second direction D2. When the third film transmission motor 341 drives the screw rod to rotate, the slider may be driven to move in the direction of the rotation axis of the screw rod, so as to drive the film clamp 332 to move in the second direction D2.

Optionally, as shown in FIGs. 15, 16, and 19, the first wrapping sub-assembly 331 is provided with a second film support 342 and a third film support 343. The second film support 342 extends in the second direction D2, and the third film support 343 is slidably disposed on the second film support 342 in the second direction D2. The second film transmission mechanism 334 and the film clamp 332 are disposed on the third film support 343. The third film transmission mechanism 335 is in transmission connection with the third film support 343, and the third film transmission mechanism 335 may drive the third film support 343 to move in the second direction D2, such that the third film support 343 drives the second film transmission mechanism 334 and the film clamp 332 to move in the second direction D2. The third film transmission mechanism 335 is disposed on the second film support 342, the first film transmission mechanism 333 is in transmission connection with the second film support 342, and the first film transmission mechanism 333 may drive the second film support 342 to move in the first direction D1, such that the second film support 342 drives the third film transmission mechanism 335, the third film support 343, the second film transmission mechanism 334, and the film clamp 332 to move in the first direction D1.

According to some embodiments of the present application, optionally, as shown in FIGs. 15, 16, and 19, the first film transmission mechanism 333 includes a first film transmission motor 337, a first film support 3371, and a second film support 342. The first film transmission motor 337 is disposed on the first film support 3371, and the first film transmission motor 337 is configured to drive the second film support 342 to move relative to the first film support 3371 in the first direction D1. The third film transmission mechanism 335 includes a third film transmission motor 341 and a third film support 343. The third film transmission motor 341 is disposed on the second film support 342, and drives the third film support 343 to move relative to the second film support 342 in the second direction D2. The second film transmission mechanism 334 includes a second film transmission motor 340. The second film transmission motor 340 is disposed on the third film support 343 and drives the film clamp 332 to rotate. The film clamp 332 includes a film clamping jaw 338 and a film clamping cylinder 336. The film clamping cylinder 336 is configured to drive the film clamping jaw 338 to clamp and fix the wrapping film 400.

Such a configuration can further improve the movement flexibility of the wrapping film 400, thereby improving the wrapping effect.

According to some embodiments of the present application, optionally, as shown in FIGs. 15, 20, and 21, the wrapping device 300 further includes a second positioning assembly 350, and the second positioning assembly 350 is configured to clamp and fix the wrapping film 400 and the electrode main body 210 from the outer sides of the two main wrapping zones 410.

After the two main wrapping zones 410 wrap the two main surfaces 211 of the electrode main body 210, the second positioning assembly 350 may be used to clamp and fix the wrapping film 400 and the electrode main body 210. By providing the second positioning assembly 350, the detachment of the main wrapping zone 410 from the main surface 211 of the electrode main body 210 can be limited, thereby improving the stability of wrapping the main surface 211 of the electrode main body 210 by the main wrapping zone 410.

According to some embodiments of the present application, optionally, as shown in FIGs. 15, 20, and 21, the second positioning assembly 350 is a carrier jig capable of synchronously moving with the wrapping film 400 and the electrode main body 210.

By configuring the second positioning assembly 350 as the carrier jig capable of synchronously moving with the wrapping film 400 and the electrode main body 210, the wrapping film 400 and the electrode main body 210 can be conveniently transferred between different stations, improving the stability of the wrapping process of the main wrapping film 400 on the electrode main body 210.

Optionally, the first positioning assembly 310 is a robotic arm with a clamping function.

According to some embodiments of the present application, optionally, as shown in FIGs. 15, 20, and 21, the first positioning assembly 310 is configured to drive the electrode assembly 200 to move in the second direction D2 toward the side where the wrapping film 400 is located, such that the electrode main body 210 and the wrapping film 400 are inserted into the second positioning assembly 350.

After the electrode main body 210 and the wrapping film 400 are inserted into the second positioning assembly 350, the second positioning assembly 350 may position the electrode assembly 200. Before and after the wrapping film 400 wraps the main surface 211 of the electrode main body 210, the first positioning assembly 310 and the second positioning assembly 350 can alternately position the electrode assembly 200, such that the movement action of the electrode assembly 200 between different stations can be smoother. In addition, the action and structure of the second positioning assembly 350 positioning the electrode assembly 200 can be simplified, which is beneficial to improving the wrapping efficiency.

Optionally, as shown in FIGs. 15, 20, and 21, the second positioning assembly 350 is provided with two limiting members 353 that can move away from each other or close to each other. When the electrode main body 210 and the wrapping film 400 are inserted into the second positioning assembly 350, the two limiting members 353 can move away from each other, thereby facilitating the insertion of the electrode main body 210 and the wrapping film 400 into the second positioning assembly 350.

According to some embodiments of the present application, optionally, as shown in FIGs. 15, 20, and 21, each second positioning assembly 350 includes a fixed support 351, an opening-closing mechanism (not labeled), and two limiting members 353. The two limiting members 353 are movably disposed on the fixed support 351 in the first direction D1, and form a limiting gap 354 therebetween. The limiting gap 354 allows the electrode main body 210 and the wrapping film 400 to be inserted therein. The opening-closing mechanism is configured to drive the two limiting members 353 to move close to or away from each other.

Such a configuration can facilitate the insertion of the electrode main body 210 and the wrapping film 400 into the limiting gap 354 while enhancing the clamping effect on the electrode main body 210 and the wrapping film 400.

According to some embodiments of the present application, optionally, as shown in FIGs. 15, 20, and 21, each opening-closing mechanism includes an elastic member 355 and an opening mechanism (not shown). The elastic member 355 is disposed between the two limiting members 353 and is configured to drive the two limiting members 353 to move close to each other through its own elasticity. The opening mechanism is configured to drive the two limiting members 353 away from each other.

By providing the elastic member 355, the second positioning assembly 350 can adaptively adjust the clamping force on the electrode main body 210 and the wrapping film 400.

Optionally, as shown in FIGs. 15, 20, and 21, a hook plate 356 is disposed on the limiting member 353. The opening mechanism drives the two limiting members 353 away from each other by hooking and driving the hook plate 356.

According to some embodiments of the present application, optionally, as shown in FIGs. 15, 20, and 21, the opening-closing mechanism includes a rotating member 357. Two ends of the rotating member 357 are connected to the two limiting members 353, respectively. The middle region of the rotating member 357 is configured to be rotatably connected to the fixed support 351, and the rotating member 357 is further configured to drive, when the first one of the two limiting members 353 moves in the first direction D1, the other limiting member 353 to move in the opposite direction.

Between the two limiting members 353, the rotating member 357 can serve the functions of motion transmission and direction change. By providing the rotating member 357, the two limiting members 353 can achieve synchronized movement in opposite movement directions.

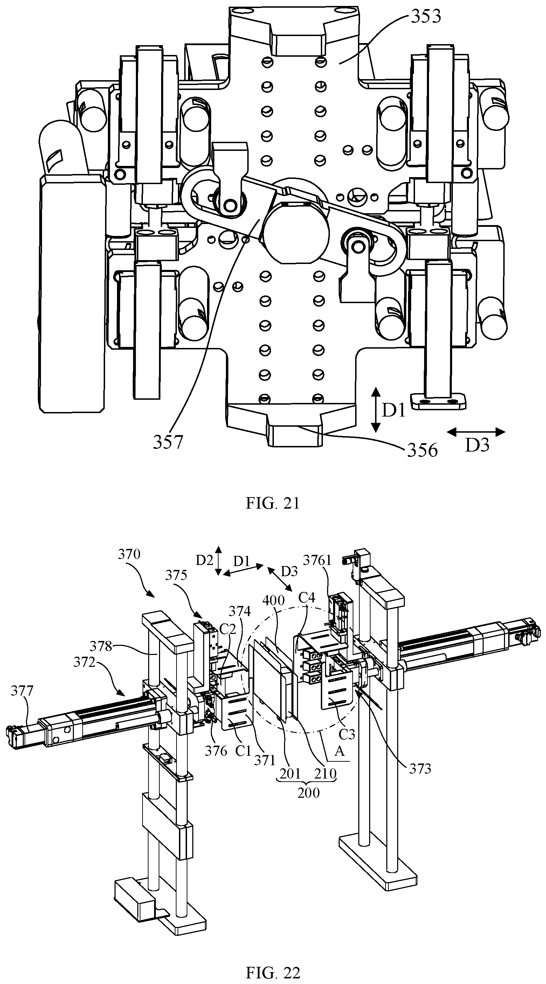

According to some embodiments of the present application, optionally, as shown in FIGs. 22 to 25, the wrapping film 400 includes a side wrapping zone 430 connected to the main wrapping zone 410. The wrapping device 300 further includes a second wrapping assembly 370, and the second wrapping assembly 370 is configured to drive the side wrapping zone 430 to contact and wrap the side surface 213.

The second wrapping assembly 370 can adjust the relative position relationship between the electrode assembly 200 and the side wrapping zone 430. By providing the second wrapping assembly 370, the side wrapping zone 430 wraps the side surface 213, thereby improving the wrapping effect of the wrapping film 400 on the electrode main body 210.

According to some embodiments of the present application, optionally, as shown in FIGs. 22 to 25, the second wrapping assembly 370 includes a side surface pressing plate 371, a first pressing plate transmission mechanism 372, and a second pressing plate transmission mechanism 373. The first pressing plate transmission mechanism 372 is configured to drive the side surface pressing plate 371 in the first direction D1, such that the side surface pressing plate 371 pushes the side wrapping zone 430 to bend toward the side surface 213 relative to the main wrapping zone 410. The second pressing plate transmission mechanism 373 is configured to drive the side surface pressing plate 371 in the third direction D3, such that the side surface pressing plate 371 presses the side wrapping zone 430 onto the side surface 213.

After the main wrapping zone 410 wraps the main surface 211 of the electrode main body 210, the side wrapping zone 430 and the main wrapping zone 410 may be coplanar or approximately coplanar. The movement of the side surface pressing plate 371 in the first direction D1 can push the side wrapping zone 430 to bend relative to the main wrapping zone 410. During the bending process of the side wrapping zone 430 relative to the main wrapping zone 410, the side wrapping zone gradually approaches the side surface 213 of the electrode main body 210. After the side surface pressing plate 371 pushes the side wrapping zone 430 to bend toward the side surface 213 relative to the main wrapping zone 410, in the third direction D3, the side surface pressing plate 371 and the side surface 213 of the electrode main body 210 may be disposed opposite to each other and spaced apart from each other, and the side wrapping zone 430 is located between the side surface pressing plate 371 and the side surface 213 of the electrode main body 210. In this case, the side surface pressing plate 371 moves toward the electrode main body 210 in the third direction D3 to press the side wrapping zone 430 onto the side surface 213 of the electrode main body 210, such that the side wrapping zone 430 wraps the side surface 213 of the electrode main body 210.

Such a configuration enables a smooth transition between the action of the second wrapping assembly 370 bending the side wrapping zone 430 and the action of the side wrapping zone 430 wrapping the side surface 213. This helps simplify the actions and structure of the second wrapping assembly 370 and improves the wrapping efficiency.

Optionally, as shown in FIGs. 22 to 25, each main wrapping zone 410 may be connected with two side wrapping zones 430. The two side wrapping zones 430 connected to the first one of the two main wrapping zones 410 may be denoted as B1 and B2, and the two side wrapping zones 430 connected to the second one of the two main wrapping zones 410 may be denoted as B3 and B4. The second wrapping assembly 370 includes four side surface pressing plates 371 that are in a one-to-one correspondence with the four side wrapping zones 430. The four side surface pressing plates 371 may be denoted as C1, C2, C3, and C4. C1, C2, C3, and C4 are configured to bend B1, B2, B3, and B4 toward the side surface 213 and press B1, B2, B3, and B4 onto the side surface 213 of the electrode main body 210 in a one-to-one correspondence.

Before the four side surface pressing plates 371 separately move in the first direction D1, the four side wrapping zones 430 are located between the four side surface pressing plates 371. The direction in which C1 and C2 move in the first direction D1 is opposite to the direction in which C3 and C4 move in the first direction D1, such that C1 and C2 can approach C3 and C4, C1 and C2 can bend B1 and B2 toward the side surface 213, respectively, and C3 and C4 can bend B3 and B4 toward the side surface 213, respectively.

Before C1 and C2 separately move in the third direction D3, C1 and C2 are spaced apart from and disposed opposite to the two side surfaces 213, respectively. B1 is located between C1 and one side surface 213, and B2 is located between C2 and the other side surface 213. The direction in which C1 moves in the third direction D3 toward the electrode main body 210 is opposite to the direction in which C2 moves in the third direction D3 toward the electrode main body 210, such that C1 and C2 can move close to each other, and C1 and C2 can press B1 and B2 onto the side surface 213 of the electrode main body 210, respectively. Before C3 and C4 separately move in the third direction D3, C3 and C4 are spaced apart from and disposed opposite to the two side surfaces 213, respectively. B3 is located between C3 and one side surface 213, and B4 is located between C4 and the other side surface 213. The direction in which C3 moves in the third direction D3 toward the electrode main body 210 is opposite to the direction in which C4 moves in the third direction D3 toward the electrode main body 210, such that C3 and C4 can move close to each other, and C3 and C4 can press B3 and B4 onto the side surface 213 of the electrode main body 210, respectively.

Further, there are two side wrapping zones 430 connected to each main wrapping zone 410. One of the two side wrapping zones 430 connected to the first one of the two main wrapping zones 410 and one of the two side wrapping zones 430 connected to the second one of the two main wrapping zones 410 jointly cover one side surface 213 of the electrode main body 210, and the other of the two side wrapping zones 430 connected to the first one of the two main wrapping zones 410 and the other of the two side wrapping zones 430 connected to the second one of the two main wrapping zones 410 jointly cover the other side surface 213 of the electrode main body 210. Further, the two side wrapping zones 430 covering the same side surface 213 of the electrode main body 210 may overlap each other and partially coincide.

According to some embodiments of the present application, optionally, as shown in FIGs. 22 to 25, the wrapping film 400 includes an end wrapping zone 440 connected to the main wrapping zone 410. The second wrapping assembly 370 is configured to drive the end wrapping zone 440 to contact and wrap the second one 212b of the two end surfaces 212.

The second wrapping assembly 370 can adjust the relative position relationship between the electrode assembly 200 and the end wrapping zone 440. By providing the second wrapping assembly 370, the end wrapping zone 440 wraps the second one 212b of the two end surfaces 212, thereby improving the wrapping effect of the wrapping film 400 on the electrode main body 210.

According to some embodiments of the present application, optionally, as shown in FIGs. 22 to 25, the second wrapping assembly 370 includes an end surface pressing plate 374, a first pressing plate transmission mechanism 372, and a third pressing plate transmission mechanism 375. The first pressing plate transmission mechanism 372 is configured to drive the end surface pressing plate 374 in the first direction D1, such that the end surface pressing plate 374 pushes the end wrapping zone 440 to bend toward the second one 212b of the two end surfaces 212 relative to the main wrapping zone 410. The third pressing plate transmission mechanism 375 is configured to drive the end surface pressing plate 374 in the second direction D2, such that the end surface pressing plate 374 presses the end wrapping zone 440 onto the second one 212b of the two end surfaces 212.

After the main wrapping zone 410 wraps the main surface 211 of the electrode main body 210, the end wrapping zone 440 and the main wrapping zone 410 may be coplanar or approximately coplanar. The movement of the end surface pressing plate 374 in the first direction D1 can push the end wrapping zone 440 to bend relative to the main wrapping zone 410. During the bending process of the end wrapping zone 440 relative to the main wrapping zone 410, the end wrapping zone gradually approaches the second one 212b of the two end surfaces 212. After the end surface pressing plate 374 pushes the end wrapping zone 440 to bend toward the second one 212b of the two end surfaces 212 relative to the main wrapping zone 410, in the second direction D2, the end surface pressing plate 374 and the second one 212b of the two end surfaces 212 may be disposed opposite to each other and spaced apart from each other, and the end wrapping zone 440 is located between the end surface pressing plate 374 and the second one 212b of the two end surfaces 212. In this case, the end surface pressing plate 374 moves toward the electrode main body 210 in the second direction D2 to press the end wrapping zone 440 onto the second one 212b of the two end surfaces 212, such that the end wrapping zone 440 wraps the second one 212b of the two end surfaces 212.

Optionally, as shown in FIGs. 22 to 25, each main wrapping zone 410 is connected with one end wrapping zone 440, and the second wrapping assembly 370 includes two end surface pressing plates 374. The movement of the two end surface pressing plates 374 separately in the first direction D1 enables the two end surface pressing plates 374 to approach each other, thereby enabling the two end wrapping zones 440 to bend toward the second one 212b of the two end surfaces 212, respectively. The movement of the two end surface pressing plates 374 separately in the second direction D2 enables the two end wrapping zones 440 to cover the second one 212b of the two end surfaces 212, respectively.

In some embodiments, the two end wrapping zones 440 may overlap with each other and partially coincide. One of the two end surface pressing plates 374 may first bend one end wrapping zone 440 toward the second one 212b of the two end surfaces 212 and press the end wrapping zone onto the second one 212b of the two end surfaces 212. The other one of the two end surface pressing plates 374 may then bend the other end wrapping zone 440 toward the second one 212b of the two end surfaces 212 and press the other end wrapping zone onto the second one 212b of the two end surfaces 212.

In some embodiments, the second pressing plate transmission mechanism 373 includes a first pressing plate cylinder 376, and the third pressing plate transmission mechanism 375 includes a second pressing plate cylinder 3761. The second pressing plate cylinder 3761 is configured to provide power for driving the end surface pressing plate 374 in the second direction D2, and the first pressing plate cylinder 376 is configured to provide power for driving the side surface pressing plate 371 in the third direction D3. In some other embodiments, the second pressing plate transmission mechanism 373 and the third pressing plate transmission mechanism 375 may be disposed in a linked manner. For example, the second pressing plate transmission mechanism 373 and the third pressing plate transmission mechanism 375 share one cylinder to simultaneously provide power for driving the end surface pressing plate 374 in the second direction D2 and driving the side surface pressing plate 371 in the third direction D3, such that when the side surface pressing plate 371 moves in the third direction D3 toward the side wrapping zone 430, the end surface pressing plate 374 moves in the second direction D2 toward the end wrapping zone 440. In this way, the wrapping time can be reduced, thereby improving the wrapping efficiency.

Optionally, no relative displacement is generated between the end surface pressing plate 374 and the side surface pressing plate 371 in the first direction D1. The first pressing plate transmission mechanism 372 can simultaneously drive the end surface pressing plate 374 and the side surface pressing plate 371 in the first direction D1. In this way, the wrapping efficiency can be improved. Further, when driving the end surface pressing plate 374 in the first direction D1, the first pressing plate transmission mechanism 372 can synchronously drive the third pressing plate transmission mechanism 375 in the first direction D1. When driving the side surface pressing plate 371 in the first direction D1, the first pressing plate transmission mechanism 372 can synchronously drive the second pressing plate transmission mechanism 373 in the first direction D1.

Optionally, as shown in FIGs. 22 to 25, a pressing plate transmission motor 377 is disposed on the first pressing plate transmission mechanism 372, and the pressing plate transmission motor 377 is configured to provide power for driving the end surface pressing plate 374 and the side surface pressing plate 371 in the first direction D1. Further, the pressing plate transmission motor 377 is configured to drive the second pressing plate transmission mechanism 373, the third pressing plate transmission mechanism 375, the end surface pressing plate 374, and the side surface pressing plate 371 in the first direction D1.

Optionally, as shown in FIGs. 22 to 25, the second wrapping assembly 370 includes a first pressing plate support 378 and a second pressing plate support 379. The second pressing plate support 379 is slidably disposed on the first pressing plate support 378 in the first direction D1. The first pressing plate transmission mechanism 372 is disposed on the first pressing plate support 378 and is in transmission connection with the second pressing plate support 379, so as to drive the second pressing plate support 379 to move in the first direction D1 relative to the first pressing plate support 378. The side surface pressing plate 371, the second pressing plate transmission mechanism 373, the end surface pressing plate 374, and the third pressing plate transmission mechanism 375 may be disposed on the second pressing plate support 379 and move in the first direction D1 synchronously with the second pressing plate support 379.

Further, the first pressing plate support 378 and the second pressing plate support 379 are oppositely and fixedly disposed.

Optionally, as shown in FIGs. 22 to 25, the end surface pressing plate 374 is provided with a position-adjustable end limiting block 3741. The end limiting block 3741 is configured to abut against the main wrapping zone 410 to limit the electrode assembly 200 in the first direction D1. By adjusting the position of the end limiting block 3741 on the end surface pressing plate 374, electrode assemblies 200 of different dimensions can be matched, thereby improving the compatibility of the end surface pressing plate 374 with electrode assemblies 200 of different dimensions. Further, the end limiting block 3741 is provided with a circular arc-shaped surface facing the main wrapping zone 410, thereby improving the attachment between the end limiting block and the main wrapping zone 410.

Optionally, as shown in FIGs. 22 to 25, the side surface pressing plate 371 is provided with a position-adjustable side limiting block 3711. The side limiting block 3711 is configured to abut against the main wrapping zone 410 to limit the electrode assembly 200 in the first direction D1. By adjusting the position of the side limiting block 3711 on the side surface pressing plate 371, electrode assemblies 200 of different dimensions can be matched, thereby improving the compatibility of the side surface pressing plate 371 with electrode assemblies 200 of different dimensions. Further, the side limiting block 3711 is provided with a circular arc-shaped surface facing the main wrapping zone 410, thereby improving the attachment between the side limiting block and the main wrapping zone 410.

According to some embodiments of the present application, optionally, as shown in FIGs. 22 to 25, the first pressing plate transmission mechanism 372 includes a pressing plate transmission motor 377, a first pressing plate support 378, and a second pressing plate support 379. The pressing plate transmission motor 377 is disposed on the first pressing plate support 378 and drives the second pressing plate support 379 to move relative to the first pressing plate support 378. The second pressing plate transmission mechanism 373 includes a first pressing plate cylinder 376. The first pressing plate cylinder 376 is disposed on the second pressing plate support 379, and the first pressing plate cylinder 376 drives the side surface pressing plate 371 to move relative to the second pressing plate support 379. The third pressing plate transmission mechanism 375 includes a second pressing plate cylinder 3761. The second pressing plate cylinder 3761 is disposed on the second pressing plate support 379, and the second pressing plate cylinder 3761 drives the end surface pressing plate 374 to move relative to the second pressing plate support 379.

Such a configuration can improve the movement flexibility of the side surface pressing plate 371 and the end surface pressing plate 374, thereby improving the wrapping effect.

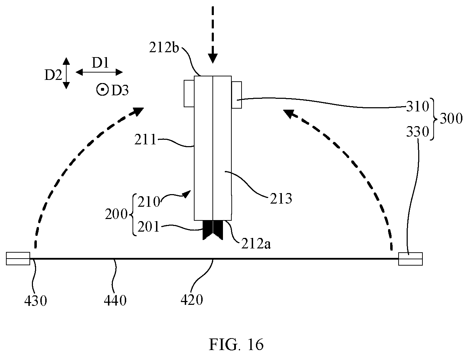

According to some embodiments of the present application, optionally, as shown in FIGs. 16, 17, 26, and 17, the wrapping film 400 further includes a side wrapping zone 430 and an end wrapping zone 440 that are connected to the main wrapping zone 410. The side wrapping zone 430 wraps the side surface 213, and the end wrapping zone 440 wraps the second one 212b of the two end surfaces 212. The wrapping device 300 further includes a first tape attachment assembly 380. The first tape attachment assembly 380 is configured to drive the electrode assembly 200 and a first tape 510 to move relative to each other. The first tape 510 includes a first portion and a second portion connected to each other. The first tape attachment assembly 380 is configured to attach, at a corner formed by the side surface 213 and the second one 212b of the two end surfaces 212, the first portion 511 of the first tape 510 to the side wrapping zone 430 and the second portion 512 of the first tape 510 to the end wrapping zone 440.

The first tape 510 can connect the side wrapping zone 430 and the end wrapping zone 440 together, such that the side wrapping zone 430 and the end wrapping zone 440 can remain fixed relative to the electrode main body 210, thereby improving the firmness of the wrapping film 400 in wrapping the electrode main body 210.

Specifically, after the end wrapping zone 440 and the side wrapping zone 430 are pressed on the battery main body, the first tape attachment assembly 380 can drive the electrode assembly 200 to move, such that the side wrapping zone 430 is disposed opposite to the first portion 511 of the first tape 510. Then, the first tape attachment assembly 380 drives the electrode assembly 200 to continue to move, such that the first portion 511 of the first tape 510 is attached to the side wrapping zone 430. Subsequently, the first tape attachment assembly 380 may drive the electrode assembly 200 to rotate toward the second portion 512 of the first tape 510, such that the second portion 512 of the first tape 510 gradually approaches and is eventually attached to the end wrapping zone 440.

Alternatively, the first tape attachment assembly 380 can drive the electrode assembly 200 to move, such that the end wrapping zone 440 is disposed opposite to the second portion 512 of the first tape 510. Then, the first tape attachment assembly 380 drives the electrode assembly 200 to continue to move, such that the second portion 512 of the first tape 510 is attached to the end wrapping zone 440. Subsequently, the first tape attachment assembly 380 may drive the electrode assembly 200 to rotate toward the first portion 511 of the first tape 510, such that the first portion 511 of the first tape 510 gradually approaches and is eventually attached to the side wrapping zone 430.

Further, the respective side wrapping zones 430 connected to the two main wrapping zones 410 jointly wrap the same side surface 213 of the electrode main body 210, and the first tape 510 can serve to connect the two side wrapping zones 430 wrapping the same side surface 213 of the electrode main body 210. The respective end wrapping zones 440 connected to the two main wrapping zones 410 jointly wrap the second one 212b of the two end surfaces 212, and the first tape 510 can serve to connect the two end wrapping zones 440 wrapping the second one 212b of the two end surfaces 212.

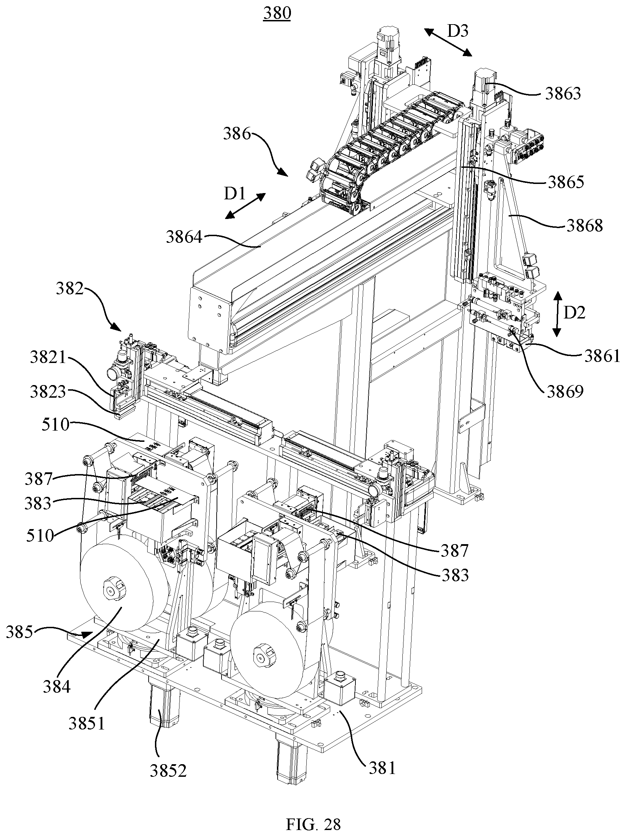

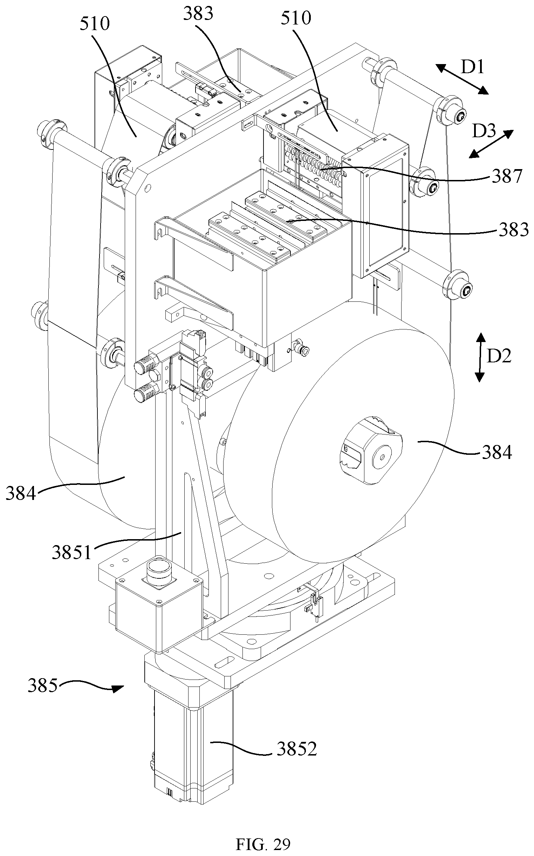

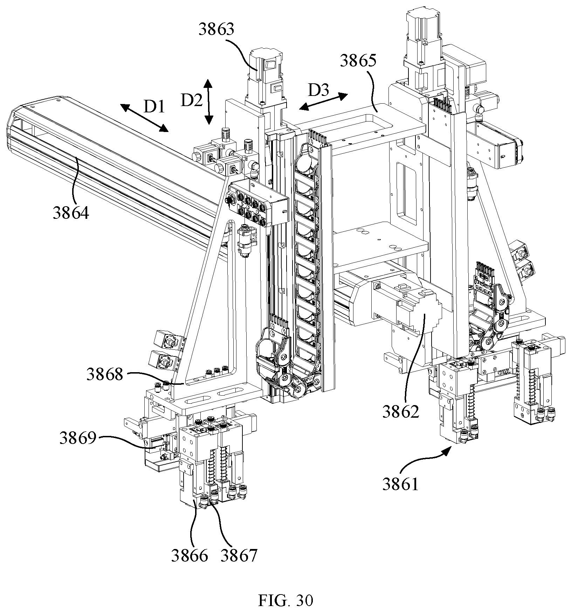

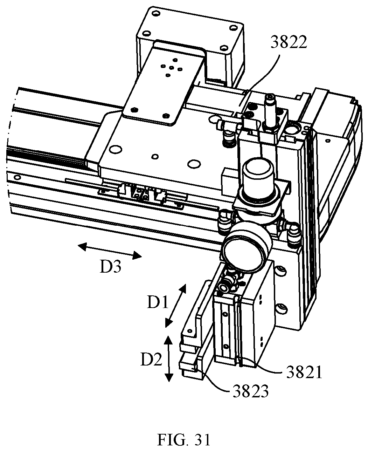

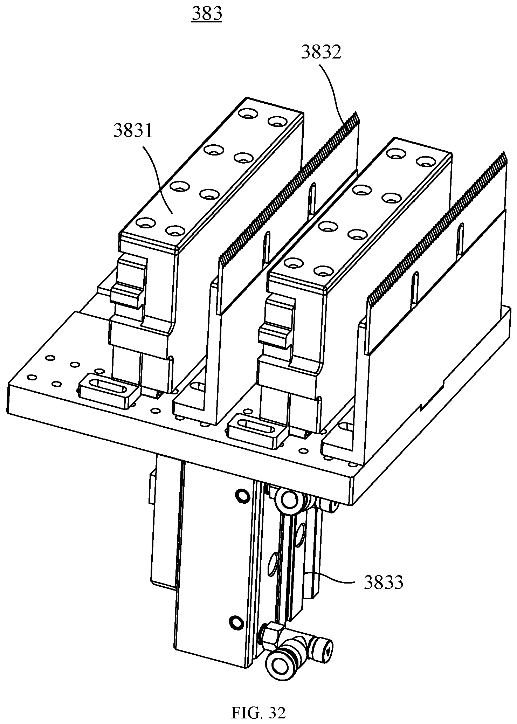

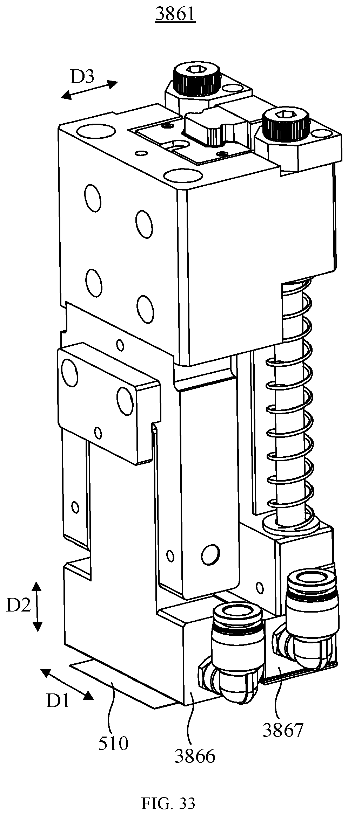

Optionally, as shown in FIGs. 28 to 33, the first tape attachment assembly 380 further includes a first cutting mechanism 383, a first tape pickup mechanism 386, and a first tape pulling mechanism 382. The first tape pulling mechanism 382 is configured to clamp and pull a head end of a release portion of the first tape roll 384, the first cutting mechanism 383 is configured to cut the first tape 510 out of the release portion of the first tape roll 384, and the first tape pickup mechanism 386 is configured to suck the first tape 510 and attach the first tape to the wrapping film 400.

Optionally, as shown in FIGs. 28 to 33, the first tape attachment assembly 380 further includes a first tape feeding mechanism 387, and the first tape feeding mechanism 387 is configured to convey the release portion of the first tape roll 384 for cutting by the first cutting mechanism 383. Further, the first tape feeding mechanism 387 includes a roller (not labeled), and the roller is configured to convey the release portion of the first tape roll 384.

According to some embodiments of the present application, optionally, as shown in FIGs. 28 to 33, the first tape attachment assembly 380 includes a first unwinding mechanism 381, a first tape pulling mechanism 382, and a first cutting mechanism 383. The first unwinding mechanism 381 is configured to place and release the first tape roll 384, the first tape pulling mechanism 382 is configured to clamp and pull the head end of the release portion of the first tape roll 384, and the first cutting mechanism 383 is configured to cut the first tape 510 out of the release portion of the first tape roll 384.

Such a configuration facilitates the automatic provision of the first tape 510.

According to some embodiments of the present application, optionally, as shown in FIGs. 28 to 33, the first tape pulling mechanism 382 includes a first tape clamping cylinder 3821, a first tape pulling motor 3822, and a first tape clamping member 3823. The first tape clamping cylinder 3821 is configured to drive the first tape clamping member 3823 to clamp the head end of the release portion, and the first tape pulling motor 3822 is configured to drive the first tape clamping member 3823 to move to pull the release portion.

The first tape pulling motor 3822 can elongate the release portion of the first tape roll 384 by driving the first tape clamping member 3823 to move to pull the release portion, and the release portion of the first tape roll 384 is stretched to facilitate the cutting.

According to some embodiments of the present application, optionally, as shown in FIGs. 28 to 33, two corresponding groups of first unwinding mechanisms 381 and first cutting mechanisms 383 are provided. The first tape attachment assembly 380 includes a switching mechanism 385, and the switching mechanism 385 includes a material roll support 3851 and a switching motor 3852. The two groups of first unwinding mechanisms 381 and first cutting mechanisms 383 are disposed on the material roll support 3851. The switching motor 3852 drives the material roll support 3851 to rotate around a predetermined rotation axis, such that the two groups of first unwinding mechanisms 381 and first cutting mechanisms 383 can switch between a standby station and a work station where the first tape pulling mechanism 382 and the first cutting mechanism 383 operate. The rotation axis is perpendicular to the plane where the release portion is located.

One first unwinding mechanism 381 and one first cutting mechanism 383 may form a group. Two first unwinding mechanisms 381 and two first cutting mechanisms 383 may correspondingly form two groups. Such a configuration facilitates rapid roll change operations of the first tape roll 384, thereby improving the roll change efficiency. Specifically, the switching motor 3852 drives the material roll support 3851 to rotate by 180° during each roll change.

According to some embodiments of the present application, optionally, as shown in FIGs. 28 to 33, the first tape attachment assembly 380 includes a first tape pickup mechanism 386, and the first tape pickup mechanism 386 is configured to adsorb and take away the first tape 510. The first cutting mechanism 383 includes a first pressing block 3831, a first cutter 3832, and a first cutting cylinder 3833. The first pressing block 3831 and the first cutter 3832 are oppositely and fixedly disposed. The first cutting cylinder 3833 is configured to drive the first pressing block 3831 to press the release portion onto the first tape pickup mechanism 386 and to drive the first cutter 3832 to cut the first tape 510 out of the release portion.

Configuring the first pressing block 3831 to press and position the release portion of the first tape roll 384 can improve the stability of the cutting process.

According to some embodiments of the present application, optionally, as shown in FIGs. 28 to 33, the first tape attachment assembly 380 includes a first tape pickup mechanism 386, and the first tape pickup mechanism 386 is configured to adsorb and take away the first tape 510. The first tape pickup mechanism 386 includes a first tape pickup member 3861, a first tape pickup motor 3862, a second tape pickup motor 3863, a first tape pickup support 3864, and a second tape pickup support 3865. The first tape pickup member 3861 is configured to adsorb the first tape 510. The first tape pickup motor 3862 is disposed on the first tape pickup support 3864 and drives the second tape pickup support 3865 to move above the release portion of the first tape roll 384. The second tape pickup motor 3863 is disposed on the second tape pickup support 3865 and drives the first tape pickup member 3861 to approach and move away from the plane where the release portion of the first tape roll 384 is located.

Such a configuration can improve the movement flexibility of the first tape pickup member 3861, facilitating the suction and transfer of the first tape 510.

According to some embodiments of the present application, optionally, as shown in FIGs. 28 to 33, the first tape pickup member 3861 includes a first tape pickup sub-part 3866 and a second tape pickup sub-part 3867. The first tape pickup sub-part 3866 is configured to adsorb the first portion 511 of the first tape 510 and attach the first portion to the side wrapping zone 430. The second tape pickup sub-part 3867 is configured to adsorb the second portion 512 of the first tape 510 and attach the second portion to the end wrapping zone 440.

Such a configuration can improve the continuity of the tape pickup action and the tape attachment action.

Optionally, at least one of the first tape pickup sub-part 3866 and the second tape pickup sub-part 3867 is provided with an adsorption surface configured to contact and adsorb the first tape 510. The first tape pickup sub-part 3866 and the second tape pickup sub-part 3867 are configured to be relatively movable in a direction perpendicular to the adsorption surface, thereby enabling the first tape 510 adsorbed on the first tape pickup member 3861 to bend. For example, one of the first tape pickup sub-part 3866 and the second tape pickup sub-part 3867 may be driven to move in the direction perpendicular to the adsorption surface.

According to some embodiments of the present application, optionally, as shown in FIGs. 28 to 33, the first tape pickup sub-part 3866 is a telescoping member. The second tape pickup motor 3863 drives the first tape pickup member 3861 in the third direction D3; and the first tape pickup sub-part 3866 presses the first portion 511 of the first tape 510 onto the side wrapping zone 430 and retracts, so as to enable the second tape pickup sub-part 3867 to continue to move in the third direction D3 and attach to the end wrapping zone 440, thereby attaching the second portion 512 of the first tape 510 to the end wrapping zone 440. Alternatively, the second tape pickup sub-part 3867 is a telescoping member. The second tape pickup motor 3863 drives the first tape pickup member 3861 in the second direction D2; and the second tape pickup sub-part 3867 presses the second portion 512 of the first tape 510 onto the end wrapping zone 440 and retracts, so as to enable the first tape pickup sub-part 3866 to continue to move in the second direction D2 and attach to the side wrapping zone 430, thereby attaching the first portion 511 of the first tape 510 to the side wrapping zone 430.

The telescoping member may extend and retract. For example, the telescoping member is an elastic member that extends and retracts under pressure.

Such a configuration can improve the structural flexibility of the first tape pickup member 3861, such that the shape of the first tape pickup member 3861 can be adaptively adjusted based on the shape of the electrode main body 210, thereby achieving diversified tape attachment actions. Specifically, when the first tape pickup sub-part 3866 and the second tape pickup sub-part 3867 suck the first tape 510, the first tape 510 is in a planar shape. One of the first tape pickup sub-part 3866 and the second tape pickup sub-part 3867 is compressed, such that the first tape pickup sub-part 3866 and the second tape pickup sub-part 3867 are misaligned. As a result, the first tape 510 is bent, and can be attached to both the end wrapping zone 440 and the side wrapping zone 430.

According to some embodiments of the present application, optionally, as shown in FIGs. 28 to 33, the first cutting mechanism 383 is configured to cut two first tapes 510 out of the release portion. The number of the first tape pickup members 3861 is two, and the two first tape pickup members adsorb the corresponding first tapes 510, respectively. The first tape attachment assembly 380 includes a first tape pickup mechanism 386. The first tape pickup mechanism 386 is configured to adsorb and take away the first tape 510, and the first tape pickup mechanism 386 includes a first tape pickup member 3861, a first tape pickup motor 3862, a second tape pickup motor 3863, a first tape pickup support 3864, a second tape pickup support 3865, a third tape pickup support 3868, and a tape dispensing cylinder 3869. The first tape pickup member 3861 is configured to adsorb the first tape 510. The first tape pickup motor 3862 is disposed on the first tape pickup support 3864 and drives the second tape pickup support 3865 to move above the release portion of the first tape roll 384. The second tape pickup motor 3863 is disposed on the second tape pickup support 3865 and drives the third tape pickup support 3868 and the two first tape pickup members 3861 to move toward or away from the plane where the release portion of the first tape roll 384 is located. The tape dispensing cylinder 3869 is disposed on the third tape pickup support 3868, and the tape dispensing cylinder 3869 is configured to drive the two first tape pickup members 3861 to move away from each other, such that the two first tape pickup members 3861 correspond to the two corners of the electrode assembly 200 spaced apart from each other in the third direction D3, respectively.

For example, the first cutting mechanism 383 is provided with two first cutters 3832 corresponding to the same release portion, and the first cutting cylinder 3833 drives the two first cutters 3832 to move synchronously, such that the two first cutters 3832 can cut two first tapes 510 out of the same release portion each time.

Such a configuration enables the first tape pickup mechanism 386 to adsorb and take away the two first tapes 510 corresponding to each electrode assembly 200, so as to simultaneously attach the two first tapes 510 at the two corners of the electrode assembly 200 spaced apart from each other in the third direction D3, thereby improving the tape attachment efficiency.

According to some embodiments of the present application, optionally, as shown in FIGs. 16, 17, 26, and 27, the wrapping device 300 further includes a second tape attachment assembly 390. The second tape attachment assembly 390 is configured to drive the electrode assembly 200 and a second tape 520 to move relative to each other. The second tape 520 includes a first portion and a second portion connected to each other. The second tape attachment assembly 390 is configured to attach, at a corner formed by the side surface 213 and the main surface 211, the first portion 521 of the second tape 520 to the main wrapping zone 410 and the second portion 522 of the second tape 520 to the side wrapping zone 430.

Before attaching the second tape 520, the side wrapping zone 430 is at least partially connected to only one of the two main wrapping zones 410 and is not connected to the other of the two main wrapping zones 410. The second tape 520 can connect the side wrapping zone 430 and the other one of the main wrapping zones 410 together, such that the side wrapping zone 430 and the main wrapping zone 410 can remain fixed relative to the electrode main body 210, thereby improving the firmness of the wrapping film 400 in wrapping the electrode main body 210.

For example, after the side wrapping zone 430 is pressed on the battery main body, the second tape attachment assembly 390 can drive the electrode assembly 200 to move, such that the first portion 521 of the second tape 520 gradually approaches and is eventually attached to the main wrapping zone 410. Subsequently, the second tape attachment assembly 390 may drive the electrode assembly 200 to rotate toward the second portion 522 of the second tape 520, such that the second portion 522 of the second tape 520 gradually approaches and is eventually attached to the side wrapping zone 430.

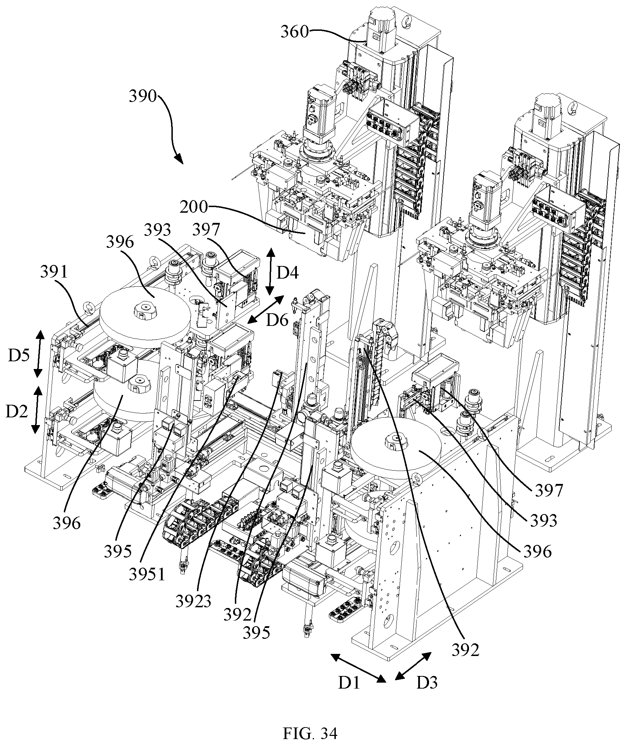

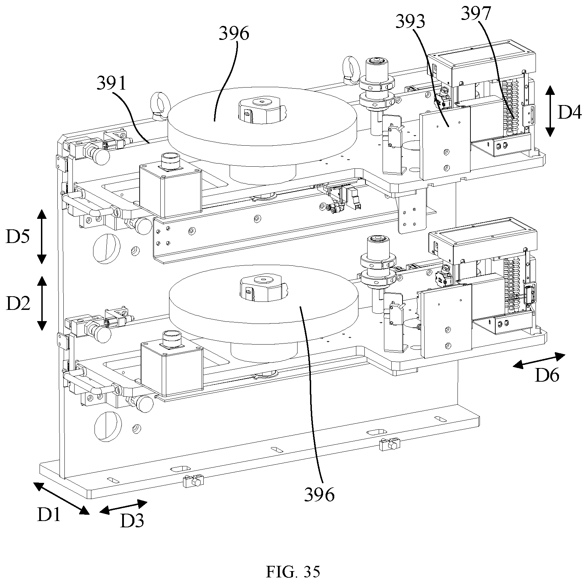

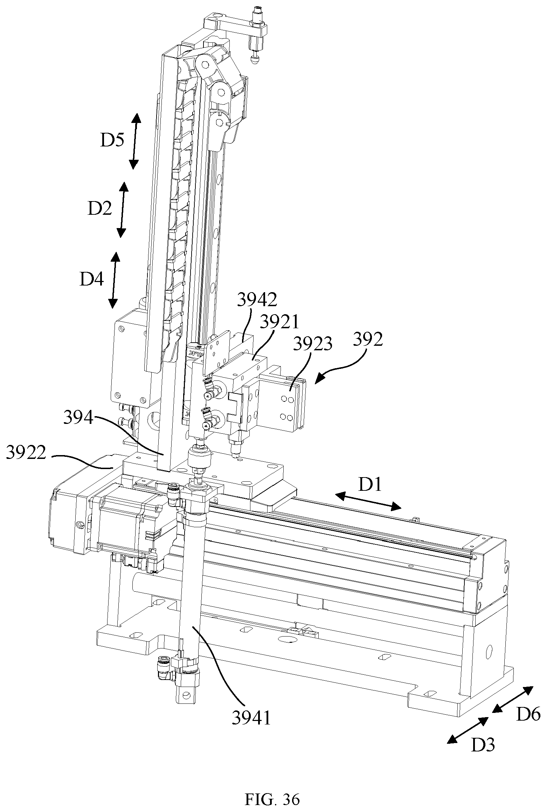

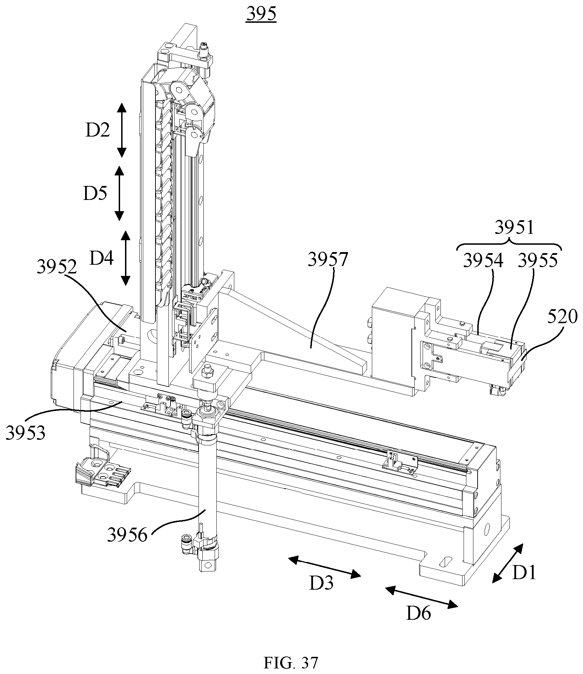

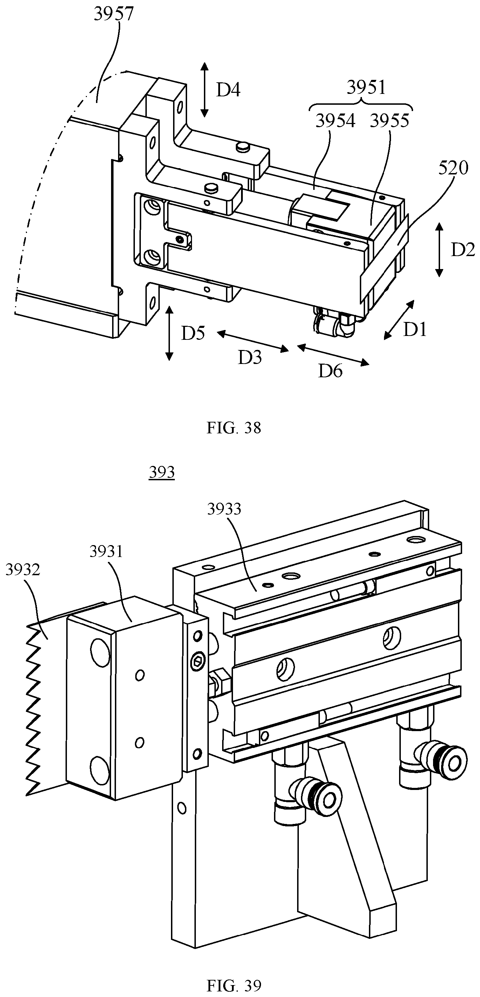

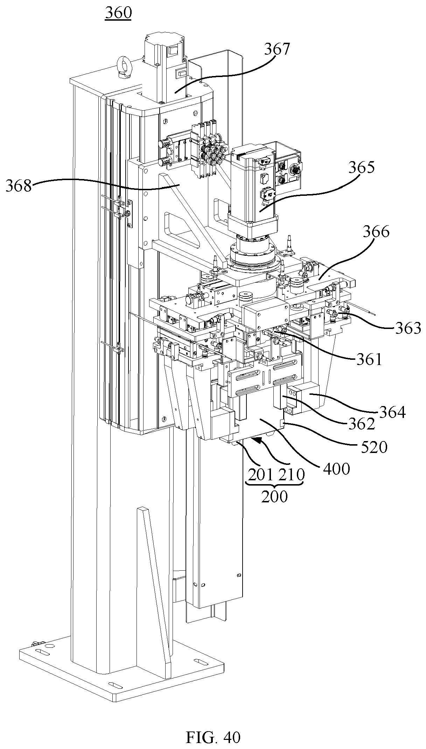

Optionally, as shown in FIGs. 34 to 40, the second tape attachment assembly 390 further includes a second cutting mechanism 393, a second tape pickup mechanism 395, and a second tape pulling mechanism 392. The second tape pulling mechanism 392 is configured to pull the second tape 520 out, the second cutting mechanism 393 is configured to cut the second tape 520 out of the release portion of the second tape roll 396, and the second tape pickup mechanism 395 is configured to suck the second tape 520 and attach the second tape to the wrapping film 400.

Optionally, as shown in FIGs. 34 to 40, the second tape attachment assembly 390 further includes a second tape feeding mechanism 397, and the second tape feeding mechanism 397 is configured to convey the release portion of the second tape roll 396 for cutting by the second cutting mechanism 393. Further, the second tape feeding mechanism 397 includes a roller (not labeled), and the roller is configured to convey the release portion of the second tape roll 396.

According to some embodiments of the present application, optionally, as shown in FIGs. 34 to 40, the number of the first portions 521 of the second tape 520 is two, and the two first portions are located at two ends of the second portion 522 of the second tape 520; and the second tape attachment assembly 390 is configured to respectively attach the two first portions of the second tape 520 to corresponding ones of the two main wrapping zones 410.

Such a configuration can increase the contact area between the second tape 520 and the wrapping film 400, thereby improving the fixing effect on the side wrapping zone 430.

Further, the respective side wrapping zones 430 connected to the two main wrapping zones 410 jointly wrap the same side surface 213 of the electrode main body 210, and the second tape 520 can serve to connect the two side wrapping zones 430 wrapping the same side surface 213 of the electrode main body 210.

According to some embodiments of the present application, optionally, as shown in FIGs. 34 to 40, the second tape attachment assembly 390 includes a second unwinding mechanism 391, a second tape pulling mechanism 392, and a second cutting mechanism 393. The second unwinding mechanism 391 is configured to place and release the second tape roll 396. The second tape pulling mechanism 392 is configured to clamp and pull the head end of the release portion of the second tape roll 396. The second cutting mechanism 393 is configured to cut the second tape 520 out of the release portion of the second tape roll 396.

Such a configuration facilitates the automatic provision of the second tape 520.

According to some embodiments of the present application, optionally, as shown in FIGs. 34 to 40, the second tape pulling mechanism 392 includes a second tape clamping cylinder 3921, a second tape pulling motor 3922, and a second tape clamping member 3923. The second tape clamping cylinder 3921 is configured to drive the second tape clamping member 3923 to clamp the head end of the release portion of the second tape roll 396, and the second tape pulling motor 3922 is configured to drive the second tape clamping member 3923 to move to pull the release portion of the second tape roll 396.

The second tape pulling motor 3922 can elongate the release portion of the second tape roll 396 by driving the second tape clamping member 3923 to move to pull the release portion, and the release portion of the second tape roll 396 is stretched to facilitate the cutting.

According to some embodiments of the present application, optionally, as shown in FIGs. 34 to 40, two corresponding groups of second unwinding mechanisms 391 and second cutting mechanisms 393 are provided and spaced apart from each other in the width direction D4 of the release portion. The second tape attachment assembly 390 includes a tape pulling support 394, a tape pulling and transposition cylinder 3941, and a tape pulling and transposition support 3942. The tape pulling and transposition cylinder 3941 is disposed on the tape pulling support 394, and the second tape pulling mechanism 392 is disposed on the tape pulling and transposition support 3942. The tape pulling and transposition cylinder 3941 is configured to drive the tape pulling and transposition support 3942 to move in the spacing direction D5 of two second unwinding mechanisms 391, such that the second tape pulling mechanism 392 can switch between a standby station and a work station where the second tape pulling mechanism 392 operates. The standby station and the work station are each provided with a group of the second unwinding mechanism 391 and the second cutting mechanism 393.

One second unwinding mechanism 391 and one second cutting mechanism 393 may form a group. Two second unwinding mechanisms 391 and two second cutting mechanisms 393 may correspondingly form two groups. By providing two groups of second unwinding mechanisms 391 and second cutting mechanisms 393, the interference from roll change operations of the second tape roll 396 with the tape pulling process can be reduced, thereby improving the tape pulling efficiency. Further, two groups of second unwinding mechanisms 391 and second cutting mechanisms 393 are disposed in layers in the height direction of the second tape attachment assembly 390.

By configuring the tape pulling and transposition cylinder 3941 to drive the tape pulling and transposition support 3942 to move in the spacing direction D5 of the two second unwinding mechanisms 391, the position of the tape pulling mechanism can correspond to the position of a group of the second unwinding mechanism 391 and the second cutting mechanism 393 that are in operation, facilitating the tape pulling operation.

According to some embodiments of the present application, optionally, as shown in FIGs. 34 to 40, the second tape attachment assembly 390 includes a second tape pickup mechanism 395, and the second tape pickup mechanism 395 is configured to adsorb and take away the second tape 520. The second cutting mechanism 393 includes a second pressing block 3931, a second cutter 3932, and a second cutting cylinder 3933. The second pressing block 3931 and the second cutter 3932 are oppositely and fixedly disposed. The second cutting cylinder 3933 is configured to drive the second pressing block 3931 to press the release portion of the second tape roll 396 onto the second tape pickup mechanism 395 and to drive the second cutter 3932 to cut the second tape 520 out of the release portion of the second tape roll 396.

Configuring the second pressing block 3931 to press and position the release portion of the second tape roll 396 can improve the stability of the cutting process.

According to some embodiments of the present application, optionally, as shown in FIGs. 34 to 40, the second tape attachment assembly 390 includes a second tape pickup mechanism 395, and the second tape pickup mechanism 395 is configured to adsorb and take away the second tape 520. The second tape pickup mechanism 395 includes a second tape pickup member 3951, a fourth tape pickup motor 3952, and a fourth tape pickup support 3953. The second tape pickup member 3951 is configured to adsorb the second tape 520. The fourth tape pickup motor 3952 is disposed on the fourth tape pickup support 3953, drives the second tape pickup member 3951 to move to be disposed opposite to the release portion of the second tape roll 396 in the thickness direction D6 of the release portion of the second tape roll 396, and drives the second tape pickup member 3951 to move toward or away from the plane where the release portion of the second tape roll 396 is located.

Such a configuration can improve the movement flexibility of the second tape pickup member 3951, facilitating the suction and transfer of the second tape 520.

According to some embodiments of the present application, optionally, as shown in FIGs. 34 to 40, the second tape pickup member 3951 includes a third tape pickup sub-part 3954 and a fourth tape pickup sub-part 3955. The third tape pickup sub-part 3954 is configured to adsorb the first portion 521 of the second tape 520 and attach the first portion to the main wrapping zone 410. The fourth tape pickup sub-part 3955 is configured to adsorb the second portion 522 of the second tape 520 and attach the second portion to the side wrapping zone 430.

Such a configuration can improve the continuity of the tape pickup action and the tape attachment action.

Optionally, at least one of the third tape pickup sub-part 3954 and the fourth tape pickup sub-part 3955 is provided with an adsorption surface configured to contact and adsorb the second tape 520. The third tape pickup sub-part 3954 and the fourth tape pickup sub-part 3955 are configured to be relatively movable in a direction perpendicular to the adsorption surface, thereby enabling the second tape 520 adsorbed on the second tape pickup member 3951 to bend. For example, one of the third tape pickup sub-part 3954 and the fourth tape pickup sub-part 3955 may be driven to move in the direction perpendicular to the adsorption surface.

According to some embodiments of the present application, optionally, as shown in FIGs. 34 to 40, the fourth tape pickup sub-part 3955 is a telescoping member. The fourth tape pickup motor 3952 drives the second tape pickup member 3951 in the third direction D3; and the fourth tape pickup sub-part 3955 presses the second portion 522 of the second tape 520 onto the side wrapping zone 430 and retracts, so as to enable the third tape pickup sub-part 3954 to continue to move in the third direction D3 and attach to the main wrapping zone 410, thereby attaching the first portion 521 of the second tape 520 to the main wrapping zone 410.

The telescoping member may extend and retract. For example, the telescoping member is an elastic member.

Such a configuration can improve the structural flexibility of the second tape pickup member 3951, such that the shape of the second tape pickup member 3951 can be adaptively adjusted based on the shape of the electrode main body 210, thereby achieving diversified tape attachment actions. Specifically, when the third tape pickup sub-part 3954 and the fourth tape pickup sub-part 3955 suck the second tape 520, the second tape 520 is in a planar shape. The fourth tape pickup sub-part 3955 is compressed, such that the first tape pickup sub-part 3866 and the second tape pickup sub-part 3867 are misaligned. As a result, the second tape 520 is bent, and can be simultaneously attached to the main wrapping zone 410 and the side wrapping zone 430. Further, the fourth tape pickup sub-part 3955 is located between two third tape pickup sub-parts 3954. During the tape attachment, both the two third tape pickup sub-parts 3954 can be misaligned with the fourth tape pickup sub-part 3955, such that the second tape 520 can be simultaneously attached to the two main wrapping zones 410 and the side wrapping zone 430.

According to some embodiments of the present application, optionally, as shown in FIGs. 34 to 40, two corresponding groups of second unwinding mechanisms 391 and second cutting mechanisms 393 are provided and spaced apart from each other in the width direction D4 of the release portion of the second tape roll 396. The second tape pickup mechanism 395 includes a tape pickup and transposition cylinder 3956 and a tape pickup and transposition support 3957. The tape pickup and transposition cylinder 3956 is disposed on the fourth tape pickup support 3953, and the second tape pickup member 3951 is disposed on the tape pickup and transposition support 3957. The tape pickup and transposition cylinder 3956 is configured to drive the tape pickup and transposition support 3957 to move in the spacing direction D5 of the two second unwinding mechanisms 391, such that the second tape pickup member 3951 can switch between a standby station and a work station where the second tape pickup mechanism 395 operates. The standby station and the work station are each provided with a group of the second unwinding mechanism 391 and the second cutting mechanism 393.

Each second unwinding mechanism 391 and each second cutting mechanism 393 may form a group. By providing two groups of second unwinding mechanisms 391 and second cutting mechanisms 393, the interference from roll change operations of the second tape roll 396 with the tape pickup process can be reduced, thereby improving the tape pickup efficiency. Further, two groups of second unwinding mechanisms 391 and second cutting mechanisms 393 are disposed in layers in the height direction of the second tape attachment assembly 390.

By configuring the tape pickup and transposition cylinder 3956 to drive the tape pickup and transposition support 3957 to move in the spacing direction D5 of the two second unwinding mechanisms 391, the position of the second tape pickup member 3951 can correspond to the position of a group of the second unwinding mechanism 391 and the second cutting mechanism 393 that are in operation, facilitating the tape pickup operation.

According to some embodiments of the present application, optionally, as shown in FIGs. 34 to 40, the second tape attachment assembly 390 includes a third positioning assembly 360, and the third positioning assembly 360 includes a main pressing cylinder 361, a main pressing member 362, a side pressing cylinder 363, and a side pressing member 364. The main pressing cylinder 361 is configured to drive the main pressing member 362 to press the main wrapping zone 410 and the main surface 211. The side pressing cylinder 363 is configured to drive the side pressing member 364 to press the side wrapping zone 430 and the side surface 213.

The side pressing member 364 and the main pressing member 362 can serve to clamp and position the electrode assembly 200 and the wrapping film 400. The main pressing member 362 is configured to form a clearance for the attachment position of the second tape 520 when pressing the main wrapping zone 410 and the main surface 211. The side pressing member 364 is configured to form a clearance for the attachment position of the second tape 520 when pressing the side wrapping zone 430 and the side surface 213. Such a configuration can improve the stability of the tape attachment process.

According to some embodiments of the present application, optionally, as shown in FIGs. 34 to 40, the third positioning assembly 360 includes a flip motor 365 and a rotary support 366. The main pressing cylinder 361, the main pressing member 362, the side pressing cylinder 363, and the side pressing member 364 are disposed on the rotary support 366. The flip motor 365 is configured to drive the rotary support 366 to rotate. The rotation axis of the rotary support 366 is parallel to the second direction D2.

Such a configuration can improve the movement flexibility of the electrode assembly 200, facilitating the attachment of the second tape 520 at different positions of the electrode assembly 200. Further, the flip motor 365 is configured to drive the rotary support 366 to rotate by 180°, such that the second tapes 520 can be attached to two opposite sides of the electrode assembly 200, respectively.

According to some embodiments of the present application, optionally, as shown in FIGs. 34 to 40, the second tape attachment assembly 390 includes two second unwinding mechanisms 391. The third positioning assembly 360 includes a displacement motor 367 and a displacement support 368. The main pressing cylinder 361, the main pressing member 362, the side pressing cylinder 363, the side pressing member 364, the flip motor 365, and the rotary support 366 are disposed on the displacement support 368. The displacement motor 367 is configured to drive the displacement support 368 to move in the spacing direction D5 of the two second unwinding mechanisms 391.

Each second unwinding mechanism 391 and each second cutting mechanism 393 may form a group. By providing two groups of second unwinding mechanisms 391 and second cutting mechanisms 393, the interference from roll change operations of the second tape roll 396 with the tape attachment process can be reduced, thereby improving the tape pickup efficiency. Further, two groups of second unwinding mechanisms 391 and second cutting mechanisms 393 are disposed in layers in the height direction of the second tape attachment assembly 390.

By configuring the displacement motor 367 to drive the displacement support 368 to move in the spacing direction D5 of the two second unwinding mechanisms 391, the position of the electrode assembly 200 can correspond to the position of a group of the second unwinding mechanism 391 and the second cutting mechanism 393 that are in operation, facilitating the tape attachment operation.

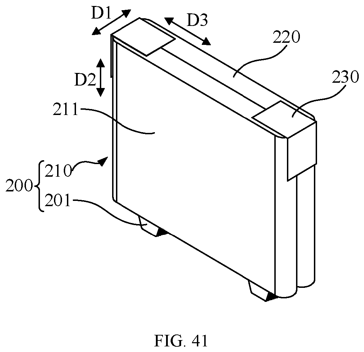

According to some embodiments of the present application, optionally, as shown in FIGs. 4 and 41, the electrode main body 210 includes two electrode main body parts 220 stacked on each other in the first direction D1, and each electrode main body part 220 includes a positive electrode plate 221, a separator 222, and a negative electrode plate 223 disposed in sequence.

Such a configuration is beneficial to improving the space utilization rate of the electrode assembly 200 and improving the energy storage density of the electrode assembly 200.

Further, the two electrode main body parts 220 may be connected in series or in parallel through the tab part 201.

Optionally, the two electrode main body parts 220 may be fixed together by a fixing member 230, so as to improve the stability of the wrapping process. For example, the fixing member 230 is a tape.

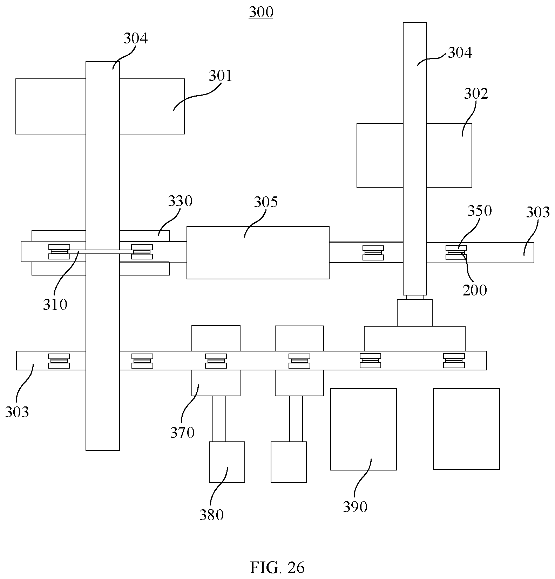

Optionally, as shown in FIG. 26, the wrapping device 300 further includes a wrapping film feeding mechanism 301, an electrode assembly discharging mechanism 302, a jig conveyor line 303, a robotic arm track 304, and a dust removal mechanism 305. The wrapping film feeding mechanism 301 can suck the wrapping film 400 through negative pressure, and then transfer the wrapping film 400 to the first wrapping assembly 330. After the film clamp 332 positions the wrapping film 400, the wrapping film feeding mechanism 301 can move away from the wrapping film 400. The jig conveyor line 303 may be configured to transport the second positioning assembly 350, such that the second positioning assembly 350 can reach different stations, or the second positioning assembly 350 can carry the electrode assembly 200 to reach different stations. The electrode assembly discharging mechanism 302 can move the electrode assembly 200 to another process after the process of wrapping the electrode assembly 200 by the wrapping film 400.

The robotic arm track 304 can provide support for some mechanisms requiring movement, such that some mechanisms requiring movement can move along the robotic arm track 304. For example, the wrapping film feeding mechanism 301 and the electrode assembly discharging mechanism 302 are slidably disposed on the robotic arm track 304. The robotic arm track 304 and the jig conveyor line 303 may be disposed in a crossing manner, such that the second positioning assembly 350 can switch between moving along the robotic arm track 304 and moving along the jig conveyor line 303. For example, at least two robotic arm tracks 304 and at least two jig conveyor lines 303 may be disposed in a crossing manner.

The jig conveyor line 303 may be provided in the dust removal mechanism 305 in a penetrating manner, such that the dust removal mechanism 305 can perform dust removal for the second positioning assembly 350 moving inside the dust removal mechanism 305. For example, the dust removal mechanism 305 may perform dust removal for the unloaded second positioning assembly 350 by means of blowing and air suction. Further, different jig conveyor lines 303 may be in communication with each other, such that the second positioning assembly 350 can achieve cyclic movement through the different jig conveyor lines 303.

Optionally, the first tape attachment assembly 380 or the second tape attachment assembly 390 may be disposed on one side of the jig conveyor line 303, such that the first tape 510 or the second tape 520 can be attached to the electrode assembly 200 wrapped by the wrapping film 400 on the jig conveyor line 303.

Optionally, the battery processing device 600 further includes a conveying device and an assembly device. The conveying device is configured to convey structures to be assembled to each station of the assembly device. The stations of the assembly device include at least a welding assembly 690, a housing insertion apparatus, a tab guide apparatus, a post terminal welding apparatus, and a bottom cover welding apparatus.

The welding assembly 690 is configured to weld a plurality of tab plates of the electrode assembly 200 to form a tab part 201. The housing insertion apparatus is configured to load the electrode assembly 200 into the housing 100 from the opening end 112. The tab guide apparatus is configured to clamp the tab part 201 to pass through the through hole when the electrode assembly 200 is loaded into the housing. The post terminal welding apparatus is configured to weld the tab part 201 passing through the through hole to one side of the post terminal facing away from the accommodating cavity. The bottom cover welding apparatus is configured to weld the bottom cover to the opening end 112 of the housing 100.

It should be noted that in the embodiments, the conveying device includes a conveyor line. The conveyor line may be a conveying structure formed by a motor-driven conveying roller cooperating with a conveyor belt, or may be a conveying structure formed by a motor-driven conveying chain with hinged links, or may be an AGV conveying trolley, as long as the conveyor line is capable of conveying in at least one direction and can support and ensure the stability of the structure to be assembled.

The welding assembly 690 is intended to pre-weld the tab plates to form the tab part 201. The welding assembly is optionally an ultrasonic welding device, as long as the welding assembly can ensure that the tab plates are welded in a stable, clamped state. The housing insertion apparatus is a pushing mechanism or a clamping mechanism, as long as the housing insertion apparatus can stably move the electrode assembly 200 toward the opening end 112 of the housing 100 and enable the electrode assembly to enter the accommodating cavity through the opening end 112. Similarly, the tab guide apparatus may be a clamping structure or a guiding structure, as long as the tab guide apparatus can guide the tab part 201 to pass through the through hole smoothly without interfering with the housing 100. The post terminal welding apparatus is intended to achieve the welding of the tab part 201 and the post terminal, and optionally, the post terminal welding apparatus may be a laser welding device. The bottom cover welding apparatus is intended to weld the bottom cover to the circumferential edge of the opening end 112 of the housing 100, and is also a laser welding device.

In addition, the assembly device includes, but is not limited to, the welding assembly 690, the housing insertion apparatus, the tab guide apparatus, the post terminal welding apparatus, and the bottom cover welding apparatus. Illustratively, when the electrode assembly 200 includes a plurality of electrode main body parts 220, for example, two electrode main body parts 220, the assembly device further includes a pairing assembly. The pairing assembly is configured to stack the plurality of electrode main body parts 220, such that the tab plates of the two electrode main body parts 220 are substantially opposite to each other. As a result, the conveying structure can convey the paired electrode main body parts 220 to the welding assembly 690 for welding the tab plates, thereby facilitating the formation of the tab part 201. Further illustratively, to ensure the reliability of the battery assembly process, dust removal and NG detection stations may also be added between any two adjacent stations, which is not limited in the embodiments.

According to some embodiments of the present application, the battery processing method described in the embodiments of the battery processing method includes: S100, controlling a material conveying assembly to convey a first electrode assembly and a second electrode assembly, where the first electrode assembly and the second electrode assembly each include an electrode main body and a tab part disposed on the electrode main body; S200, controlling a pairing assembly to pair the first electrode assembly and the second electrode assembly, such that the electrode main body of the first electrode assembly and the electrode main body of the second electrode assembly are stacked on each other; and S300, controlling a welding assembly to weld the tab part of the paired first electrode assembly and the tab part of the paired second electrode assembly.

According to some embodiments of the present application, optionally, controlling the pairing assembly to pair the first electrode assembly and the second electrode assembly includes:
S210, controlling a pairing feeding mechanism to pick up the first electrode assembly and the second electrode assembly in a paired manner and place the first electrode assembly and the second electrode assembly on a first detection conveyor line and a second detection conveyor line, respectively;
S220, controlling a sorting mechanism to pair the first electrode assembly and the second electrode assembly that are in a conforming condition; and
S230, controlling a stacking mechanism to stack the electrode main body of the paired first electrode assembly and the electrode main body of the paired second electrode assembly.

According to some embodiments of the present application, optionally, controlling the sorting mechanism to pair the first electrode assembly and the second electrode assembly that are in the conforming condition includes:
S221, taking, when the first electrode assembly and the second electrode assembly picked up in a paired manner are both in the conforming condition, the first electrode assembly and the second electrode assembly picked up in a paired manner as the paired first electrode assembly and second electrode assembly.

According to some embodiments of the present application, optionally, the battery processing device is provided with a non-conforming products recovery zone. Controlling the sorting mechanism to pair the first electrode assembly and the second electrode assembly that are in the conforming condition includes: S222, sorting, when at least one of the first electrode assembly and the second electrode assembly picked up in a paired manner is in a non-conforming condition, the first electrode assembly and/or the second electrode assembly in the non-conforming condition to the non-conforming products recovery zone.

According to some embodiments of the present application, optionally, the battery processing device is provided with a first conforming products buffer zone corresponding to the first electrode assembly and a second conforming products buffer zone corresponding to the second electrode assembly, and controlling the sorting mechanism to pair the first electrode assembly and the second electrode assembly that are in the conforming condition includes:
S223, sorting, when the first electrode assembly in the first electrode assembly and the second electrode assembly picked up in a paired manner is in the conforming condition, the second electrode assembly is in the non-conforming condition, and the second electrode assembly is not present in the second conforming products buffer zone, the first electrode assembly to the first conforming products buffer zone, and sorting the second electrode assembly in the non-conforming condition to the non-conforming products recovery zone; and
S224, sorting, when the first electrode assembly in the first electrode assembly and the second electrode assembly picked up in a paired manner is in the non-conforming condition, the second electrode assembly is in the conforming condition, and the first electrode assembly is not present in the first conforming products buffer zone, the first electrode assembly in the non-conforming condition to the non-conforming products recovery zone, and sorting the second electrode assembly to the second conforming products buffer zone.

According to some embodiments of the present application, optionally, the battery processing device is provided with a first conforming products buffer zone corresponding to the first electrode assembly and a second conforming products buffer zone corresponding to the second electrode assembly. Controlling the sorting mechanism to pair the first electrode assembly and the second electrode assembly that are in the conforming condition includes:
S225, sorting, when the first electrode assembly in the first electrode assembly and the second electrode assembly picked up in a paired manner is in the conforming condition, the second electrode assembly is in the non-conforming condition, and the second electrode assembly is present in the second conforming products buffer zone, the second electrode assembly in the non-conforming condition to the non-conforming products recovery zone, and moving the second electrode assembly in the second conforming products buffer zone back to the second pairing conveyor line; and
S226, sorting, when the first electrode assembly in the first electrode assembly and the second electrode assembly picked up in a paired manner is in the non-conforming condition, the second electrode assembly is in the conforming condition, and the first electrode assembly is present in the first conforming products buffer zone, the first electrode assembly in the non-conforming condition to the non-conforming products recovery zone, and moving the first electrode assembly in the first conforming products buffer zone back to the first pairing conveyor line.

According to some embodiments of the present application, optionally, controlling the welding assembly to weld the tab part of the paired first electrode assembly and the tab part of the paired second electrode assembly includes:
S310, controlling a jig adjustment mechanism to adjust a welding positioning jig to clamp and fix the paired first electrode assembly and second electrode assembly;
S320, controlling a welding conveyor line to convey the welding positioning jig into a welding mechanism; and
S330, controlling the welding mechanism to weld the tab part of the first electrode assembly and the tab part of the second electrode assembly that are clamped by the welding positioning jig.

The embodiments of the battery processing method of the present application may refer to the relevant contents of the above embodiments of the battery processing device, which will not be described herein again.

In summary, according to the embodiments of the present application, the first electrode assembly and the second electrode assembly can be paired, and the electrode main body of the first electrode assembly and the electrode main body of the second electrode assembly can be stacked on each other. In addition, the alignment of the first electrode assembly and the second electrode assembly can be achieved, and the stable connection between the first electrode assembly and the second electrode assembly can also be achieved.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery processing device, wherein the battery processing device comprises:
a material conveying assembly configured to convey a first electrode assembly and a second electrode assembly, wherein the first electrode assembly and the second electrode assembly each comprise an electrode main body and a tab part disposed on the electrode main body;
a pairing assembly configured to pair the first electrode assembly and the second electrode assembly such that the electrode main body of the first electrode assembly and the electrode main body of the second electrode assembly are stacked on each other; and
a welding assembly configured to weld the tab part of the paired first electrode assembly and the tab part of the paired second electrode assembly.

2. The battery processing device according to claim 1, wherein the material conveying assembly comprises a first branch conveyor line and a second branch conveyor line, the first branch conveyor line being configured to convey a plurality of said first electrode assemblies, and the second branch conveyor line being configured to convey a plurality of said second electrode assemblies.

3. The battery processing device according to claim 2, wherein the material conveying assembly further comprises a main conveyor line and a diversion mechanism, the main conveyor line being configured to convey the plurality of first electrode assemblies and the plurality of second electrode assemblies, and the diversion mechanism being configured to divert the first electrode assemblies from the main conveyor line to the first branch conveyor line and divert the second electrode assemblies from the main conveyor line to the second branch conveyor line.

4. The battery processing device according to claim 3, wherein the first branch conveyor line and the second branch conveyor line are connected to the main conveyor line and form a first connection point and a second connection point, the first connection point is located upstream of the second connection point, and the diversion mechanism comprises a diversion detection member, a flow guide member, and a flow guide drive member, wherein the diversion detection member is disposed on the main conveyor line and is located upstream of the first connection point, the diversion detection member is configured to detect whether an object flowing toward the first connection point is the first electrode assembly or the second electrode assembly, the flow guide member is disposed at the first connection point, and the flow guide drive member drives, in response to the object reaching the first connection point being the first electrode assembly, the flow guide member to a first position, such that the first electrode assembly flows toward the first branch conveyor line under the action of the flow guide member;
the flow guide drive member drives, in response to the object reaching the first connection point being the second electrode assembly, the flow guide member to a second position, such that the second electrode assembly continues to flow toward the second connection point along the main conveyor line.

5. The battery processing device according to claim 2, wherein the material conveying assembly comprises a first branch return line and a second branch return line, the first branch conveyor line is configured to convey a first tray and the first electrode assembly carried on the first tray, the second branch conveyor line is configured to convey a second tray and the second electrode assembly carried on the second tray, the first branch return line is configured to return the first tray, and the second branch return line is configured to return the second tray.

6. The battery processing device according to claim 5, wherein the first branch conveyor line and the second branch conveyor line are disposed side by side in a horizontal direction, the first branch return line is located below the first branch conveyor line in a vertical direction, and the second branch return line is located below the second branch conveyor line in the vertical direction.

7. The battery processing device according to claim 6, wherein the battery processing device comprises a transfer mechanism, the transfer mechanism being configured to transfer the first tray on the first branch conveyor line to the first branch return line, and/or transfer the second tray on the second branch conveyor line to the second branch return line.

8. The battery processing device according to claim 7, wherein the transfer mechanism comprises a transfer platform, a transfer conveyor belt, a belt drive member, and a platform drive member, the transfer conveyor belt being disposed on the transfer platform, the belt drive member driving the transfer conveyor belt to move so as to move the first tray and/or the second tray into or out of the transfer platform, and the platform drive member driving the transfer platform in the vertical direction, such that the transfer platform selectively aligns with the first branch conveyor line or the first branch return line, and/or the transfer platform selectively aligns with the second branch conveyor line or the second branch return line.

9. The battery processing device according to claim 5, wherein the material conveying assembly further comprises a main return line and a convergence mechanism, the convergence mechanism being configured to converge the first tray on the first branch return line and the second tray on the second branch return line to the main return line.

10. The battery processing device according to claim 1, wherein the battery processing device further comprises a detection assembly, the detection assembly being configured to detect the first electrode assembly and the second electrode assembly; the pairing assembly is configured to pair based on detection states of the first electrode assembly and the second electrode assembly.

11. The battery processing device according to claim 10, wherein the detection assembly comprises a first detection conveyor line, a second detection conveyor line, a first detection mechanism, a second detection mechanism, and a detection feeding mechanism, the detection feeding mechanism picking up the first electrode assembly and the second electrode assembly from the material conveying assembly and placing the first electrode assembly and the second electrode assembly on the first detection conveyor line and the second detection conveyor line, respectively, the first detection conveyor line conveying the first electrode assembly through the first detection mechanism, and the second detection conveyor line conveying the second electrode assembly through the second detection mechanism.

12. The battery processing device according to claim 11, wherein the material conveying assembly comprises a first branch conveyor line and a second branch conveyor line, the first branch conveyor line being configured to convey a plurality of said first electrode assemblies, and the second branch conveyor line being configured to convey a plurality of said second electrode assemblies, the detection feeding mechanism comprises a first detection feeding mechanism and a second detection feeding mechanism, the first detection feeding mechanism being configured to pick up the first electrode assembly from the first branch conveyor line and place the first electrode assembly on the first detection conveyor line, and the second detection feeding mechanism being configured to pick up the second electrode assembly from the second branch conveyor line and place the second electrode assembly on the second detection conveyor line, and the first detection feeding mechanism and the second detection feeding mechanism perform pickup and placement actions relatively independently.

13. The battery processing device according to claim 10, wherein the pairing assembly comprises a pairing feeding mechanism, a sorting mechanism, a stacking mechanism, and a first pairing conveyor line and a second pairing conveyor line disposed side by side, the pairing feeding mechanism being configured to pick up the first electrode assembly and the second electrode assembly in a paired manner and place the first electrode assembly and the second electrode assembly on the first pairing conveyor line and the second pairing conveyor line, respectively, the sorting mechanism being configured to pair the first electrode assembly and the second electrode assembly that are in a conforming condition, and the stacking mechanism being configured to stack the electrode main body of the paired first electrode assembly and the electrode main body of the paired second electrode assembly.

14. The battery processing device according to claim 13, wherein the pairing comprises: directly taking, when the first electrode assembly and the second electrode assembly picked up in a paired manner are both in the conforming condition, the first electrode assembly and the second electrode assembly picked up in a paired manner as the paired first electrode assembly and second electrode assembly.

15. The battery processing device according to claim 13, wherein the battery processing device is provided with a non-conforming products recovery zone, and the pairing comprises: sorting, when at least one of the first electrode assembly and the second electrode assembly picked up in a paired manner is in a non-conforming condition, the first electrode assembly and/or the second electrode assembly in the non-conforming condition to the non-conforming products recovery zone.

16. The battery processing device according to claim 15, wherein the battery processing device is provided with a first conforming productsbuffer zone corresponding to the first electrode assembly and a second conforming products buffer zone corresponding to the second electrode assembly;
the pairing comprises: sorting, when the first electrode assembly in the first electrode assembly and the second electrode assembly picked up in a paired manner is in the conforming condition, the second electrode assembly is in the non-conforming condition, and the second electrode assembly is not present in the second conforming products buffer zone, the first electrode assembly to the first conforming products buffer zone, and sorting the second electrode assembly in the non-conforming condition to the non-conforming products recovery zone; or
sorting, when the first electrode assembly in the first electrode assembly and the second electrode assembly picked up in a paired manner is in the non-conforming condition, the second electrode assembly is in the conforming condition, and the first electrode assembly is not present in the first conforming products buffer zone, the first electrode assembly in the non-conforming condition to the non-conforming products recovery zone, and sorting the second electrode assembly to the second conforming products buffer zone.

17. The battery processing device according to claim 15, wherein the battery processing device is provided with a first conforming products buffer zone corresponding to the first electrode assembly and a second conforming products buffer zone corresponding to the second electrode assembly;
the pairing comprises: sorting, when the first electrode assembly in the first electrode assembly and the second electrode assembly picked up in a paired manner is in the conforming condition, the second electrode assembly is in the non-conforming condition, and the second electrode assembly is present in the second conforming products buffer zone, the second electrode assembly in the non-conforming condition to the non-conforming products recovery zone, and moving the second electrode assembly in the second conforming products buffer zone back to the second pairing conveyor line; or
sorting, when the first electrode assembly in the first electrode assembly and the second electrode assembly picked up in a paired manner is in the non-conforming condition, the second electrode assembly is in the conforming condition, and the first electrode assembly is present in the first conforming products buffer zone, the first electrode assembly in the non-conforming condition to the non-conforming products recovery zone, and moving the first electrode assembly in the first conforming products buffer zone back to the first pairing conveyor line.

18. The battery processing device according to claim 15, wherein the first pairing conveyor line and the second pairing conveyor line extend in a first horizontal direction and are disposed side by side in a second horizontal direction perpendicular to the first horizontal direction, and the sorting mechanism comprises a first sorting pickup mechanism, a second sorting pickup mechanism, and a sorting drive mechanism, the sorting drive mechanism driving the first sorting pickup mechanism and the second sorting pickup mechanism in the second horizontal direction, and the first sorting pickup mechanism and the second sorting pickup mechanism being configured to pick up the first electrode assembly and the second electrode assembly from the first pairing conveyor line and the second pairing conveyor line, respectively.

19. The battery processing device according to claim 18, wherein the non-conforming products recovery zone comprises a first recovery zone on a side of the first pairing conveyor line distal to the second pairing conveyor line and a second recovery zone between the first pairing conveyor line and the second pairing conveyor line, the sorting drive mechanism is configured to drive the second sorting pickup mechanism to place the second electrode assembly in the non-conforming condition in the second recovery zone, and drive the first sorting pickup mechanism to place the first electrode assembly in the non-conforming condition in the first recovery zone, and the sorting drive mechanism is further configured to drive the first sorting pickup mechanism to pick up the second electrode assembly from the second recovery zone and place the second electrode assembly in the first recovery zone.

20. The battery processing device according to claim 19, wherein the first recovery zone comprises a recovery conveyor belt configured to convey the first electrode assembly and/or the second electrode assembly in the non-conforming condition.

21. The battery processing device according to claim 18, wherein the first sorting pickup mechanism and/or the second sorting pickup mechanism each comprise a first sorting drive member, a sorting support, a second sorting drive member, and two groups of sorting clamps, wherein each group of sorting clamps comprises a sorting clamping jaw and a third sorting drive member, the first sorting drive member is configured to drive the sorting support to move toward or away from the first pairing conveyor line or the second pairing conveyor line, the second sorting drive member and the two groups of sorting clamps are disposed on the sorting support, the second sorting drive member is configured to change a distance between the two groups of sorting clamps in a length direction or a width direction of the first electrode assembly or the second electrode assembly, and the third sorting drive member is configured to drive the sorting clamping jaw to clamp the first electrode assembly or the second electrode assembly in a thickness direction of the first electrode assembly or the second electrode assembly.

22. The battery processing device according to claim 13, wherein the tab part of the first electrode assembly is proximal to a surface of the electrode main body of the first electrode assembly on a side facing the first pairing conveyor line, and the tab part of the second electrode assembly is proximal to a surface of the electrode main body of the second electrode assembly on a side facing the second pairing conveyor line, the pairing assembly further comprises a flipping mechanism, the flipping mechanism being configured to flip a first one of the first electrode assembly and the second electrode assembly, and the stacking mechanism is configured to stack the electrode main body of a second one of the first electrode assembly and the second electrode assembly on the electrode main body of the first one of the first electrode assembly and the second electrode assembly; or
the tab part of the first electrode assembly is proximal to a surface of the electrode main body of the first electrode assembly on a side distal to the first pairing conveyor line, the tab part of the second electrode assembly is proximal to a surface of the electrode main body of the second electrode assembly on a side distal to the second pairing conveyor line, the pairing assembly further comprises a flipping mechanism, the flipping mechanism being configured to flip a first one of the first electrode assembly and the second electrode assembly, and the stacking mechanism is configured to stack the electrode main body of the flipped first one of the first electrode assembly and the second electrode assembly on the electrode main body of a second one of the first electrode assembly and the second electrode assembly.

23. The battery processing device according to claim 22, wherein the flipping mechanism comprises a first flipping drive member, a flipping support, a second flipping drive member, a third flipping drive member, and flipping clamps, wherein each of the flipping clamps comprises two flipping clamping jaws and a fourth flipping drive member, the first flipping drive member is configured to drive the flipping support to move toward or away from the first pairing conveyor line or the second pairing conveyor line, the second flipping drive member, the third flipping drive member, and the flipping clamp are disposed on the flipping support, the second flipping drive member is configured to change a distance between the two flipping clamping jaws in a length direction or a width direction of the first electrode assembly or the second electrode assembly, the fourth flipping drive member is configured to drive the flipping clamping jaws to clamp the first electrode assembly or the second electrode assembly in a thickness direction of the first electrode assembly or the second electrode assembly, and the third flipping drive member is configured to drive the flipping clamps to flip synchronously relative to the flipping support.

24. The battery processing device according to claim 23, wherein the flipping support comprises two cantilevers disposed side by side and spaced apart from each other and a connecting arm connected between the two cantilevers, the flipping clamps are rotatably supported at free ends of the two cantilevers, respectively, and the third flipping drive member comprises a rotary motor, a transmission shaft, and two synchronization belts, wherein the transmission shaft is rotatably supported on the connecting arm in a spacing direction between the two cantilevers, the rotary motor drives the transmission shaft to rotate, and two ends of the transmission shaft are respectively connected to the corresponding flipping clamps by the synchronization belts.

25. The battery processing device according to claim 13, wherein
the stacking mechanism comprises a first stacking drive member, a second stacking drive member, a stacking support, a third stacking drive member, and stacking clamps, wherein each of the stacking clamps comprises two stacking clamping jaws and a fourth stacking drive member, the first stacking drive member drives the stacking support in a spacing direction between the first pairing conveyor line and the second pairing conveyor line, the second stacking drive member is configured to drive the stacking support to move toward or away from the first pairing conveyor line or the second pairing conveyor line, the third stacking drive member and the stacking clamp are disposed on the stacking support, the third stacking drive member is configured to change a distance between the two stacking clamping jaws in a length direction or a width direction of the first electrode assembly or the second electrode assembly, and the fourth stacking drive member is configured to drive the stacking clamping jaws to clamp the first electrode assembly or the second electrode assembly in a thickness direction of the first electrode assembly or the second electrode assembly.

26. The battery processing device according to claim 1, wherein the welding assembly comprises a welding conveyor line, a welding positioning jig, and a welding mechanism, the welding positioning jig being configured to clamp and fix the paired first electrode assembly and second electrode assembly, the welding conveyor line conveying the welding positioning jig into the welding mechanism, and the welding mechanism welding the tab part of the first electrode assembly and the tab part of the second electrode assembly that are clamped by the welding positioning jig.

27. The battery processing device according to claim 26, wherein the tab part comprises a first tab part and a second tab part, the welding mechanism comprises a first welding mechanism and a second welding mechanism, the welding conveyor line conveys the welding positioning jig to sequentially pass through the first welding mechanism and the second welding mechanism, the first welding mechanism is configured to weld a first tab part of the first electrode assembly and a first tab part of the second electrode assembly, and the second welding mechanism is configured to weld a second tab part of the first electrode assembly and a second tab part of the second electrode assembly.

28. The battery processing device according to claim 1, wherein the battery processing device comprises a wrapping device for an electrode assembly, the electrode assembly comprises an electrode main body, the electrode main body being provided with a first direction, a second direction, and a third direction orthogonal to each other, and comprising two main surfaces disposed opposite to each other in the first direction, two end surfaces disposed opposite to each other in the second direction, and two side surfaces disposed opposite to each other in the third direction, and the wrapping device comprises:
a first positioning assembly configured to position the electrode assembly such that the two main surfaces are at least partially exposed; and
a first wrapping assembly configured to position a wrapping film, wherein the wrapping film comprises two main wrapping zones spaced apart from each other and a connection zone connected between the two main wrapping zones; wherein
at least one of the first positioning assembly and the first wrapping assembly is configured to drive the electrode assembly and the wrapping film to move relative to each other, such that the connection zone contacts and wraps a first one of the two end surfaces, and the two main wrapping zones contact and wrap exposed portions of corresponding ones of the two main surfaces, respectively.

29. The battery processing device according to claim 28, wherein the electrode assembly further comprises a tab part disposed on the first one of the two end surfaces in a protruding manner, the connection zone is provided with an opening, and the tab part is configured to pass through the opening as the electrode assembly and the wrapping film move relative to each other.

30. The battery processing device according to claim 28, wherein the wrapping film comprises a side wrapping zone connected to the main wrapping zone, and the wrapping device further comprises a second wrapping assembly, the second wrapping assembly being configured to drive the side wrapping zone to contact and wrap the side surface.

31. The battery processing device according to claim 30, wherein the wrapping film comprises an end wrapping zone connected to the main wrapping zone, and the second wrapping assembly is configured to drive the end wrapping zone to contact and wrap a second one of the two end surfaces.

32. The battery processing device according to claim 28, wherein the wrapping film further comprises a side wrapping zone and an end wrapping zone connected to the main wrapping zone, wherein the side wrapping zone wraps the side surface, and the end wrapping zone wraps a second one of the two end surfaces; the wrapping device further comprises a first tape attachment assembly, the first tape attachment assembly is configured to drive the electrode assembly and a first tape to move relative to each other, the first tape comprises a first portion and a second portion connected to each other, and the first tape attachment assembly is configured to attach, at a corner formed by the side surface and the second one of the two end surfaces, the first portion of the first tape to the side wrapping zone and the second portion of the first tape to the end wrapping zone.

33. The battery processing device according to claim 32, wherein the wrapping device further comprises a second tape attachment assembly, the second tape attachment assembly is configured to drive the electrode assembly and a second tape to move relative to each other, the second tape comprises first portions and a second portion connected to each other, and the second tape attachment assembly is configured to attach, at a corner formed by the side surface and the main surface, the first portions of the second tape to the main wrapping zone and the second portion of the second tape to the side wrapping zone.

34. The battery processing device according to claim 33, wherein a number of the first portions of the second tape is two, the two first portions are located at two ends of the second portion of the second tape, and the second tape attachment assembly is configured to respectively attach the two first portions of the second tape to corresponding ones of the two main wrapping zones.

35. A battery processing method, wherein the battery processing method comprises:
controlling a material conveying assembly to convey a first electrode assembly and a second electrode assembly, wherein the first electrode assembly and the second electrode assembly each comprise an electrode main body and a tab part disposed on the electrode main body;
controlling a pairing assembly to pair the first electrode assembly and the second electrode assembly such that the electrode main body of the first electrode assembly and the electrode main body of the second electrode assembly are stacked on each other; and
controlling a welding assembly to weld the tab part of the paired first electrode assembly and the tab part of the paired second electrode assembly.

36. The battery processing method according to claim 35, wherein controlling the pairing assembly to pair the first electrode assembly and the second electrode assembly comprises:
controlling a pairing feeding mechanism to pick up the first electrode assembly and the second electrode assembly in a paired manner and place the first electrode assembly and the second electrode assembly on a first detection conveyor line and a second detection conveyor line, respectively;
controlling a sorting mechanism to pair the first electrode assembly and the second electrode assembly that are in a conforming condition; and
controlling a stacking mechanism to stack the electrode main body of the paired first electrode assembly and the electrode main body of the paired second electrode assembly.

37. The battery processing method according to claim 36, wherein controlling the sorting mechanism to pair the first electrode assembly and the second electrode assembly that are in the conforming condition comprises:
taking, when the first electrode assembly and the second electrode assembly picked up in a paired manner are both in the conforming condition, the first electrode assembly and the second electrode assembly picked up in a paired manner as the paired first electrode assembly and second electrode assembly.

38. The battery processing method according to claim 37, wherein the battery processing device is provided with a non-conforming products recovery zone;
controlling the sorting mechanism to pair the first electrode assembly and the second electrode assembly that are in the conforming condition comprises:
sorting, when at least one of the first electrode assembly and the second electrode assembly picked up in a paired manner is in a non-conforming condition, the first electrode assembly and/or the second electrode assembly in the non-conforming condition to the non-conforming products recovery zone.

39. The battery processing method according to claim 38, wherein the battery processing device is provided with a first conforming products buffer zone corresponding to the first electrode assembly and a second conforming products buffer zone corresponding to the second electrode assembly;
controlling the sorting mechanism to pair the first electrode assembly and the second electrode assembly that are in the conforming condition comprises:
sorting, when the first electrode assembly in the first electrode assembly and the second electrode assembly picked up in a paired manner is in the conforming condition, the second electrode assembly is in the non-conforming condition, and the second electrode assembly is not present in the second conforming products buffer zone, the first electrode assembly to the first conforming products buffer zone, and sorting the second electrode assembly in the non-conforming condition to the non-conforming products recovery zone; or
sorting, when the first electrode assembly in the first electrode assembly and the second electrode assembly picked up in a paired manner is in the non-conforming condition, the second electrode assembly is in the conforming condition, and the first electrode assembly is not present in the first conforming products buffer zone, the first electrode assembly in the non-conforming condition to the non-conforming products recovery zone, and sorting the second electrode assembly to the second conforming products buffer zone.

40. The battery processing method according to claim 38, wherein the battery processing device is provided with a first conforming products buffer zone corresponding to the first electrode assembly and a second conforming products buffer zone corresponding to the second electrode assembly;
controlling the sorting mechanism to pair the first electrode assembly and the second electrode assembly that are in the conforming condition comprises:
sorting, when the first electrode assembly in the first electrode assembly and the second electrode assembly picked up in a paired manner is in the conforming condition, the second electrode assembly is in the non-conforming condition, and the second electrode assembly is present in the second conforming products buffer zone, the second electrode assembly in the non-conforming condition to the non-conforming products recovery zone, and moving the second electrode assembly in the second conforming products buffer zone back to the second pairing conveyor line; or
sorting, when the first electrode assembly in the first electrode assembly and the second electrode assembly picked up in a paired manner is in the non-conforming condition, the second electrode assembly is in the conforming condition, and the first electrode assembly is present in the first conforming products buffer zone, the first electrode assembly in the non-conforming condition to the non-conforming products recovery zone, and moving the first electrode assembly in the first conforming products buffer zone back to the first pairing conveyor line.

41. The battery processing method according to any one of claims 35 to 40, wherein controlling the welding assembly to weld the tab part of the paired first electrode assembly and the tab part of the paired second electrode assembly comprises:
controlling a jig adjustment mechanism to adjust a welding positioning jig to clamp and fix the paired first electrode assembly and second electrode assembly;
controlling a welding conveyor line to convey the welding positioning jig into a welding mechanism; and
controlling the welding mechanism to weld the tab part of the first electrode assembly and the tab part of the second electrode assembly that are clamped by the welding positioning jig.
